(19)

Europäisches Patentamt
European Patent Office
Office européen des brevets

(11) **EP 4 209 131 A1**

(12) **EUROPEAN PATENT APPLICATION**
published in accordance with Art. 153(4) EPC

(43) Date of publication:
**12.07.2023 Bulletin 2023/28**

(21) Application number: **21864383.1**

(22) Date of filing: **01.09.2021**

(51) International Patent Classification (IPC):
*A23L 2/60* (2006.01)    *A23L 2/00* (2006.01)
*A23L 2/02* (2006.01)    *A23L 2/385* (2006.01)
*A23L 2/42* (2006.01)    *A23L 2/52* (2006.01)
*A23L 2/54* (2006.01)    *A23L 27/00* (2016.01)
*A23L 27/21* (2016.01)    *A23L 27/30* (2016.01)

(52) Cooperative Patent Classification (CPC):
**A23L 2/00; A23L 2/02; A23L 2/385; A23L 2/42;**
**A23L 2/52; A23L 2/54; A23L 2/60; A23L 27/00;**
**A23L 27/21; A23L 27/30**

(86) International application number:
**PCT/JP2021/032208**

(87) International publication number:
**WO 2022/050326 (10.03.2022 Gazette 2022/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **02.09.2020  JP 2020147833**
**02.09.2020  JP 2020147848**
**05.11.2020  JP 2020185333**
**05.11.2020  JP 2020185335**

(71) Applicant: **Suntory Holdings Limited**
**Osaka 530-8203 (JP)**

(72) Inventors:
• **TERAMOTO, Yuki**
**Kawasaki-shi, Kanagawa 211-0067 (JP)**
• **OHKURI, Tadahiro**
**Kawasaki-shi, Kanagawa 211-0067 (JP)**
• **FUJIE, Akiko**
**Kawasaki-shi, Kanagawa 211-0067 (JP)**
• **UTSUMI, Yui**
**Kawasaki-shi, Kanagawa 211-0067 (JP)**
• **YOSHIDA, Junki**
**Kawasaki-shi, Kanagawa 211-0067 (JP)**

(74) Representative: **Mewburn Ellis LLP**
**Aurora Building**
**Counterslip**
**Bristol BS1 6BX (GB)**

(54) **FRUIT JUICE BEVERAGE WITH INTENSIFIED SWEET TASTE**

(57)    There is a need for the development of a novel method capable of enhancing the sweet taste of a beverage containing a sweetener. One embodiment of the present invention provides a fruit juice beverage that contains: (a) a high-intensity sweetener in an amount equivalent to a sweetness intensity of X1; and (b) an amino acid, a derivative thereof, or a salt thereof exhibiting taste perception below the taste perception threshold. A sweet taste of sweetness intensity X3 is produced as a result of containing components (a) and (b), and $0.1 < X1 < X3$ is satisfied.

EP 4 209 131 A1

**Description**

Technical Field

The present invention relates to a fruit juice beverage with an enhanced sweetness and a method for producing such a fruit juice beverage. The present invention also relates to a method for enhancing a degree of sweetness of a fruit juice beverage and a concentrate for providing a fruit juice beverage.

Background Art

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Tastes we usually sense are transmitted as taste information via the taste nerves to the brain, where the tastes are perceived. Known taste receptors of sweetness include T1R2 and T1R3. T1R2 and T1R3 are reported to form hetero-dimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but is often tasted as a mixed taste of various tastes, which are associated with one another.

Meanwhile, foods have been required to have lower calories in addition to a good taste in recent years. This relates to a fact that lifestyle-related diseases such as obesity and diabetes are regarded as a problem.

However, to produce lower-calorie foods, their sugar concentration has to be maintained low. This is an obstruction in the case of providing foods that exhibit low calories and a good taste.

As an example of a contrast effect, which is an interaction of tastes, there has been long known a phenomenon in which addition of salt to sweet red-bean soup enhances sweetness. There is an example that reports the interaction between saltiness and sweetness by focusing on this phenomenon, and it is concluded that the interaction between sweetness and saltiness requires sweetness that is strong to a certain degree (a 150 solution) and a salt concentration that is high to a certain degree (0.1 to 0.2%) (Non Patent Literature 4).

Further, studies have been also made on the increase of a sweetness by adding sodium in a low concentration to a natural sugar and a specific high-intensity sweetener (Patent Literature 1).

Citation List

Patent Literature

Patent Literature 1: International Publication No. WO2018/225817

Non Patent Literature

Non Patent Literature 1: Zhao G. Q., Zhang Y., Hoon M. A., Chandrashekar J., Erlenbach I., Ryba N. J. P., and Zuker1 C. S., Cell, 2003, Vol. 115, 255-266

Non Patent Literature 2: Li X, Staszewski L, Xu H, Durick K, Zoller M, Adler E., Proc Natl Acad Sci U S A. 2002,99(7), 4692-4696.

Non Patent Literature 3: Fernstrom J. D., Munger S. D., Sclafani A., de Araujo I. E., Roberts A., and Molinary S., J. Nutr. 2012. Vol. 142: 1134S-1141S

Non Patent Literature 4: Ayumi Uchida, Nao Takagi, Rieko Horikiri, Miho Matsue, Yumiko Uchiyama and Masashi Omori, Research Bulletin of Otsuma Women's University for Home Economics -No.49 (2013. 3)

Summary of Invention

Problem to be Solved by the Invention

Under the above circumstances, the development of a novel method capable of enhancing a sweetness of a beverage comprising a sweetener has been much awaited.

Means for Solving the Problems

The present inventors succeeded for the first time in enhancing a sweetness of a fruit juice beverage comprising a sweetener by containing a sweetener and an amino acid or a derivative or a salt thereof in a concentration so low as to not be detectable by the human, or by containing a sweetener, and sodium and an amino acid or a derivative or a salt thereof in a concentration so low as to not be detectable by the human.

That is, the present invention comprises inventions of the following embodiments.

[1] A fruit juice beverage comprising:

(a) a high-intensity sweetener in an amount corresponding to a sweetness intensity X1, and
(b) an amino acid or a derivative or a salt thereof in an amount less than a taste recognition threshold,
wherein the fruit juice beverage has a sweetness of a sweetness intensity X3 exhibited by the components (a) and (b) and $0.1 < X1 < X3$ is satisfied.

[2] A fruit juice beverage comprising:

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml,
wherein the fruit juice beverage has a sweetness of a sweetness intensity X2 exhibited by the components (a) to (c) and $0.1 < X1 < X2$ is satisfied.

[3] The fruit juice beverage according to [1] or [2], further comprising a low-intensity sweetener.
[4] The fruit juice beverage according to any of [1] to [3], wherein the amino acid comprises an amino acid selected from a basic amino acid, a neutral amino acid having an alkyl group, an OH group or an amide group on a side chain, and a combination thereof.
[5] The fruit juice beverage according to any of [1] to [4], wherein the amino acid is one or more selected from an amino acid having a molecular weight of 70 to 260.
[6] The fruit juice beverage according to any of [1] to [5], wherein the amino acid comprises an amino acid selected from glycine, alanine, valine, isoleucine, leucine, serine, threonine, glutamine, asparagine, arginine, lysine, histidine, and a combination thereof.
[7] The fruit juice beverage according to any of [1] to [6], wherein the fruit juice beverage has an energy of 50 Kcal/100 ml or less.
[8] The fruit juice beverage according to any of [3] to [7], wherein a sweetness intensity of the low-intensity sweetener is 0.1 to 5.9.
[9] The fruit juice beverage according to any of [1] to [8], wherein a fruit juice percentage of the fruit juice beverage is 1 to 100%, 4 to 95%, 5 to 80%, 5 to 50% or 5 to 30%.
[10] The fruit juice beverage according to any of [1] to [9], wherein a fruit juice contained in the fruit juice beverage is from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof.
[11] The fruit juice beverage according to any of [1] to [10], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[12] The fruit juice beverage according to any of [1] to [11], wherein the high-intensity sweetener comprises at least one selected from the group consisting of steviol glycoside, a luo han guo extract, mogrol glycoside, a Thaumatacoccus daniellii Benth plant-containing sweet component, a Pentadiplandra brazzeana plant-containing sweet component, an artificial sweetener, and a combination thereof.
[13] The fruit juice beverage according to any of [1] to [12], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

[14] The fruit juice beverage according to any of [3] to [13], wherein the fruit juice beverage comprises one or more amino acids selected from alanine, serine and glycine, and has an energy of 50 Kcal/100 ml or less, and a total sweetness intensity of the high-intensity sweetener and the low-intensity sweetener is 6 or more.

[15] The fruit juice beverage according to any of [1] to [14], wherein the fruit juice beverage is packed in a container.

[16] A method for producing the fruit juice beverage according to any of [1] and [3] to [15], comprising, to a raw material,

(a) adding a high-intensity sweetener in an amount corresponding to a sweetness intensity X1, and
(b) adding an amino acid or a derivative or a salt thereof in an amount less than a taste recognition threshold.

[17] A method for producing the fruit juice beverage according to any of [2] to [16], comprising, to a raw material,

(a) adding a high-intensity sweetener in an amount corresponding to a sweetness intensity X1,
(b) adding an amino acid or a derivative or a salt thereof in an amount less than a taste recognition threshold, and
(c) adding sodium so that a sodium content in the beverage is less than 50 mg/100 ml.

[18] A concentrate for providing the fruit juice beverage according to any of [1] and [3] to [15], comprising:

(a) a high-intensity sweetener in an amount corresponding to a sweetness intensity X1a, and
(b) an amino acid or a derivative or a salt thereof in an amount less than 10 fold of a taste recognition threshold.

[19] A concentrate for providing the fruit juice beverage according to any of [2] to [18], comprising:

(a) a high-intensity sweetener in an amount corresponding to a sweetness intensity X1a,
(b) an amino acid or a derivative or a salt thereof in an amount less than 10 fold of a taste recognition threshold, and
(c) sodium in an amount of less than 500 mg/100 ml.

[A1] (Corresponding to Japanese Patent Applications Nos. 2020-147848/2020-185335)
A fruit juice beverage comprising:

(a) a high-intensity sweetener in an amount corresponding to a sweetness intensity Xa, and
(b) an amino acid or a derivative or a salt thereof in an amount less than a taste recognition threshold,
wherein the fruit juice beverage has a sweetness of a sweetness intensity Xb exhibited by the components (a) and (b) and $0.1 < Xa < Xb$ is satisfied.

[A2] The fruit juice beverage according to [A1], further comprising a low-intensity sweetener.

[A3] The fruit juice beverage according to [A1] or [A2], wherein the amino acid comprises an amino acid selected from a basic amino acid, a neutral amino acid having an alkyl group, an OH group or an amide group on a side chain, and a combination thereof.

[A4] The fruit juice beverage according to any of [A1] to [A3], wherein the amino acid is one or more selected from an amino acid having a molecular weight of 70 to 260.

[A5] The fruit juice beverage according to any of [A1] to [A4], wherein the amino acid comprises an amino acid selected from glycine, alanine, valine, isoleucine, leucine, serine, threonine, glutamine, asparagine, arginine, lysine, histidine, and a combination thereof.

[A6] The fruit juice beverage according to any of [A1] to [A5], wherein the fruit juice beverage has an energy of 50 Kcal/100 ml or less.

[A7] The fruit juice beverage according to any of [A2] to [A6], wherein a sweetness intensity of the low-intensity sweetener is 0.1 to 5.9.

[A8] The fruit juice beverage according to any of [A1] to [A7], wherein a fruit juice percentage of the fruit juice beverage is 1 to 100%, 4 to 95%, 5 to 80%, 5 to 50% or 5 to 30%.

[A9] The fruit juice beverage according to any of [A1] to [A8], wherein a fruit juice contained in the fruit juice beverage is from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof.

[A10] The fruit juice beverage according to any of [A1] to [A9], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

[A11] The fruit juice beverage according to any of [A1] to [A10], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.

[A12] The fruit juice beverage according to any of [A1] to [A11], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

[A13] The fruit juice beverage according to any of [A2] to [A12], wherein the fruit juice beverage comprises one or more amino acids selected from alanine, serine and glycine, and has an energy of 50 Kcal/100 ml or less, and a total sweetness intensity of the high-intensity sweetener and the low-intensity sweetener is 6 or more.

[A14] The fruit juice beverage according to any of [A1] to [A13], wherein the fruit juice beverage is packed in a container.

[A15] A method for producing the fruit juice beverage according to any of [A1] to [A14], comprising, to a raw material,

(a) adding a high-intensity sweetener in an amount corresponding to a sweetness intensity Xa, and
(b) adding an amino acid or a derivative or a salt thereof in an amount less than a taste recognition threshold.

[A16] A concentrate for providing the fruit juice beverage according to any of [A1] to [A15], comprising:

(a) a high-intensity sweetener in an amount corresponding to a sweetness intensity Xaa, and
(b) an amino acid or a derivative or a salt thereof in an amount less than 10 fold of a taste recognition threshold.

[A17] A method for enhancing a sweetness intensity of a fruit juice beverage,
wherein the fruit juice beverage contains

(a) a high-intensity sweetener in an amount corresponding to a sweetness intensity Xa, and
(b) an amino acid or a derivative or a salt thereof in an amount less than a taste recognition threshold.

[A18] A fruit juice beverage comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,
wherein the fruit juice beverage has a sweetness of a sweetness intensity Xd exhibited by the components (a) to (c) and $0.1 < Xa + Xc < Xd$ is satisfied.

[A19] The fruit juice beverage according to [A18], wherein the amino acid comprises an amino acid selected from a basic amino acid, a neutral amino acid having an alkyl group, an OH group or an amide group on a side chain, and a combination thereof.

[A20] The fruit juice beverage according to [A18] or [A19], wherein the amino acid is one or more selected from an amino acid having a molecular weight of 70 to 260.

[A21] The fruit juice beverage according to any of [A18] to [A20], wherein the amino acid comprises an amino acid selected from glycine, alanine, valine, isoleucine, leucine, serine, threonine, glutamine, asparagine, arginine, lysine, histidine, and a combination thereof.

[A22] The fruit juice beverage according to any of [A18] to [A21], wherein the fruit juice beverage has an energy of 50 Kcal/100 ml or less.

[A23] The fruit juice beverage according to any of [A18] to [A22], wherein Xc is 0.1 to 5.9.

[A24] The fruit juice beverage according to any of [A18] to [A23], wherein a fruit juice percentage of the fruit juice beverage is 1 to 100%, 4 to 95%, 5 to 80%, 5 to 50% or 5 to 30%.

[A25] The fruit juice beverage according to any of [A18] to [A24], wherein a fruit juice contained in the fruit juice beverage is from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof.

[A26] The fruit juice beverage according to any of [A18] to [A25], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

[A27] The fruit juice beverage according to any of [A18] to [A26], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.

[A28] The fruit juice beverage according to any of [A18] to [A27], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

[A29] The fruit juice beverage according to any of [A18] to [A28], wherein the fruit juice beverage comprises one or more amino acids selected from alanine, serine and glycine, and has an energy of 50 Kcal/100 ml or less, and $Xa + Xc$ is 6 or more.

[A30] The fruit juice beverage according to any of [A18] to [A29], wherein the fruit juice beverage is packed in a container.

[A31] A method for producing the fruit juice beverage according to any of [A18] to [A30], comprising, to a raw material,

(a) adding a high-intensity sweetener in an amount corresponding to a sweetness intensity $Xa$, and
(b) adding an amino acid or a derivative or a salt thereof in an amount less than a taste recognition threshold.

[A32] A concentrate for providing the fruit juice beverage according to any of [A18] to [A31], comprising:

(a) a high-intensity sweetener in an amount corresponding to a sweetness intensity $Xaa$, and
(b) an amino acid or a derivative or a salt thereof in an amount less than 10 fold of a taste recognition threshold.

[B1] (Corresponding to Japanese Patent Applications Nos. 2020-147833/2020-185333)
A fruit juice beverage comprising:

(a) a high-intensity sweetener in an amount corresponding to a sweetness intensity $X1$,
(b) an amino acid or a derivative or a salt thereof in an amount less than a taste recognition threshold, and
(c) sodium in an amount of less than 50 mg/100 ml,
wherein the fruit juice beverage has a sweetness of a sweetness intensity $X2$ exhibited by the components (a) to (c) and $0.1 < X1 < X2$ is satisfied.

[B2] The fruit juice beverage according to [B1], wherein the fruit juice beverage has a sweetness of a sweetness intensity $X3$ exhibited by the components (a) and (b) and $0.1 < X1 < X3 < X2$ is satisfied.

[B3] The fruit juice beverage according to [B1] or [B2], further comprising a low-intensity sweetener.

[B4] The fruit juice beverage according to any of [B1] to [B3], wherein the amino acid comprises an amino acid selected from a basic amino acid, a neutral amino acid having an alkyl group, an OH group or an amide group on a side chain, and a combination thereof.

[B5] The fruit juice beverage according to any of [B1] to [B4], wherein the amino acid is one or more selected from an amino acid having a molecular weight of 70 to 260.

[B6] The fruit juice beverage according to any of [B1] to [B5], wherein the amino acid comprises an amino acid selected from glycine, alanine, valine, isoleucine, leucine, serine, threonine, glutamine, asparagine, arginine, lysine, histidine, and a combination thereof.

[B7] The fruit juice beverage according to any of [B1] to [B6], wherein a content of sodium is 1 to 25 mg/100 ml.

[B8] The fruit juice beverage according to any of [B1] to [B7], wherein the fruit juice beverage has an energy of 50 Kcal/100 ml or less.

[B9] The fruit juice beverage according to any of [B3] to [B8], wherein a sweetness intensity of the low-intensity sweetener is 0.1 to 5.9.

[B10] The fruit juice beverage according to any of [B1] to [B9], wherein a fruit juice percentage of the fruit juice beverage is 1 to 100%, 4 to 95%, 5 to 80%, 5 to 50% or 5 to 30%.

[B11] The fruit juice beverage according to any of [B1] to [B10], wherein a fruit juice contained in the fruit juice beverage is from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof.

[B12] The fruit juice beverage according to any of [B1] to [B11], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

[B13] The fruit juice beverage according to any of [B1] to [B12], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.

[B14] The fruit juice beverage according to any of [B1] to [B13], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

[B15] The fruit juice beverage according to any of [B1] to [B14], wherein the sodium is contained in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, sodium glutamate, sodium tartrate, sodium aspartate, sodium lactate, casein sodium, sodium ascorbate and a mixture thereof.

[B16] The fruit juice beverage according to any of [B3] to [B15], wherein the fruit juice beverage comprises one or more amino acids selected from alanine, serine and glycine, and sodium in an amount of 1 to 25 mg/100 ml, and has an energy of 50 Kcal/100 ml or less, and a total sweetness intensity of the high-intensity sweetener and the low-intensity sweetener is 6 or more.

[B17] The fruit juice beverage according to any of [B1] to [B16], wherein the fruit juice beverage is packed in a container.

[B18] A method for producing the fruit juice beverage according to any of [B1] to [B17], comprising, to a raw material,

    (a) adding a high-intensity sweetener in an amount corresponding to a sweetness intensity X1,
    (b) adding an amino acid or a derivative or a salt thereof in an amount less than a taste recognition threshold, and
    (c) adding sodium so that a sodium content in the beverage is less than 50 mg/100 ml.

[B19] A concentrate for providing the fruit juice beverage according to any of [B1] to [B18], comprising:

    (a) a high-intensity sweetener in an amount corresponding to a sweetness intensity X1a,
    (b) an amino acid or a derivative or a salt thereof in an amount less than 10 fold of a taste recognition threshold, and
    (c) sodium in an amount of less than 500 mg/100 ml.

[B20] A method for enhancing a sweetness intensity of a fruit juice beverage,
wherein the fruit juice beverage contains

    (a) a high-intensity sweetener in an amount corresponding to a sweetness intensity X1,
    (b) an amino acid or a derivative or a salt thereof in an amount less than a taste recognition threshold, and
    (c) sodium in an amount of less than 50 mg/100 ml.

[B21] A fruit juice beverage comprising:

    (a) a high-intensity sweetener in an amount corresponding to a sweetness intensity X1,
    (b) an amino acid or a derivative or a salt thereof in an amount less than a taste recognition threshold,
    (c) sodium in an amount of less than 50 mg/100 ml, and
    (d) a low-intensity sweetener in an amount corresponding to a sweetness intensity X4,
    wherein the fruit juice beverage has a sweetness of a sweetness intensity X5 exhibited by the components (a) to (d) and $0.1 < X1 + X4 < X5$ is satisfied.

[B22] The fruit juice beverage according to [B21], wherein the amino acid comprises an amino acid selected from a basic amino acid, a neutral amino acid having an alkyl group, an OH group or an amide group on a side chain, and a combination thereof.

[B23] The fruit juice beverage according to [B21] or [B22], wherein the amino acid is one or more selected from an amino acid having a molecular weight of 70 to 260.

[B24] The fruit juice beverage according to any of [B21] to [B23], wherein the amino acid comprises an amino acid selected from glycine, alanine, valine, isoleucine, leucine, serine, threonine, glutamine, asparagine, arginine, lysine, histidine, and a combination thereof.

[B25] The fruit juice beverage according to any of [B21] to [B24], wherein a content of sodium is 1 to 25 mg/100 ml.

[B26] The fruit juice beverage according to any of [B21] to [B25], wherein the fruit juice beverage has an energy of 50 Kcal/100 ml or less.

[B27] The fruit juice beverage according to any of [B21] to [B26], wherein X4 is 0.1 to 5.9.

[B28] The fruit juice beverage according to any of [B21] to [B27], wherein a fruit juice percentage of the fruit juice beverage is 1 to 100%, 4 to 95%, 5 to 80%, 5 to 50% or 5 to 30%.

[B29] The fruit juice beverage according to any of [B21] to [B28], wherein a fruit juice contained in the fruit juice beverage is from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof.

[B30] The fruit juice beverage according to any of [B21] to [B29], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

[B31] The fruit juice beverage according to any of [B21] to [B30], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.

[B32] The fruit juice beverage according to any of [B21] to [B31], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

[B33] The fruit juice beverage according to any of [B21] to [B32], wherein the sodium is contained in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, sodium glutamate, sodium tartrate, sodium aspartate, sodium lactate, casein sodium, sodium ascorbate and a mixture thereof.

[B34] The fruit juice beverage according to any of [B21] to [B33], wherein the fruit juice beverage comprises one or more amino acids selected from alanine, serine and glycine, and sodium in an amount of 1 to 25 mg/100 ml, and has an energy of 50 Kcal/100 ml or less, and X1 + X4 is 6 or more.

[B35] The fruit juice beverage according to any of [B21] to [B34], wherein the fruit juice beverage is packed in a container.

[B36] A method for producing the fruit juice beverage according to any of [B21] to [B35], comprising, to a raw material,

(a) adding a high-intensity sweetener in an amount corresponding to a sweetness intensity X1,
(b) adding an amino acid or a derivative or a salt thereof in an amount less than a taste recognition threshold, and
(c) adding sodium so that a sodium content in the beverage is less than 50 mg/100 ml.

[B37] A concentrate for providing the fruit juice beverage according to any of [B21] to [B36], comprising:

(a) a high-intensity sweetener in an amount corresponding to a sweetness intensity X1a,
(b) an amino acid or a derivative or a salt thereof in an amount less than 10 fold of a taste recognition threshold, and
(c) sodium in an amount of less than 500 mg/100 ml.

Advantageous Effects of Invention

According to the method of the present invention, a method for enhancing, not a plain sweetness obtained by an additional amount of a sugar or a high-intensity sweetener used, but a sweetness of a fruit juice beverage, and exhibiting a good taste is provided. The method of the present invention provides a fruit juice beverage having a good taste with an enhanced sweetness, by a measure other than control of amounts of a sugar and a sweetener used.

Brief Description of Drawings

Figure 1 is a graph showing sensory evaluation results of Example A2 to Example A7 with respect to Example A1 in Example 1.
Figure 2 is a graph showing sensory evaluation results of Example B2 to Example B7 with respect to Example B1 in Example 1.
Figure 3 is a graph showing sensory evaluation results of Example C2 to Example C7 with respect to Example C1 in Example 2.
Figure 4 is a graph showing sensory evaluation results of Example D2 to Example D7 with respect to Example D1 in Example 2.
Figure 5 is a graph showing sensory evaluation results of Example G2 and Example G3 with respect to Example G1 in Example 4.
Figure 6 is a graph showing sensory evaluation results of Example H2 and Example H3 with respect to Example H1 in Example 4.
Figure 7 is a graph showing sensory evaluation results of Example I2 and Example I3 with respect to Example I1 in Example 4.
Figure 8 is a graph showing sensory evaluation results of Example J2 and Example J3 with respect to Example J1 in Example 4.
Figure 9 is a graph showing sensory evaluation results of Example K2 and Example K3 with respect to Example K1 in Example 4.
Figure 10 is a graph showing sensory evaluation results of Example L2 and Example L3 with respect to Example L1 in Example 4.
Figure 11 is a graph showing sensory evaluation results of Example M2 and Example M3 with respect to Example M1 in Example 5.
Figure 12 is a graph showing sensory evaluation results of Example N2 and Example N3 with respect to Example N1 in Example 6.
Figure 13 is a graph showing sensory evaluation results of Example O2 and Example O3 with respect to Example O1 in Example 6.

Description of Embodiments

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literatures, laid-open publications, patent publications, and other patent literatures cited herein are deemed to be incorporated by reference into the present description. The present specification incorporates the contents of the specifications and the drawings of Japanese Patent Application No. 2020-147833 and Japanese Patent Application No. 2020-147848, filed on September 2, 2020, from which the present application claims priority, and Japanese Patent Application No. 2020-185333 and Japanese Patent Application No. 2020-185335, filed on November 5, 2020, from which the present application claims priority.

As used herein, for example, the designation "content of a component A is X mg/100 ml" means that "X mg of a component A is contained in 100 ml of a beverage". A specific gravity of a beverage is approximately 1, and thus "mg/100 g" in a beverage is considered to be the same as "mg/100 ml". For example, the designation "content of a component B is Y ppm" means that "Y ppm of a component B is contained with respect to the total amount (100 mass%) of a beverage".

1. Fruit juice beverage with an enhanced sweetness

<<First and A1-th embodiments>>

The present invention provides the following fruit juice beverage (hereinafter, referred to as "the fruit juice beverage of the present invention") as the first embodiment.

A fruit juice beverage comprising:

(a) a high-intensity sweetener in an amount corresponding to a sweetness intensity X1, and
(b) an amino acid or a derivative or a salt thereof in an amount less than a taste recognition threshold,

wherein the fruit juice beverage has a sweetness of a sweetness intensity X3 exhibited by the components (a) and (b) and 0.1 < X1 < X3 is satisfied. In the present embodiment, X1 and X3 respectively correspond to Xa and Xb in the A1-th embodiment (corresponding to Japanese Patent Applications Nos. 2020-147848/2020-185335).

The present invention provides the following fruit juice beverage (hereinafter, also referred to as "fruit juice beverage A of the present invention") as the A1-th embodiment.
A fruit juice beverage comprising:

(a) a high-intensity sweetener in an amount corresponding to a sweetness intensity Xa, and
(b) an amino acid or a derivative or a salt thereof in an amount less than a taste recognition threshold,
wherein the fruit juice beverage has a sweetness of a sweetness intensity Xb exhibited by the components (a) and (b) and 0.1 < Xa < Xb is satisfied.

In other words, in the fruit juice beverage of the present invention, the component having a sweetness is (a) a high-intensity sweetener in an amount corresponding to a sweetness intensity Xa, and the sweetness of the fruit juice beverage of the present invention is supposed to be a sweetness intensity Xa when calculated. However, the presence of (b) an amino acid or a derivative or a salt thereof in an amount less than a taste recognition threshold in the fruit juice beverage even in a low concentration enhances the sweetness of (a) a high-intensity sweetener in an amount corresponding to a sweetness intensity Xa to a sweetness intensity Xb (0.1 < Xa < Xb is satisfied herein). The present invention means to possibly include additional components such as a sweetener other than the component (a), an acidulant, a flavor, vitamin, a dye, an antioxidant, an emulsifier, a preservative, a seasoning agent, extracts, a pH adjuster, and a quality stabilizer, in addition to these components (a) and (b). For example, fruit-derived fructose is contained as a sweetener other than the component (a), depending on a type of a fruit juice. The fruit juice beverage in an embodiment of the present invention does not contain any substance having a sweetness, as a sweetener, other than the component (a) and fruit-derived fructose.
The fruit juice beverage in a preferable embodiment of the present invention further exerts the effect of improving a taste, other than enhancing a sweetness. For example, in the fruit juice beverage in an embodiment of the present invention, at least one of "total sweetness", "reduced lingering sweetness", "body, thickness", "flavor intensity", "reduced unpleasant tastes (bitterness, astringency, and the like)" and "saltiness" is preferably improved. In a preferable embodiment of the present invention, "body, thickness" and "flavor intensity" are improved by alanine, glycine or serine.

(Fruit juice)

The "fruit juice beverage" of the present invention means a beverage containing a fruit juice as a squeezed liquid of fruit.
Specific examples of the "fruit juice beverage" include "fruit beverages" defined in "the Fair Competition Codes concerning labelling of fruit beverages" implemented in 2018, and "fruit juices", "fruit-mixed juices", "fruit grain-containing fruit juices", "fruit-vegetable-mixed juices", "fruit juice-containing beverages" and "fruit juice-containing jelly beverages" defined in "Ordinance for Enforcement of the Fair Competition Codes concerning labelling of fruit beverages" implemented in 2016.
A beverage in which a proportion of use of a fruit juice is less than 10%, classified into "other beverages" in the Codes, is also encompassed in the "fruit juice beverage" of the present invention as long as it is a beverage containing a fruit juice. The fruit juice beverage of the present invention is also referred to as "fruit juice-containing beverage".
A fruit juice contained in the fruit juice beverage of the present invention is not particularly limited, and is, for example, from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, and quince.
A straight fruit juice, a concentrated fruit juice, or the like can be used for the fruit juice contained in the fruit juice beverage of the present invention, regardless of a production method.
The concentrated fruit juice may be prepared by any of a heating concentration method and a cooling concentration method.
A fruit juice percentage of the fruit juice beverage of the present invention can be, depending on an embodiment, 1 to 100%, 5 to 100%, 10 to 100%, 15 to 100%, 20 to 100%, 25 to 100%, 30 to 100%, 35 to 100%, 40 to 100%, 45 to 100%, 50 to 100%, 55 to 100%, 60 to 100%, 65 to 100%, 70 to 100%, 1 to 95%, 4 to 95%, 5 to 95%, 10 to 95%, 15 to 95%, 20 to 95%, 25 to 95%, 30 to 95%, 35 to 95%, 40 to 95%, 45 to 95%, 50 to 95%, 55 to 95%, 60 to 95%, 65 to 95%, 70 to 95%, 1 to 90%, 5 to 90%, 10 to 90%, 15 to 90%, 20 to 90%, 25 to 90%, 30 to 90%, 35 to 90%, 40 to 90%, 45 to 90%, 50 to 90%, 55 to 90%, 60 to 90%, 65 to 90%, 70 to 90%, 1 to 85%, 5 to 85%, 10 to 85%, 15 to 85%, 20 to 85%, 25 to 85%, 30 to 85%, 35 to 85%, 40 to 85%, 45 to 85%, 50 to 85%, 55 to 85%, 60 to 85%, 65 to 85%, 70 to 85%, 1 to 80%, 5 to 80%, 10 to 80%, 15 to 80%, 20 to 80%, 25 to 80%, 30 to 80%, 35 to 80%, 40 to 80%, 45 to 80%, 50 to 80%, 55 to 80%, 60 to 80%, 65 to 80%, 70 to 80%, 1 to 75%, 5 to 75%, 10 to 75%, 15 to 75%, 20 to 75%, 25 to 75%, 30 to 75%, 35 to 75%, 40 to 75%, 45 to 75%, 50 to 75%, 55 to 75%, 60 to 75%, 65 to 75%, 1 to 70%, 5 to 70%, 10 to 70%, 15 to 70%, 20 to 70%, 25 to 70%, 30 to 70%, 35 to 70%, 40 to 70%, 45 to 70%, 50 to 70%, 55 to 70%, 60 to 70%, 1 to 65%, 5 to 65%, 10 to 65%, 15 to 65%, 20 to 65%, 25 to 65%, 30 to 65%, 35 to 65%, 40 to 65%, 45 to 65%, 50 to 65%, 55 to 65%, 1 to 60%, 5 to 60%, 10 to 60%, 15 to 60%, 20 to 60%, 25 to 60%, 30 to 60%, 35 to 60%, 40 to 60%, 45 to 60%, 50 to 60%, 1 to 55%, 5 to 55%, 10 to 55%, 15 to 55%, 20 to 55%, 25 to 55%, 30 to 55%, 35 to 55%, 40 to 55%, 45 to 55%, 1 to 50%, 5 to 50%, 10 to 50%, 15 to 50%, 20 to 50%, 25 to 50%, 30 to 50%, 35 to 50%, 40 to 50%, 1 to 45%, 5 to 45%, 10 to 45%, 15 to 45%, 20 to 45%, 25 to 45%, 30 to 45%, 35 to 45%, 1 to 40%, 5 to 40%, 10 to 40%, 15 to 40%, 20 to 40%, 25 to 40%, 30 to 40%, 1 to 35%, 5 to 35%, 10 to 35%, 15 to 35%, 20 to 35%, 25 to 35%, 1 to 30%, 5 to 30%, 10 to 30%, 15 to 30%, 20 to 30%, 1 to 25%, 5 to 25%, 10 to 25%, 15 to 25%, 1 to 20%, 5 to 20%, 10 to 20%, 1 to 15% or 5 to 15%. In an embodiment of the present invention, a fruit juice percentage of the fruit juice beverage may be 1 to 100%, 4 to 95%, 5 to 80%, 5 to 50% or 5 to 30%.

As used herein, the "fruit juice percentage" is a relative concentration based on a straight fruit juice obtained by squeezing a fruit of 100%, and can be obtained by conversion based on the standard (°Bx) of the sugar refractometer index or the standard (%) of the degree of acid shown in JAS standards (Japan Agricultural Standards of fruit beverages).

The values of the standards (unit: °Bx) of sugar refractometer indexes of representative fruits are as follows: orange: 11, tangerine: 9, grapefruit: 9, pineapple: 11, cranberry: 7, blueberry, guava: 8, banana: 23, papaya: 9, passion fruit: 14, mango: 13, apple: 10, grape: 11, peach: 8, Japanese pear: 8, pear: 11, apricot: 7, plum: 6, melon, kiwifruit: 10.

The standards (unit: %) of the degrees of acid of representative fruits are as follows: lemon: 4.5, lime: 6, ume: 3.5, Citrus sphaerocarpa: 3.5.

Specifically, the fruit juice percentage can be calculated from a content (g) of the fruit juice contained in 100 mL of the fruit juice beverage and a concentration rate of the fruit juice, calculated from the standard (°Bx) of the sugar refractometer index or the standard (%) of the degree of acid, according to the following conversion expression.

$$\text{[Fruit juice percentage (\%)]} = \text{[Content (g) of fruit juice]} \times \text{[Concentration rate]}/100 \text{ mL} \times 100$$

For example, an orange fruit juice has a Bx11° according to the JAS standards, and thus when 6.0 wt% of an orange fruit juice having a Bx55° is contained in a beverage, a fruit juice percentage of 30% is obtained. When a fruit juice percentage of a fruit juice is converted based on a sugar refractometer index according to the JAS standards, sugar refractometer indexes of sugars, honeys, and the like added to the fruit juice are here excluded.

The fruit juice beverage of the present invention may be an alcoholic beverage. The alcoholic beverages refer to beverages containing an alcohol raw material. The alcoholic beverage may be a chuhai beverage or a highball beverage. Examples of the alcohol raw material include brewed liquors, distilled liquors, and mixed liquors. Examples of the brewed liquor include wines and beers. Example of the distilled liquor include spirits (for example, gins, vodkas, rums, tequilas and new spirits, and material alcohols), liquors, whiskies (for example, whiskies and brandies), and *shochus.* The alcohol raw material can be obtained by fermentation of the fruit juice contained in the fruit juice beverage of the present invention. The alcoholic beverages herein may be any beverages containing detectable alcohol and, for examples, contain alcohol of 1 vol% or more, 2 vol% or more, 3 vol% or more, 4 vol% or more, and 5 vol% or more.

The form of the fruit juice beverage of the present invention is not limited, and may be, for example, a beverage form where a concentrated fruit juice extract is dissolved, or a fruit juice beverage form packed in a container, which is incorporated and packed in a container such as a can or a PET bottle.

[Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 x 1.5 = 0.975.

Table 1

| Sugar (D-configuration) | Degree of sweetness |
|---|---|
| Sucrose | 1 |

(continued)

| Sugar (D-configuration) | Degree of sweetness |
|---|---|
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| High-fructose corn syrup | 0.8 to 0.9 |
| Lactose | 0.2 to 0.3 |
| Psicose | 0.7 |
| Allose | 0.8 |
| Tagatose | 0.9 |

The fruit juice beverage of the present invention contains, as described above, a high-intensity sweetener in an amount corresponding to a sweetness intensity Xa and has a sweetness having a sweetness intensity Xb exhibited by the components (a) and (b) and 0.1 < Xa < Xb is satisfied.

The Xa in the "sweetness intensity Xa" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0. 1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

The Xa may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4. 0 to 15.0, 4.0 to 16.0, 4.0 to 17.0, or 4.0 to 18.0.

In an embodiment of the present invention, the Xa is preferably 0.5 to 10.0, more preferably 1.5 to 9.0, and still more preferably 2.0 to 8.0. Further, in another embodiment of the present invention, the Xa is preferably 0.5 to 5.5, more preferably 1.0 to 5.5, and still more preferably 2.0 to 5.0.

The amount corresponding to a sweetness intensity Xa of a high-intensity sweetener refers to an amount which provides a sweetness of a sweetness intensity Xa under the conditions when the high-intensity sweetener is dissolved in water having the same volume as the fruit juice beverage of the present invention at 20°C.

Further, the amount of a high-intensity sweetener may be Pa ppm and Pa ppm herein refers to an amount corresponding to a sweetness intensity Xa. The Pa herein can be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The Pa can also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The Pa can also be a value of about 20 to about 200, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, or about 200 to about 250.

The Xb is not particularly limited as long as it is greater than the Xa and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The Xb may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9. 0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

The fruit juice beverage of the present invention has an enhanced sweetness as having been already mentioned. Whether or not the sweetness of the fruit juice beverage of the present invention is enhanced can be evaluated by panelists who received sensory trainings. Further, for the sweetness intensity of the fruit juice beverage of the present invention, standard fruit juice beverages to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the fruit juice beverage of the present invention with the sweetnesses of these standard fruit juice beverages thereby to measure the sweetness of the fruit juice beverage of the present invention. Note that the standard fruit juice beverages having a sweetness intensity of 1, 2, ... 15 are prepared by adding sucrose in such a way that a sucrose content is 1 g/100 g, 2 g/100 g, ... 15 g/100 g to the fruit juice beverage to which sucrose is not added.

Furthermore, of the standard fruit juice beverages having a lower sweetness than the fruit juice beverage of the present invention in the above measurement, the standard fruit juice beverage having the closest sweetness to that of the fruit juice beverage of the present invention is selected and adjusted in such a way as to have the same sweetness as that of the fruit juice beverage of the present invention by adding sucrose to the selected standard fruit juice beverage, during which a sweetness intensity of the fruit juice beverage of the present invention can also be measured from a sucrose content in the adjusted standard fruit juice beverage.

Other examples of the method for measuring a sweetness of the fruit juice beverage of the present invention include a sweetness intensity rating using Visual Analogue Scale (VAS method). For the VAS method, literatures in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of the fruit juice beverage of the present invention is not particularly limited as long as it is acceptable as a fruit juice beverage and may be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The sweetness intensity of the fruit juice beverage is provided by the above components (a) and (b) and optional components.

An energy (total energy) of the fruit juice beverage of the present invention can be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

Further, an energy (total energy, TE) of the fruit juice beverage of the present invention can be, depending on an embodiment (for example, an embodiment containing a caloric sweetener), $0 < TE \leq 50$ Kcal/100 ml, $0 < TE \leq 45$ Kcal/100 ml, $0 < TE \leq 40$ Kcal/100 ml, $0 < TE \leq 35$ Kcal/100 ml, $0 < TE \leq 30$ Kcal/100 ml, $0 < TE \leq 24$ Kcal/100 ml, $0 < TE \leq 22$ Kcal/100 ml, $0 < TE \leq 20$ Kcal/100 ml, $0 < TE \leq 15$ Kcal/100 ml, $0 < TE \leq 10$ Kcal/100 ml, $0 < TE \leq 5$ Kcal/100 ml (that is, it never is completely 0).

The components (a) and (b) can be in any combinations. As shown in examples to be described later, the addition of the component (b) to the component (a) enables to provide a sweetness intensity Xb, which is higher than the sweetness intensity Xa of the component (a) alone. That is, the sweetness of the component (a) can be enhanced by the components (b). For this reason, fruit juice beverages can be produced without using or with a reduced amount of highly caloric sucrose while maintaining the sweetness equal to a fruit juice beverage containing sucrose. Thus, the design of new low-calorie fruit juice beverages is enabled. In the case of designing a zero-calorie fruit juice beverage, a high-intensity sweetener having particularly good-taste quality such as rebaudioside D (hereinafter, rebaudioside may be sometimes abbreviated as "Reb") and rebaudioside M is used for the component (a) and D-allulose or erythritol is used as an additional sweet substance to thereby improve a sweetness with amino acids in a low concentration. In the case of adjusting a food to be not zero calorie but low calorie, a caloric sweetener such as sucrose, glucose, fructose, or sorbitol can be contained as an additional sweet substance.

[High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1,000 times or more, 5,000 times or more, 10,000 times or more, 50,000 times or more or 100,000 times or more, of that of sucrose.

Specific examples of the high-intensity sweetener include peptide-based sweeteners such as aspartame, neotame, and advantame; sucrose derivatives such as sucralose; synthetic sweeteners (including those naturally occurring but also those whose synthetic products are mostly distributed such as neohesperidin dihydrochalcone) such as acesulfame K, saccharine, saccharin sodium, sodium cyclamate, dulcin, disodium glycyrrhizin, trisodium glycyrrhizin, and neohesperidin dihydrochalcone; sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin; and plant extracts containing a high-intensity sweetener component, for example, Stevia rebaudiana extract, Siraitia grosvenorii (Luo han guo) extract, Glycyrrhiza (licorice) glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract; sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviol monoside, steviol bioside and stevioside. Examples of the mogroside include mogroside IV, mogroside V.

The Glycyrrhiza (licorice) extract refers to those obtained from roots or rhizomes of Glycyrrhiza uralensis Fisher, Glycyrrhiza inflata Batalin, or Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose) and oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with rebaudioside A (RebA), (1) less astringent taste, (2) less metallic taste, (3) less lingering sweetness, and (4) less bitterness. Whether a certain sweet substance has the above taste quality is already known or can be determined based on a sensory evaluation. Nonrestrictive examples of the high-intensity sweetener having a good taste quality include RebD, RebM, a luo han guo extract, mogroside (for example, mogroside V), thaumatin, brazzein, and a combination thereof.

In an embodiment of the present invention, the high-intensity sweetener may be those naturally occurring in plants and the like or those artificially produced (for example, bioconversion or chemosynthesis) but is preferably naturally occurring sweeteners. As used herein, the "naturally occurring" does not mean that a high-intensity sweet substance contained in the fruit juice beverage of the present invention is a natural product but a high-intensity sweet substance contained in the fruit juice beverage of the present invention may be a product artificially (for example, by bioconversion) produced (non-naturally occurring product) as long as the same substance naturally occurs.

Nonrestrictive examples of the sweetener (a) include rebaudioside A (RebA), rebaudioside D (RebD), rebaudioside M (RebM), neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Luo han guo plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components, and derivatives thereof, and combinations thereof. In a specific embodiment, the sweetener (a) contains RebA, RebD, RebM, a mogroside (for example, mogroside V) or a combination thereof. In another specific embodiment, the sweetener (a) contains RebA, RebD, RebM, a mogroside (for example, mogroside V), thaumatin, or a combination thereof. In a preferable embodiment of the present invention, the high-intensity sweetener contains at least one selected from the group consisting of RebA, RebD, RebM, mogroside V, a luo han guo extract, and a combination thereof. In an embodiment of the present invention, the sweetener (a) consists essentially of a sweetener other than major components of Stevia sweeteners such as RebA and stevioside. As used herein, "consists essentially of ... " means that the sweetener used in the present invention can contain major component (s) of Stevia sweeteners as long as the effects of the invention are not affected. For example, preferably 90% or more, more preferably 95% or more, and still more preferably 98% or more of the sweetener (a) for use in the present invention consists of a sweetener other than RebA and stevioside.

RebA, RebD and RebM may be directly extracted from Stevia, or may be obtained by adding glucose to a compound having another structure, contained in a Stevia extract.

The Luo han guo extract as a sweetener is an extract of Luo han guo containing a sweet substance derived from Luo han guo, approved in various countries including Japan as a food additive and commercially available. Examples of the sweet substance derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property close to sucrose when compared with rebaudioside A. Mogroside V may be obtained from a luo han guo extract (for example, an alcohol extract of Luo han guo) by purification with chromatography or the like. Alternatively, mogroside V may be obtained by adding glucose to a compound having another structure, contained in a luo han guo extract.

The Luo han guo extract preferably contains mogroside V and the ratio thereof is not limited and may be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more, or 75 wt% or more, of the total dry weight of a Luo han guo extract. The content of mogroside V can be determined by a known technique such as liquid chromatography. The Luo han guo extract can be obtained by extracting a fruit of Luo han guo (Siraitia grosvenorii) with a suitable solvent (for example, an aqueous solvent such as water, an alcohol solvent such as ethanol or methanol, a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, and may be, for example, one having a purity of 80% or more, 85% or more, 90% or more, 91% or more, 92% or more, 93% or more, 94% or more, 95% or more, 96% or more, 97% or more or 98% or more. Mogroside V obtained by purification of a luo han guo extract, of course, has a smaller amount of incorporation of a luo han guo extract component other than mogroside V, as it has a higher purity.

In other embodiments of the present invention, mogroside V may also be one having a low purity, and may be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of MogV having a purity of about 65% is about 175. In other embodiments of the present invention, a luo han guo extract containing about 30 wt% of MogV may be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity Xa, as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside A is 200 to 300 (median value 250), a degree of sweetness of rebaudioside N is 200 to 250 (median value 225), a degree of sweetness of rebaudioside O is 200 to 250 (median value 225), a degree of sweetness of rebaudioside E is 70 to 80 (median value 75), a degree of sweetness of a luo han guo extract (containing 40% of MogV) is about 130, a degree of sweetness of mogroside V is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the fruit juice beverage is a sweetness intensity of the high-intensity sweetener. When Xa of such a sweetener is herein determined, the above degrees of sweetness (median value when a numerical value range is shown) are used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, a sweetener whose degree of sweetness is different with respect to each literature, a relative ratio of a degree of sweetness of sucrose to a degree of sweetness of 1 can be determined by a sensory test. Examples of such a sensory test include a method involving preparing samples where sucrose is added to pure water, of Brix 3.0 to 5.0 by 0.5, and selecting a sample where sucrose is added, having a sweetness intensity equal to that of an aqueous solution having a predetermined concentration of sweetener, among such samples.

In an embodiment of the present invention, the high-intensity sweetener contains at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener contains at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, aspartame, acesulfame K, sucralose, a Glycyrrhiza extract, saccharine, and a combination thereof.

In some embodiments, the sweetener (a) contains the following combinations: RebA and RebM, RebA and RebD, RebD and RebM, RebA and RebD and RebM, RebA and mogroside V, RebD and mogroside V, RebM and mogroside V, RebA and RebM and mogroside V, RebA and RebD and mogroside V, RebD and RebM and mogroside V, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebA and brazzein, RebD and brazzein, RebM and brazzein, mogroside V and brazzein, neohesperidin dihydrochalcone and brazzein, RebM and RebD and brazzein, RebM and RebD and brazzein and mogroside V, RebM and RebD and brazzein and neohesperidin dihydrochalcone, or RebM and RebD and brazzein and mogroside V and neohesperidin dihydrochalcone.

In another embodiment, the sweetener (a) contains the following combinations: RebA and thaumatin, RebD and thaumatin, RebM and thaumatin, mogroside V and thaumatin, RebA and RebM and thaumatin, RebA and RebD and thaumatin, RebD and RebM and thaumatin, RebA and mogroside V and thaumatin, RebD and mogroside V and thaumatin, RebM and mogroside V and thaumatin, RebD and RebM and mogroside V and thaumatin.

In an embodiment of the present invention, the sweetener (a) may contain a high-intensity sweetener selected from rebaudioside A, rebaudioside D, rebaudioside M, mogroside V, a luo han guo extract, and a combination thereof, preferably one or more high-intensity sweeteners selected from rebaudioside D, rebaudioside M, and a combination thereof.

The amount of the sweetener (a) contained in the fruit juice beverage of an embodiment of the present invention is, in the case when the sweetener (a) contains a combination of a plurality of sweet substances, an amount of all of these sweet substances combined. When an amount of the sweetener (a) is Pa (ppm), Pa can be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300, or about 200 to about 250.

In an embodiment of the present invention, an amount Pa ppm of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

[Amino acids or derivatives or salts thereof]

The fruit juice beverage of the present invention contains (b) an amino acid or a derivative or a salt thereof in an amount less than a taste recognition threshold. The amino acids or amino acid salts used in the present invention are organic compounds having both functional groups of an amino group and a carboxyl group, or salts thereof, and not particularly limited as long as a sweetness enhancement effect can be obtained. Additionally, proline and hydroxyproline, which form a cyclic structure in which the hydrogen of the amino group is substituted with a side chain moiety in a molecule, are also encompassed in the amino acid in the present description. The amino acid derivatives which can be used in the present invention encompass derivatives having no carboxyl group such as taurine. In an embodiment of the present invention, the amino acid means a free amino acid.

The amino acids used in the present invention may be the D-configuration, the L-configuration, or the racemic configuration consisting of the D-configuration and the L-configuration (in the present description, also referred to as the DL-amino acid). In an embodiment of the present invention, the amino acid can be selected from neutral amino acids, basic amino acids, and acidic amino acids. The neutral amino acid can be preferably selected from glycine, alanine, valine, isoleucine, leucine and the like which have an alkyl group, serine, threonine and the like which have an OH group (a hydroxy group), tyrosine, phenylalanine, tryptophan and the like which have an aromatic group (or an aromatic ring), methionine, cysteine and the like which have a sulfur-containing group, proline, hydroxyproline and the like which have an imino group, and glutamine, asparagine and the like which have an amide group. The basic amino acid can be preferably selected from arginine, lysine, histidine and the like. The acidic amino acid can be preferably selected from glutamic acid, aspartic acid and the like. In a preferable embodiment of the present invention, the amino acids are selected from the neutral amino acids or the basic amino acids. In other preferable embodiments of the present invention, the amino acids include amino acids selected from, of the basic amino acids and the neutral amino acids, amino acids having an alkyl group, an OH group, or an amide group on a side chain and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the fruit juice beverage in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan (Trp), tyrosine (Tyr), valine (Val), selenosysteine (Sec), and pyrrolysine (Pyl).

The amino acid contained in the fruit juice beverage in an embodiment of the present invention is one or more selected from an amino acid having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and still more preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cystine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine hydrochloride (L-histidine monohydrochloride), L-hydroxyproline, L-isoleucine, L-lysine, L-lysine solution, L-lysine L-aspartate, L-lysine hydrochloride (also known as L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, L-valine, L-theanine, L-ornithine, and taurine. In an embodiment of the present invention, a plurality species of amino acids may be used in combination. In an embodiment of the present invention, the amino acid comprises an amino acid selected from glycine, alanine, valine, isoleucine, leucine, serine, threonine, glutamine, asparagine, arginine, lysine, histidine, and a combination thereof.

In an embodiment of the present invention, the amino acid or a derivative or a salt thereof may comprise an amino acid selected from DL-alanine, L-serine, glycine, L-arginine, L-glutamic acid, L-valine and L-glutamine. In another embodiment of the present invention, the amino acid or a derivative or a salt thereof may comprise one or more amino acids selected from arginine, lysine, histidine, phenylalanine, tyrosine, leucine, isoleucine, methionine, valine, alanine, glycine, proline, glutamic acid, serine, threonine, aspartic acid and tryptophan. In still another embodiment of the present invention, the amino acid or a derivative or a salt thereof may comprise one or more amino acids selected from arginine, valine, alanine, glycine, proline, glutamic acid, serine, threonine, aspartic acid and tryptophan.

As used herein, the threshold of amino acids means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, a detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold. In an embodiment of the present invention, the taste recognition threshold of an amino acid means a taste recognition threshold in pure water. The taste recognition threshold in pure water means a minimum concentration at which such a taste can be recognized when only an amino acid is added to water without addition of any sweetener or the like.

In an embodiment of the present invention, the fruit juice beverage contains glycine and a content of glycine may be more than 0 mM and 80 mM or less, 75 mM or less, less than 75 mM, 70 mM or less, 65 mM or less, 60 mM or less, 55 mM or less, 50 mM or less, less than 50 mM, 45 mM or less, 40 mM or less, 35 mM or less, 30 mM or less, 25 mM or less, 20 mM or less, 15 mM or less, or 10 mM or less. Alternatively, such a content may be 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM or 20 to 30 mM.

In an embodiment of the present invention, the fruit juice beverage contains alanine and a content of alanine may be more than 0 mM and 32.4 mM or less, 30 mM or less, less than 30 mM, 25 mM or less, 20 mM or less, less than 20 mM, 15 mM or less, or 10 mM or less. Alternatively, such a content may be 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 mM or more and less than 20 mM, 1 to 19 mM, 5 to 19 mM, 10 to 19 mM, 15 to 19 mM, 1 to 18 mM, 5 to 18 mM, 10 to 18 mM, 15 to 18 mM, 1 to 17 mM, 5 to 17 mM, 10 to 17 mM, 15 to 17 mM, 1 to 16 mM, 5 to 16 mM, 10 to 16 mM or 15 to 16 mM. Alanine may be either the L-configuration, the D-configuration or the racemic configuration (DL-configuration) but is preferably the L-configuration.

In an embodiment of the present invention, the fruit juice beverage contains valine and a content of valine may be more than 0 mM and 50 mM or less, less than 50 mM, 45 mM or less, 40 mM or less, less than 40 mM, 35 mM or less, 30 mM or less, less than 30 mM, 25 mM or less, 20 mM or less, 15 mM or less, or 10 mM or less. Alternatively, such a content may be 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 1 mM or more and less than 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 1 mM or more and less than 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 10 to 15 mM, or 15 to 20 mM. Valine may be either the L-configuration, the D-configuration, or the racemic configuration (DL-configuration) but is preferably the L-configuration.

In an embodiment of the present invention, the fruit juice beverage contains isoleucine and a content of isoleucine may be more than 0 mM and 25 mM or less, 20 mM or less, 15 mM or less, 10 mM or less, or 5 mM or less. Alternatively, such a content may be 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 to 15 mM, 5 to 15 mM, or 10 to 15 mM. Isoleucine may be either the L-configuration, the D-configuration, or the racemic configuration (DL-configuration) but is preferably the L-configuration.

In an embodiment of the present invention, the fruit juice beverage contains leucine and a content of leucine may be more than 0 mM and 50 mM or less, 45 mM or less, 40 mM or less, 35 mM or less, 30 mM or less, less than 30 mM, 25 mM or less, 20 mM or less, less than 20 mM, 15 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 50 mM, 2 to 50 mM, 3 to 50 mM, 4 to 50 mM, 5 to 50 mM, 6 to 50 mM, 7 to 50 mM, 8 to 50 mM, 9 to 50 mM, 10 to 50 mM, 1 to 40 mM, 2 to 40 mM, 3 to 40 mM, 4 to 40 mM, 5 to 40 mM, 6 to 40 mM, 7 to 40 mM, 8 to 40 mM, 9 to 40 mM, 10 to 40 mM, 1 to 30 mM, 2 to 30 mM, 3 to 30 mM, 4 to 30 mM, 5 to 30 mM, 6 to 30 mM, 7 to 30 mM, 8 to 30 mM, 9 to 30 mM, 1 to 20 mM, 1 mM or more and less than 20 mM, 2 to 20 mM, 3 to 20 mM, 4 to 20 mM, 5 to 20 mM, 6 to 20 mM, 7 to 20 mM, 8 to 20 mM, 9 to 20 mM, 15 to 50 mM, 15 to 45 mM, 15 to 40 mM, 15 to 35 mM, 15 to 30 mM, 15 to 25 mM, 15 to 20 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM or 9 to 10 mM. Leucine may be either the L-configuration, the D-configuration or the racemic configuration (DL-configuration) but is preferably the L-configuration.

In an embodiment of the present invention, the fruit juice beverage contains serine and a content of serine may be more than 0 mM and 130 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 130 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, 20 to 30 mM, 5 to 45 mM, 5 to 40 mM, 5 to 35 mM, 5 to 30 mM, 5 to 25 mM, 5 to 20 mM, 5 to 15 mM, 5 to 10 mM, 1 to 45 mM, 1 to 40 mM, 1 mM or more and less than 40 mM, 1 to 35 mM, 1 to 30 mM, 1 to 25 mM, 1 to 20 mM, 1 to 15 mM or 1 to 10 mM. Serine may be either the L-configuration, the D-configuration or the racemic configuration (DL-configuration) but is preferably the L-configuration.

In an embodiment of the present invention, the fruit juice beverage contains threonine and a content of threonine may be more than 0 mM and 70 mM or less, 65 mM or less, 60 mM or less, 55 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 70 mM, 1 to 65 mM, 1 to 60 mM, 1 to 55 mM, 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 1 mM or more and less than 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, or 15 to 20 mM. Threonine may be either the L-configuration, the D-configuration, or the racemic configuration (DL-configuration) but is preferably the L-configuration.

In an embodiment of the present invention, the fruit juice beverage contains phenylalanine and a content of phenylalanine may be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Phenylalanine may be either the L-configuration, the D-configuration, or the racemic configuration (DL-configuration) but is preferably the L-configuration.

In an embodiment of the present invention, the fruit juice beverage contains tryptophan and a content of tryptophan may be more than 0 mM and 5 mM or less, 4 mM or less, 3 mM or less, 2 mM or less, or 1 mM or less. Alternatively, such a content may be 1 to 5 mM, 2 to 5 mM, 3 to 5 mM, or 4 to 5 mM. Tryptophan may be either the L-configuration, the D-configuration, or the racemic configuration (DL-configuration) but is preferably the L-configuration.

In an embodiment of the present invention, the fruit juice beverage contains methionine and a content of methionine may be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Methionine may be either the L-configuration, the D-configuration, or the racemic configuration (DL-configuration) but is preferably the L-configuration.

In an embodiment of the present invention, the fruit juice beverage contains proline and a content of proline may be more than 0 mM and 120 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 120 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 1 mM or more and less than 40 mM, 10 to 40 mM, 20 to 40 mM, 30 to 40 mM, 1 to 30 mM, 5 to 30 mM, 10 to 30 mM, 15 to 30 mM, 20 to 30 mM or 25 to 30 mM. Proline may be either the L-configuration, the D-configuration or the racemic configuration (DL-configuration) but is preferably the L-configuration.

In an embodiment of the present invention, the fruit juice beverage contains glutamine and a content of glutamine may be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, less than 5 mM, 4 mM or less, 3 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, 9 to 10 mM, 1 to 8 mM, 2 to 8 mM, 3 to 8 mM, 4 to 8 mM, 5 to 8 mM, 6 to 8 mM, 7 to 8 mM, 1 to 7 mM, 2 to 7 mM, 3 to 7 mM, 4 to 7 mM, 5 to 7 mM, 6 to 7 mM, 1 to 6 mM, 2 to 6 mM, 3 to 6 mM, 4 to 6 mM, 5 to 6 mM, 1 to 5 mM, 1 mM or more and less than 5 mM, 2 to 5 mM, 3 to 5 mM, 4 to 5 mM, 1 to 4 mM, 2 to 4 mM, 3 to 4 mM, 1 to 3 mM or 2 to 3 mM. Glutamine may be either the L-configuration, the D-configuration or the racemic configuration (DL-configuration) but is preferably the L-configuration.

In an embodiment of the present invention, the fruit juice beverage contains asparagine and a content of asparagine may be more than 0 mM and 20 mM or less, less than 20 mM, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 5 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, 9 to 10 mM, 0.1 to 3.0 mM, 0. 1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM or 0.5 to 1.0 mM. Asparagine may be either the L-configuration, the D-configuration or the racemic configuration (DL-configuration) but is preferably the L-configuration.

In an embodiment of the present invention, the fruit juice beverage contains arginine and a content of arginine may be more than 0 mM and 4.0 mM or less, 3.5 mM or less, 3.0 mM or less, 2.5 mM or less, less than 2.5 mM, 2.0 mM or less, 1.5 mM or less, 1.0 mM or less, less than 1.0 mM, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 mM or more and less than 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Arginine may be either the L-configuration, the D-configuration, or the racemic configuration (DL-configuration) but is preferably the L-configuration.

In an embodiment of the present invention, the fruit juice beverage contains lysine and a content of lysine may be more than 0 mM and 3.0 mM or less, 2. 5 mM or less, 2.0 mM or less, 1.5 mM or less, 1.0 mM or less, or 0.5 mM or less. Alternatively, such a content may be 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Lysine may be either the L-configuration, the D-configuration, or the racemic configuration (DL-configuration) but is preferably the L-configuration.

In an embodiment of the present invention, the fruit juice beverage contains lysine monohydrochloride and a content of lysine monohydrochloride may be more than 0 mM and 1.0 mM or less, 0.9 mM or less, 0.8 mM or less, 0.7 mM or less, 0.6 mM or less, 0.5 mM or less, less than 0.5 mM, 0.4 mM or less, less than 0.4 mM, 0.3 mM or less, or 0.2 mM or less. Alternatively, such a content may be 0.1 to 1.0 mM, 0.1 to 0.9 mM, 0.1 to 0.8 mM, 0.1 to 0.7 mM, 0.1 to 0.6 mM, 0.1 to 0.5 mM, 0.1 to 0.4 mM, 0.1 mM or more and less than 0.4 mM, 0.1 to 0.3 mM, 0.1 to 0.2 mM, 0.2 to 1.0 mM, 0.5 to 0.8 mM, 0.2 to 0.6 mM, 0.2 to 0.4 mM or 0.3 to 0.5 mM. Lysine may be either the L-configuration, the D-configuration, or the racemic configuration (DL-configuration) but is preferably the L-configuration.

In an embodiment of the present invention, the fruit juice beverage contains histidine and a content of histidine may be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Histidine may be either the L-configuration, the D-configuration, or the racemic configuration (DL-configuration) but is preferably the L-configuration.

In an embodiment of the present invention, the fruit juice beverage contains glutamic acid and a content of glutamic acid may be more than 0 mM and 0.50 mM or less, less than 0.50 mM, 0.40 mM or less, less than 0.40 mM, 0.35 mM or less, 0.30 mM or less, 0.25 mM or less, less than 0.25 mM, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less or 0.01 mM or less. Alternatively, such a content may be 0.01 to 0.15 mM, 0.02 to 0.15 mM, 0.03 to 0.15 mM, 0.04 to 0.15 mM, 0.05 to 0.15 mM, 0.06 to 0.15 mM, 0.07 to 0.15 mM, 0.08 to 0.15 mM, 0.09 to 0.15 mM, 0.10 to 0.15 mM, 0.01 to 0.12 mM, 0. 02 to 0.12 mM, 0.03 to 0.12 mM, 0.04 to 0.12 mM, 0.05 to 0.12 mM, 0.06 to 0.12 mM, 0.07 to 0.12 mM, 0.08 to 0.12 mM, 0.09 to 0.12 mM, 0.10 to 0.12 mM, 0.01 to 0.10 mM, 0.02 to 0.10 mM, 0.03 to 0. 10 mM, 0.04 to 0.10 mM, 0.05 to 0.10 mM, 0.06 to 0.10 mM, 0.07 to 0.10 mM, 0.08 to 0.10 mM, 0.09 to 0.10 mM, 0.10 to 0.40 mM, 0.10 to 0.35 mM, 0.10 to 0.30 mM, 0.10 to 0.25 mM, 0.10 mM or more and less than 0.25 mM, 0.10 to 0.20 mM, 0.10 to 0.15 mM, 0.20 to 0.40 mM, 0.20 to 0.35 mM, 0.20 to 0.30 mM, 0.20 to 0.25 mM, or 0.30 to 0.40 mM. Glutamic acid may be either the L-configuration, the D-configuration, or the racemic configuration (DL-configuration) but is preferably the L-configuration.

In an embodiment of the present invention, the fruit juice beverage contains aspartic acid and a content of aspartic acid may be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content may be 0.1 to 1.5 mM, 0.2 to 1.5 mM, 0.3 to 1.5 mM, 0.4 to 1.5 mM, 0.5 to 1.5 mM, 0.6 to 1.5 mM, 0.7 to 1.5 mM, 0.8 to 1.5 mM, 0.9 to 1.5 mM, 1.0 to 1.5 mM, 0.1 to 1.2 mM, 0.2 to 1.2 mM, 0.3 to 1.2 mM, 0.4 to 1.2 mM, 0.5 to 1.2 mM, 0.6 to 1.2 mM, 0.7 to 1.2 mM, 0.8 to 1.2 mM, 0.9 to 1.2 mM, 1.0 to 1.2 mM, 0.1 to 1.0 mM, 0.2 to 1.0 mM, 0.3 to 1.0 mM, 0.4 to 1.0 mM, 0.5 to 1.0 mM, 0.6 to 1.0 mM, 0.7 to 1.0 mM, 0.8 to 1.0 mM, or 0.9 to 1.0 mM. Aspartic acid may be either the L-configuration, the D-configuration, or the racemic configuration (DL-configuration) but is preferably the L-configuration.

The fruit juice beverage in an embodiment of the present invention does not contain monosodium aspartate as the amino acid salt.

A content of the amino acid can be measured by an amino acid automatic analysis method or high-performance liquid chromatography. When an amount of the amino acid contained in the beverage is known, a value calculated from the amount contained can be adopted.

When a fruit-derived amino acid contained in a fruit juice is contained, the amino acid is also encompassed in the amino acid in the fruit juice beverage of the present invention. Thus, an amount of the amino acid contained in the fruit juice beverage of the present invention is a total value of amounts of fruit juice-derived one and one added externally. In an embodiment of the present invention, when a plurality of amino acids are contained in the fruit juice beverage, a content of at least one of such amino acids may be less than the taste recognition threshold, or contents of some of such amino acids may be more than the taste recognition threshold. In other embodiments of the present invention, when a plurality of amino acids are contained in the fruit juice beverage, a content of each of such amino acids may be less than the taste recognition threshold. The fruit juice beverage in still another embodiment of the present invention may contain one or more amino acids selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine and less than 0.4 mM of L-lysine monohydrochloride. The fruit juice beverage in still another embodiment of the present invention may contain one or more amino acids selected from 1 mM or more and less than 20 mM of DL-alanine, 1 mM or more and less than 40 mM of L-serine, 1 mM or more and less than 50 mM of glycine, 0.1 mM or more and less than 1.0 mM of L-arginine, 0.10 mM or more and less than 0.25 mM of L-glutamic acid, 1 mM or more and less than 40 mM of L-valine, 1 mM or more and less than 5 mM of L-glutamine, 1 mM or more and less than 20 mM of L-leucine, 1 mM or more and less than 40 mM of L-threonine, 1 mM or more and less than 40 mM of L-proline, 1 mM or more and less than 10 mM of L-asparagine and 0.1 mM or more and less than 0.4 mM of L-lysine monohydrochloride.

[Optional component]

(Sweetener)

The fruit juice beverage of the present invention can contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners. Note that, when fruit-derived sweeteners (fructose and the like) are contained in a fruit juice, such sweeteners are also included in the sweeteners here described.

The carbohydrate sweetener is not limited and include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharides, Coupling Sugar[R], galactooligosaccharides, lactosucrose, raffinose, soyoligosaccharide, and honey. Further, the carbohydrate-based sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, and fructose.

The non-caloric sweeteners typically refer to those having the nature of being difficult to be digested in the body and consequently having a reduced energy to be taken into and mean sweet substances having an energy of less than 2 kcal/g, preferably less than 1 kcal/g, and still more preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substances having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, or sweet substances having an energy of 0 kcal/g or more and less than 1 kcal/g. Examples of the sweet substances having an energy of 4 kcal/g or more include sucrose, lactose, glucose, maltose, starch syrup, a high-fructose corn syrup, and fructose, examples of the sweet substances having an energy of 2 kcal/g or more and less than 4 kcal/g include sorbitol, xylitol, D-xylose, D-ribose, D-tagatose, and arabinose, and examples of the sweet substances having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharides, maltooligosaccharides, isomaltooligosaccharides, galactooligosaccharides, Coupling Sugar$^{(R)}$, and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners and artificial sweeteners as long as the degree of sweetness is in the above range.

The fruit juice beverage in an embodiment of the present invention contains a low-intensity sweetener. In other embodiments of the present invention, the following fruit juice beverage (hereinafter, also referred to as the fruit juice beverage of Embodiment A) is provided.

A fruit juice beverage comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc (hereinafter, sometimes abbreviated as the "component (c)".),
wherein the fruit juice beverage has a sweetness of a sweetness intensity Xd exhibited by the components (a) to (c) and 0.1 < Xa + Xc < Xd is satisfied. Xc and Xd are respectively referred to as X4 and X6 in the first embodiment. The fruit juice beverage in an embodiment of the present invention does not contain a component as a sweetener other than (a) a high-intensity sweetener in an amount corresponding to a sweetness intensity Xa and (c) a low-intensity sweetener in an amount corresponding to a sweetness intensity Xc. Note that fruit-derived sweeteners (fructose and the like) contained in the fruit juice beverage are encompassed in the sweetener (c).

In an embodiment of the present invention, the low-intensity sweetener contains a sweetener selected from hexose, pentose, tetrose, a polysaccharide having a terminal sugar of aldose or ketose, sugar alcohols, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still another embodiment of the present invention, the low-intensity sweetener contains a sweetener selected from glucose, sucrose, fructose, and a combination thereof.

The Xc of "sweetness intensity Xc" can be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3. 5, 0.5 to 4.0, 0.5 to 4.5, 0.5 to 5.0, 0.5 to 5.5, 0.5 to 6.0, 0.5 to 6.5, 0.5 to 7.0, 0.5 to 7. 5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0, or 3.0 to 5.5.

The $X_c$ can also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0.

The amount corresponding to a sweetness intensity $X_c$ of a low-intensity sweetener refers to an amount (concentration) which provides a sweetness of a sweetness intensity $X_c$ under the conditions when the low-intensity sweetener is dissolved in water having the same volume as the fruit juice beverage of the present invention at 20°C.

In an embodiment of the present invention, $X_c$ is preferably 0.05 to 6.0, more preferably 0.05 to 5.0, and still more preferably 0.1 to 4.0.

The $X_d$ is not particularly limited as long as it is greater than $X_a + X_c$ and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8. 0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. $X_d$ can be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5. 0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

[Sodium]

The fruit juice beverages in the first and A1-th embodiments of the present invention may each contain a small amount of sodium. A content of sodium may be, depending on an embodiment, a content of 0 mg/100 ml or more and less than 5 mg/100 ml, 0 to 4.5 mg/100 ml, 0 to 4.0 mg/100 ml, 0 to 3.5 mg/100 ml, 0 to 3.0 mg/100 ml, 0 to 2.5 mg/100 ml, 0 to 2.0 mg/100 ml, 0 to 1.9 mg/100 ml, 0 to 1.8 mg/100 ml, 0 to 1.7 mg/100 ml, 0 to 1.6 mg/100 ml, 0 to 1.5 mg/100 ml, 0 to 1.4 mg/100 ml, 0 to 1.3 mg/100 ml, 0 to 1.2 mg/100 ml, 0 to 1.1 mg/100 ml, 0 to 1.0 mg/100 ml, 0.1 mg/100 ml or more and less than 5 mg/100 ml, 0.1 to 4.5 mg/100 ml, 0.1 to 4.0 mg/100 ml, 0.1 to 3.5 mg/100 ml, 0.1 to 3.0 mg/100 ml, 0.1 to 2.5 mg/100 ml, 0.1 to 2.0 mg/100 ml, 0.1 to 1.9 mg/100 ml, 0.1 to 1.8 mg/100 ml, 0.1 to 1.7 mg/100 ml, 0.1 to 1.6 mg/100 ml, 0.1 to 1.5 mg/100 ml, 0.1 to 1.4 mg/100 ml, 0.1 to 1.3 mg/100 ml, 0.1 to 1.2 mg/100 ml, 0.1 to 1.1 mg/100 ml, 0.1 to 1.0 mg/100 ml, 0.5 mg/100 ml or more and less than 5 mg/100 ml, 0.5 to 4.5 mg/100 ml, 0.5 to 4.0 mg/100 ml, 0.5 to 3.5 mg/100 ml, 0.5 to 3.0 mg/100 ml, 0.5 to 2.5 mg/100 ml, 0.5 to 2.0 mg/100 ml, 0.5 to 1.9 mg/100 ml, 0.5 to 1.8 mg/100 ml, 0.5 to 1.7 mg/100 ml, 0.5 to 1.6 mg/100 ml, 0.5 to 1.5 mg/100 ml, 0.5 to 1.4 mg/100 ml, 0.5 to 1.3 mg/100 ml, 0.5 to 1.2 mg/100 ml, 0.5 to 1.1 mg/100 ml, 0.5 to 1.0 mg/100 ml, 1.0 mg/100 ml or more and less than 5 mg/100 ml, 1.0 to 4.5 mg/100 ml, 1.0 to 4.0 mg/100 ml, 1.0 to 3.5 mg/100 ml, 1.0 to 3.0 mg/100 ml, 1.0 to 2.5 mg/100 ml, 1.0 to 2.0 mg/100 ml, 1.0 to 1.9 mg/100 ml, 1.0 to 1.8 mg/100 ml, 1.0 to 1.7 mg/100 ml, 1.0 to 1.6 mg/100 ml, 1.0 to 1.5 mg/100 ml, 1.0 to 1.4 mg/100 ml, 1.0 to 1.3 mg/100 ml, 1.0 to 1.2 mg/100 ml or 1.0 to 1.1 mg/100 ml.

In an embodiment of the present invention, sodium is derived from a fruit juice or inevitably incorporated, and is not added. A content of sodium in the beverage can be herein measured by an atomic absorption method.

(Other components)

The fruit juice beverage of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

[Exemplary embodiments of fruit juice beverage of A1-th embodiment of the invention]

In an embodiment of the present invention, a fruit juice beverage is provided comprising:

(a) a high-intensity sweetener in an amount corresponding to a sweetness intensity Xa, and
(b) an amino acid or a derivative or a salt thereof in an amount less than a taste recognition threshold,

wherein the fruit juice beverage has a sweetness of a sweetness intensity Xb exhibited by the components (a) and (b) and $0.1 < Xa < Xb$ is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, more preferably 2.0 to 5.0, and
the amino acid or a derivative or a salt thereof comprises an amino acid selected from DL-alanine, L-serine, glycine, L-arginine, L-glutamic acid, L-valine and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa, and
(b) an amino acid or a derivative or a salt thereof in an amount less than a taste recognition threshold,

wherein the fruit juice beverage has a sweetness of a sweetness intensity Xb exhibited by the components (a) and (b) and $0.1 < Xa < Xb$ is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 10.0, preferably 1.5 to 9.0, more preferably 2.0 to 8.0, and
the amino acid or a derivative or a salt thereof comprises an amino acid selected from DL-alanine, L-serine, glycine, L-arginine, L-glutamic acid, L-valine and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the fruit juice beverage has a sweetness of a sweetness intensity Xd exhibited by the components (a) to (c) and $0.1 < Xa + Xc < Xd$ is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, more preferably 2.0 to 5.0,
the amino acid or a derivative or a salt thereof comprises an amino acid selected from DL-alanine, L-serine, glycine, L-arginine, L-glutamic acid, L-valine and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
Xc is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) an amino acid or a derivative or a salt thereof in an amount less than a taste recognition threshold, and

(c) a low-intensity sweetener in an amount corresponding to a sweetness intensity Xc,

wherein the fruit juice beverage has a sweetness of a sweetness intensity Xd exhibited by the components (a) to (c) and 0.1 < Xa + Xc < Xd is satisfied, the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof, Xa is 0.5 to 5.5, preferably 1.0 to 5.5, more preferably 2.0 to 5.0, the amino acid or a derivative or a salt thereof comprises an amino acid selected from DL-alanine, L-serine, glycine, L-arginine, L-glutamic acid, L-valine and L-glutamine, the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, a fruit juice percentage is 1 to 100%, 4 to 95%, 5 to 80%, 5 to 50%, or 5 to 30%, and Xc is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the fruit juice beverage has a sweetness of a sweetness intensity Xd exhibited by the components (a) to (c) and 0.1 < Xa + Xc < Xd is satisfied, the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof, Xa is 0.5 to 5.5, preferably 1.0 to 5.5, more preferably 2.0 to 5.0, the amino acid or a derivative or a salt thereof comprises an amino acid selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine and less than 0.4 mM of L-lysine monohydrochloride, the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and Xc is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the fruit juice beverage has a sweetness of a sweetness intensity Xd exhibited by the components (a) to (c) and 0.1 < Xa + Xc < Xd is satisfied, the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof, Xa is 0.5 to 5.5, preferably 1.0 to 5.5, more preferably 2.0 to 5.0, the amino acid or a derivative or a salt thereof comprises an amino acid selected from arginine, lysine, histidine, phenylalanine, tyrosine, leucine, isoleucine, methionine, valine, alanine, glycine, proline, glutamic acid, serine, threonine, aspartic acid and tryptophan, the low-intensity sweetener comprises a sweetener selected from glucose, sucrose, fructose, and a combination thereof, a fruit juice is from one or more selected from orange, tangerine, lemon, grapefruit, lime, and a combination thereof,

a fruit juice percentage is 1 to 100%, 4 to 95%, 5 to 80%, 5 to 50%, or 5 to 30%, and

Xc is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the fruit juice beverage has a sweetness of a sweetness intensity Xd exhibited by the components (a) to (c) and 0.1 < Xa + Xc < Xd is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, more preferably 2.0 to 5.0,
the amino acid or a derivative or a salt thereof comprises an amino acid selected from arginine, valine, alanine, glycine, proline, glutamic acid, serine, threonine, aspartic acid and tryptophan,
the low-intensity sweetener comprises a sweetener selected from glucose, sucrose, fructose, and a combination thereof,
a fruit juice is from one or more selected from blueberry, blackcurrant, cranberry, strawberry, raspberry, and a combination thereof,
a fruit juice percentage is 1 to 100%, 4 to 95%, 5 to 80%, 5 to 50%, or 5 to 30%, and
Xc is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) one or more amino acids selected from alanine, serine and glycine, and
(c) a low-intensity sweetener in an amount corresponding to a sweetness intensity Xc,

wherein the fruit juice beverage has a sweetness of a sweetness intensity Xd exhibited by the components (a) to (c) and 0.1 < Xa + Xc < Xd is satisfied, and
wherein the fruit juice beverage has an energy of 50 Kcal/100 ml or less, and Xa + Xc is 6 or more. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the fruit juice beverage has a sweetness of a sweetness intensity Xd exhibited by the components (a) to (c) and 0.1 < Xa + Xc < Xd is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 1.0 to 11.0, preferably 1.5 to 10.0, or 1.5 to 6.0 or 4.0 to 10.0,
the amino acid or a derivative or a salt thereof comprises an amino acid selected from arginine, valine, alanine, glycine, proline, glutamic acid, serine, threonine, aspartic acid and tryptophan,
the low-intensity sweetener comprises a sweetener selected from glucose, sucrose, fructose, and a combination thereof, and
Xc is 0.5 to 9.0, preferably 1.0 to 8.0, or 1.0 to 5.0 or 2.5 to 9.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 200 to about 450 ppm.

«B1-th embodiment»

The present invention provides, as the B1-th embodiment, the following fruit juice beverage (hereinafter, also referred to as "fruit juice beverage B of the present invention").

A fruit juice beverage comprising:

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml,
wherein the fruit juice beverage has a sweetness of a sweetness intensity X2 exhibited by the components (a) to (c) and 0.1 < X1 < X2 is satisfied.

In other words, in the fruit juice beverage in the B1-th embodiment of the present invention, the component having a sweetness is (a) a high-intensity sweetener in an amount corresponding to a sweetness intensity X1, and the sweetness of the fruit juice beverage of the present invention is supposed to be a sweetness intensity X1 when calculated. However, the presence of (b) an amino acid or a derivative or a salt thereof in an amount less than a taste recognition threshold and (c) sodium in an amount of less than 50 mg/100 ml in the fruit juice beverage even in low concentrations enhances the sweetness of (a) a high-intensity sweetener in an amount corresponding to a sweetness intensity X1 to a sweetness intensity X2 (0.1 < X1 < X2 is satisfied herein). The present invention means to possibly include additional components such as a sweetener other than the component (a), an acidulant, a flavor, vitamin, a dye, an antioxidant, an emulsifier, a preservative, a seasoning agent, extracts, a pH adjuster, and a quality stabilizer, in addition to these components (a) to (c). For example, fruit-derived fructose is contained as a sweetener other than the component (a), depending on a type of a fruit juice. The fruit juice beverage in an embodiment of the present invention does not contain a substance having a sweetness, as a sweetener, other than the component (a) and fruit-derived fructose.

The fruit juice beverage in a preferable embodiment of the present invention further exerts the effect of improving a taste, other than enhancing a sweetness. For example, in the fruit juice beverage in an embodiment of the present invention, at least one of "total sweetness", "reduced lingering sweetness", "body, thickness", "flavor intensity", "reduced unpleasant tastes (bitterness, astringency, and the like)" and "saltiness" is preferably improved. In a preferable embodiment of the present invention, "body, thickness" and "flavor intensity" are improved by a combination of alanine, glycine or serine with sodium.

(Fruit juice)

The "fruit juice beverage" of the present invention means a beverage containing a fruit juice as a squeezed liquid of fruit.

Specific examples of the "fruit juice beverage" include "fruit beverages" defined in "the Fair Competition Codes concerning labelling of fruit beverages" implemented in 2018, and "fruit juices", "fruit-mixed juices", "fruit grain-containing fruit juices", "fruit-vegetable-mixed juices", "fruit juice-containing beverages" and "fruit juice-containing jelly beverages" defined in "Ordinance for Enforcement of the Fair Competition Codes concerning labelling of fruit beverages" implemented in 2016.

A beverage in which a proportion of use of a fruit juice is less than 10%, classified into "other beverages" in the Codes, is also encompassed in the "fruit juice beverage" of the present invention as long as it is a beverage containing a fruit juice. The fruit juice beverage of the present invention is also referred to as "fruit juice-containing beverage".

A fruit juice contained in the fruit juice beverage of the present invention is not particularly limited, and is, for example, from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, and quince.

A straight fruit juice, a concentrated fruit juice, or the like can be used for the fruit juice contained in the fruit juice beverage of the present invention, regardless of a production method.

The concentrated fruit juice may be prepared by any of a heating concentration method and a cooling concentration method.

A fruit juice percentage of the fruit juice beverage of the present invention can be, depending on an embodiment, 1 to 100%, 5 to 100%, 10 to 100%, 15 to 100%, 20 to 100%, 25 to 100%, 30 to 100%, 35 to 100%, 40 to 100%, 45 to 100%, 50 to 100%, 55 to 100%, 60 to 100%, 65 to 100%, 70 to 100%, 1 to 95%, 4 to 95%, 5 to 95%, 10 to 95%, 15 to 95%, 20 to 95%, 25 to 95%, 30 to 95%, 35 to 95%, 40 to 95%, 45 to 95%, 50 to 95%, 55 to 95%, 60 to 95%, 65 to 95%, 70 to 95%, 1 to 90%, 5 to 90%, 10 to 90%, 15 to 90%, 20 to 90%, 25 to 90%, 30 to 90%, 35 to 90%, 40 to 90%, 45 to 90%, 50 to 90%, 55 to 90%, 60 to 90%, 65 to 90%, 70 to 90%, 1 to 85%, 5 to 85%, 10 to 85%, 15 to 85%, 20 to 85%, 25 to 85%, 30 to 85%, 35 to 85%, 40 to 85%, 45 to 85%, 50 to 85%, 55 to 85%, 60 to 85%, 65 to 85%, 70 to 85%, 1 to 80%, 5 to 80%, 10 to 80%, 15 to 80%, 20 to 80%, 25 to 80%, 30 to 80%, 35 to 80%, 40 to 80%, 45 to 80%, 50 to 80%, 55 to 80%, 60 to 80%, 65 to 80%, 70 to 80%, 1 to 75%, 5 to 75%, 10 to 75%, 15 to 75%, 20 to 75%, 25 to 75%, 30 to 75%, 35 to 75%, 40 to 75%, 45 to 75%, 50 to 75%, 55 to 75%, 60 to 75%, 65 to 75%, 1 to 70%, 5 to 70%, 10 to 70%, 15 to 70%, 20 to 70%, 25 to 70%, 30 to 70%, 35 to 70%, 40 to 70%, 45 to 70%, 50 to 70%, 55 to 70%, 60 to 70%, 1 to 65%, 5 to 65%, 10 to 65%, 15 to 65%, 20 to 65%, 25 to 65%, 30 to 65%, 35 to 65%, 40 to 65%, 45 to 65%, 50 to 65%, 55 to 65%, 1 to 60%, 5 to 60%, 10 to 60%, 15 to 60%, 20 to 60%, 25 to 60%, 30 to 60%, 35 to 60%, 40 to 60%, 45 to 60%, 50 to 60%, 1 to 55%, 5 to 55%, 10 to 55%, 15 to 55%, 20 to 55%, 25 to 55%, 30 to 55%, 35 to 55%, 40 to 55%, 45 to 55%, 1 to 50%, 5 to 50%, 10 to 50%, 15 to 50%, 20 to 50%, 25 to 50%, 30 to 50%, 35 to 50%, 40 to 50%, 1 to 45%, 5 to 45%, 10 to 45%, 15 to 45%, 20 to 45%, 25 to 45%, 30 to 45%, 35 to 45%, 1 to 40%, 5 to 40%, 10 to 40%, 15 to 40%, 20 to 40%, 25 to 40%, 30 to 40%, 1 to 35%, 5 to 35%, 10 to 35%, 15 to 35%, 20 to 35%, 25 to 35%, 1 to 30%, 5 to 30%, 10 to 30%, 15 to 30%, 20 to 30%, 1 to 25%, 5 to 25%, 10 to 25%, 15 to 25%, 1 to 20%, 5 to 20%, 10 to 20%, 1 to 15% or 5 to 15%. In an embodiment of the present invention, a fruit juice percentage of the fruit juice beverage may be 1 to 100%, 4 to 95%, 5 to 80%, 5 to 50% or 5 to 30%.

As used herein, the "fruit juice percentage" is a relative concentration based on a straight fruit juice obtained by squeezing a fruit of 100%, and can be obtained by conversion based on the standard (°Bx) of the sugar refractometer index or the standard (%) of the degree of acid shown in JAS standards (Japan Agricultural Standards of fruit beverages).

The values of the standards (unit: °Bx) of sugar refractometer indexes of representative fruits are as follows: orange: 11, tangerine: 9, grapefruit: 9, pineapple: 11, cranberry: 7, blueberry, guava: 8, banana: 23, papaya: 9, passion fruit: 14, mango: 13, apple: 10, grape: 11, peach: 8, Japanese pear: 8, pear: 11, apricot: 7, plum: 6, melon, kiwifruit: 10.

The standards (unit: %) of the degrees of acid of representative fruits are as follows: lemon: 4.5, lime: 6, ume: 3.5, Citrus sphaerocarpa: 3.5.

Specifically, the fruit juice percentage can be calculated from a content (g) of the fruit juice contained in 100 mL of the fruit juice beverage and a concentration rate of the fruit juice, calculated from the standard (°Bx) of the sugar refractometer index or the standard (%) of the degree of acid, according to the following conversion expression.

$$[\text{Fruit juice percentage (\%)}] = [\text{Content (g) of fruit juice}] \times [\text{Concentration rate}]/100 \text{ mL} \times 100$$

For example, an orange fruit juice has a Bx11° according to the JAS standards, and thus when 6.0 wt% of an orange fruit juice having a Bx55° is contained in a beverage, a fruit juice percentage of 30% is obtained. When a fruit juice percentage of a fruit juice is converted based on a sugar refractometer index according to the JAS standards, sugar refractometer indexes of sugars, honeys, and the like added to the fruit juice are here excluded.

The fruit juice beverage of the present invention may also be an alcoholic beverage. The alcoholic beverages refer to beverages containing an alcohol raw material. The alcoholic beverage may be a chuhai beverage or a highball beverage. Examples of the alcohol raw material include brewed liquors, distilled liquors, and mixed liquors. Examples of the brewed liquor include wines and beers. Example of the distilled liquor include spirits (for example, gins, vodkas, rums, tequilas and new spirits, and material alcohols), liquors, whiskies (for example, whiskies and brandies), and *shochus*. The alcohol raw material can be obtained by fermentation of the fruit juice contained in the fruit juice beverage of the present invention. The alcoholic beverages herein may be any beverages containing detectable alcohol and, for examples, contain alcohol of 1 vol% or more, 2 vol% or more, 3 vol% or more, 4 vol% or more, and 5 vol% or more.

The form of the fruit juice beverage of the present invention is not limited, and may be, for example, a beverage form where a concentrated fruit juice extract is dissolved, or a fruit juice beverage form packed in a container, which is incorporated and packed in a container such as a can or a PET bottle.

[Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is $0.65 \times 1.5 = 0.975$. The degrees of sweetness of common sweeteners are as shown in Table 1 representing the first and A1-th embodiments.

The fruit juice beverage of the present invention contains, as described above, a high-intensity sweetener in an amount corresponding to a sweetness intensity X1 and has a sweetness having a sweetness intensity X2 exhibited by the components (a) to (c) and $0.1 < X1 < X2$ is satisfied.

The X1 in the "sweetness intensity X1" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0.1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10. 0, 3.5 to 10.5, 3.5 to 11.0, 3.5 to 11.5 or 4.0 to 11.5.

The X1 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4. 0 to 15.0, 4.0 to 16.0, 4.0 to 17.0 or 4.0 to 18.0.

In an embodiment of the present invention, the X1 is preferably 0.5 to 10.0, more preferably 1.5 to 9.0, and still more preferably 2.0 to 8.0. Further, in another embodiment of the present invention, the X1 is preferably 0.5 to 5.5, more preferably 1.0 to 5.5, and still more preferably 2.0 to 5.0.

The amount corresponding to a sweetness intensity X1 of a high-intensity sweetener refers to an amount which provides a sweetness of a sweetness intensity X1 under the conditions when the high-intensity sweetener is dissolved in water having the same volume as the fruit juice beverage of the present invention at 20°C.

Further, the amount of a high-intensity sweetener may be Pa ppm and Pa ppm herein refers to an amount corresponding to a sweetness intensity X1. The Pa herein can be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The Pa can also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The Pa can also be a value of about 20 to about 200, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, or about 200 to about 250.

The X2 is not particularly limited as long as it is greater than X1 and may also be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5. The X2 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6. 5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

Further, the fruit juice beverage in an embodiment of the present invention has a sweetness of a sweetness intensity X3 exhibited by the components (a) and (b) and $0.1 < X1 < X3 < X2$ is satisfied. That is, the sweetness is enhanced by addition of the sodium of the component (c) to the high-intensity sweetener of the component (a) and the amino acid or a derivative or a salt thereof of the component (b), compared with a combination of the component (a) and the component (b).

The X3 is not particularly limited as long as it is greater than the X1 and less than the X2 and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2. 0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14, or 9.5 to 11.5. The X3 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15, or 9.5 to 14.5.

The fruit juice beverage of the present invention has an enhanced sweetness as having been already mentioned. Whether or not the sweetness of the fruit juice beverage of the present invention is enhanced can be evaluated by panelists who received sensory trainings. Further, for the sweetness intensity of the fruit juice beverage of the present invention, standard fruit juice beverages to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the fruit juice beverage of the present invention with the sweetnesses of these standard fruit juice beverages thereby to measure the sweetness of the fruit juice beverage of the present invention. Note that the standard fruit juice beverages having a sweetness intensity 1, 2, ... 15 are prepared by adding sucrose in such a way that a sucrose content is 1 g/100 g, 2 g/100 g, ... 15 g/100 g to the fruit juice beverage to which sucrose is not added.

Furthermore, of the standard fruit juice beverages having a lower sweetness than the fruit juice beverage of the present invention in the above measurement, the standard fruit juice beverage having the closest sweetness to that of the fruit juice beverage of the present invention is selected and adjusted in such a way as to have the same sweetness as that of the fruit juice beverage of the present invention by adding sucrose to the selected standard fruit juice beverage, during which a sweetness intensity of the fruit juice beverage of the present invention can also be measured from a sucrose content in the adjusted standard fruit juice beverage.

Other examples of the method for measuring a sweetness of the fruit juice beverage of the present invention include a sweetness intensity rating using Visual Analogue Scale (VAS method). For the VAS method, literatures in The Journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of the fruit juice beverage of the present invention is not particularly limited as long as it is acceptable as a fruit juice beverage and may be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The sweetness intensity of the fruit juice beverage is provided by the above components (a) to (c) and Optional components.

An energy (total energy) of the fruit juice beverage of the present invention can be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

Further, an energy (total energy, TE) of the fruit juice beverage of the present invention can be, depending on an embodiment (for example, an embodiment containing a caloric sweetener), $0 < TE \leq 50$ Kcal/100 ml, $0 < TE \leq 45$ Kcal/100 ml, $0 < TE \leq 40$ Kcal/100 ml, $0 < TE \leq 35$ Kcal/100 ml, $0 < TE \leq 30$ Kcal/100 ml, $0 < TE \leq 24$ Kcal/100 ml, $0 < TE \leq 22$ Kcal/100 ml, $0 < TE \leq 20$ Kcal/100 ml, $0 < TE \leq 15$ Kcal/100 ml, $0 < TE \leq 10$ Kcal/100 ml, or $0 < TE \leq 5$ Kcal/100 ml (that is, it never is completely 0).

The components (a) to (c) can be in any combinations. As shown in examples to be described later, the addition of the component (b) and the component (c) to the component (a) enables to provide a sweetness intensity X2, which is higher than the sweetness intensity X1 of the component (a) alone. That is, the sweetness of the component (a) can be enhanced by the components (b) and (c). For this reason, fruit juice beverages can be produced without using or with a reduced amount of highly caloric sucrose while maintaining the sweetness equal to a fruit juice beverage containing sucrose. Thus, the design of new low-calorie fruit juice beverages is enabled. In the case of designing a zero-calorie fruit juice beverage, a high-intensity sweetener having particularly good-taste quality such as rebaudioside D (hereinafter, rebaudioside may be sometimes abbreviated as "Reb") and rebaudioside M is used for the component (a) and D-allulose or erythritol is used as an additional sweet substance to thereby improve a sweetness with amino acids in low concentrations and sodium in a low concentration. In the case of adjusting a food to be not zero calorie but low calorie, a caloric sweetener such as sucrose, glucose, fructose, or sorbitol can be contained as an additional sweet substance.

[High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1,000 times or more, 5,000 times or more, 10,000 times or more, 50,000 times or more or 100,000 times or more, of that of sucrose.

Specific examples of the high-intensity sweetener include peptide-based sweeteners such as aspartame, neotame, and advantame; sucrose derivatives such as sucralose; synthetic sweeteners (including those naturally occurring but also those whose synthetic products are mostly distributed such as neohesperidin dihydrochalcone) such as acesulfame K, saccharine, saccharin sodium, sodium cyclamate, dulcin, disodium glycyrrhizin, trisodium glycyrrhizin, and neohesperidin dihydrochalcone; sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin; and plant extracts containing a high-intensity sweetener component, for example, Stevia rebaudiana extract, Siraitia grosvenorii (Luo han guo) extract, Glycyrrhiza (licorice) glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract; sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviol monoside, steviol bioside and stevioside. Examples of the mogroside include mogroside IV, mogroside V.

The Glycyrrhiza (licorice) extract refers to those obtained from roots or rhizomes of Glycyrrhiza uralensis Fisher, Glycyrrhiza inflata Batalin, or Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose) and oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with rebaudioside A (RebA), (1) less astringent taste, (2) less metallic taste, (3) less lingering sweetness, and (4) less bitterness. Whether a certain sweet substance has the above taste quality is already known or can be determined based on a sensory evaluation. Nonrestrictive examples of the high-intensity sweetener having a good taste quality include RebD, RebM, a luo han guo extract, mogroside (for example, mogroside V), thaumatin, brazzein, and a combination thereof.

In an embodiment of the present invention, the high-intensity sweetener may be those naturally occurring in plants and the like or those artificially produced (for example, bioconversion or chemosynthesis) but is preferably naturally occurring sweeteners. As used herein, the "naturally occurring" does not mean that a high-intensity sweet substance contained in the fruit juice beverage of the present invention is a natural product but a high-intensity sweet substance contained in the fruit juice beverage of the present invention may be a product artificially (for example, by bioconversion) produced (non-naturally occurring product) as long as the same substance naturally occurs.

Nonrestrictive examples of the sweetener (a) include rebaudioside A (RebA), rebaudioside D (RebD), rebaudioside M (RebM), neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Luo han guo plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components, and derivatives thereof, and combinations thereof. In a specific embodiment, the sweetener (a) contains RebA, RebD, RebM, a mogroside (for example, mogroside V) or a combination thereof. In another specific embodiment, the sweetener (a) contains RebA, RebD, RebM, a mogroside (for example, mogroside V), thaumatin, or a combination thereof. In a preferable embodiment of the present invention, the high-intensity sweetener contains at least one selected from the group consisting of RebA, RebD, RebM, mogroside V, a luo han guo extract, and a combination thereof. In an embodiment of the present invention, the sweetener (a) consists essentially of a sweetener other than major components of Stevia sweeteners such as RebA and stevioside. As used herein, "consists essentially of... " means that the sweetener used in the present invention can contain major component (s) of Stevia sweeteners as long as the effects of the invention are not affected. For example, preferably 90% or more, more preferably 95% or more, and still more preferably 98% or more of the sweetener (a) for use in the present invention consists of a sweetener other than RebA and stevioside.

RebA, RebD and RebM may be directly extracted from Stevia, or may be obtained by adding glucose to a compound having another structure, contained in a Stevia extract.

The Luo han guo extract as a sweetener is an extract of Luo han guo containing a sweet substance derived from Luo han guo, approved in various countries including Japan as a food additive and commercially available. Examples of the sweet substance derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property close to sucrose when compared with rebaudioside A. Mogroside V may be obtained from a luo han guo extract (for example, an alcohol extract of luo han guo) by purification with chromatography or the like. Alternatively, mogroside V may be obtained by adding glucose to a compound having another structure, contained in a luo han guo extract.

The Luo han guo extract preferably contains mogroside V and the ratio thereof is not limited and may be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more, or 75 wt% or more, of the total dry weight of a Luo han guo extract. The content of mogroside V can be determined by a known technique such as liquid chromatography. The Luo han guo extract can be obtained by extracting a fruit of Luo han guo (Siraitia grosvenorii) with a suitable solvent (for example, an aqueous solvent such as water, an alcohol solvent such as ethanol or methanol, a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, and may be, for example, one having a purity of 80% or more, 85% or more, 90% or more, 91% or more, 92% or more, 93% or more, 94% or more, 95% or more, 96% or more, 97% or more or 98% or more. Mogroside V obtained by purification of a luo han guo extract, of course, has a smaller amount of incorporation of a luo han guo extract component other than mogroside V, as it has a higher purity.

In other embodiments of the present invention, mogroside V may also be one having a low purity, and may be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of MogV having a purity of about 65% is about 175. In other embodiments of the present invention, a luo han guo extract containing about 30 wt% of MogV may be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity X1, as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside A is 200 to 300 (median value 250), a degree of sweetness of rebaudioside N is 200 to 250 (median value 225), a degree of sweetness of rebaudioside O is 200 to 250 (median value 225), a degree of sweetness of rebaudioside E is 70 to 80 (median value 75), a degree of sweetness of a luo han guo extract (containing 40% of MogV) is about 130, a degree of sweetness of mogroside V is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the fruit juice beverage is a sweetness intensity of the high-intensity sweetener. When X1 of such a sweetener is herein determined, the above degrees of sweetness (median value when a numerical value range is shown) are used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, a sweetener whose degree of sweetness is different with respect to each literature, a relative ratio of a degree of sweetness of sucrose to a degree of sweetness of 1 can be determined by a sensory test. Examples of such a sensory test include a method involving preparing samples where sucrose is added to pure water, of Brix 3.0 to 5.0 by 0.5, and selecting a sample where sucrose is added, having a sweetness intensity equal to that of an aqueous solution having a predetermined concentration of sweetener, among such samples.

In an embodiment of the present invention, the high-intensity sweetener contains at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener contains at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, aspartame, acesulfame K, sucralose, a Glycyrrhiza extract, saccharine, and a combination thereof.

In some embodiments, the sweetener (a) contains the following combinations: RebA and RebM, RebA and RebD, RebD and RebM, RebA and RebD and RebM, RebA and mogroside V, RebD and mogroside V, RebM and mogroside V, RebA and RebM and mogroside V, RebA and RebD and mogroside V, RebD and RebM and mogroside V, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebA and brazzein, RebD and brazzein, RebM and brazzein, mogroside V and brazzein, neohesperidin dihydrochalcone and brazzein, RebM and RebD and brazzein, RebM and RebD and brazzein and mogroside V, RebM and RebD and brazzein and neohesperidin dihydrochalcone, or RebM and RebD and brazzein and mogroside V and neohesperidin dihydrochalcone.

In another embodiment, the sweetener (a) contains the following combinations: RebA and thaumatin, RebD and thaumatin, RebM and thaumatin, mogroside V and thaumatin, RebA and RebM and thaumatin, RebA and RebD and thaumatin, RebD and RebM and thaumatin, RebA and mogroside V and thaumatin, RebD and mogroside V and thaumatin, RebM and mogroside V and thaumatin, or RebD and RebM and mogroside V and thaumatin.

In an embodiment of the present invention, the sweetener (a) may contain a high-intensity sweetener selected from rebaudioside A, rebaudioside D, rebaudioside M, mogroside V, a luo han guo extract, and a combination thereof, preferably one or more high-intensity sweeteners selected from rebaudioside D, rebaudioside M, and a combination thereof.

The amount of the sweetener (a) contained in the fruit juice beverage of an embodiment of the present invention is, in the case when the sweetener (a) contains a combination of a plurality of sweet substances, an amount of all of these sweet substances combined. When an amount of the sweetener (a) is Pa (ppm), Pa can be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300, or about 200 to about 250.

In an embodiment of the present invention, an amount Pa ppm of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

[Amino acids or derivatives or salts thereof]

The fruit juice beverage of the present invention contains (b) an amino acid or a derivative or a salt thereof in an amount less than a taste recognition threshold. The amino acids or amino acid salts used in the present invention are organic compounds having both functional groups of an amino group and a carboxyl group, or salts thereof, and not particularly limited as long as a sweetness enhancement effect can be obtained. Additionally, proline and hydroxyproline, which form a cyclic structure in which the hydrogen of the amino group is substituted with a side chain moiety in a molecule, are also encompassed in the amino acid in the present description. The amino acid derivatives which can be used in the present invention encompass derivatives having no carboxyl group such as taurine. In an embodiment of the present invention, the amino acid means a free amino acid.

The amino acids used in the present invention may be the D-configuration, the L-configuration, or the racemic configuration consisting of the D-configuration and the L-configuration (hereinafter, also referred to as the DL-amino acid). In an embodiment of the present invention, the amino acid can be selected from neutral amino acids, basic amino acids, and acidic amino acids. The neutral amino acid can be preferably selected from glycine, alanine, valine, isoleucine, leucine and the like which have an alkyl group, serine, threonine and the like which have an OH group (a hydroxy group), tyrosine, phenylalanine, tryptophan and the like which have an aromatic group (or an aromatic ring), methionine, cysteine and the like which have a sulfur-containing group, proline, hydroxyproline and the like which have an imino group, and glutamine, asparagine and the like which have an amide group. The basic amino acid can be preferably selected from arginine, lysine, histidine and the like. The acidic amino acid can be preferably selected from glutamic acid, aspartic acid and the like. In a preferable embodiment of the present invention, the amino acids are selected from the neutral amino acids or the basic amino acids. In other preferable embodiments of the present invention, the amino acids include amino acids selected from, of the basic amino acids and the neutral amino acids, amino acids having an alkyl group, an OH group or an amide group on a side chain and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the fruit juice beverage in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan (Trp), tyrosine (Tyr), valine (Val), selenosysteine (Sec) and pyrrolysine (Pyl).

The amino acid contained in the fruit juice beverage in an embodiment of the present invention is one or more selected from an amino acid having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and still more preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cystine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine hydrochloride (L-histidine monohydrochloride), L-hydroxyproline, L-isoleucine, L-lysine, L-lysine solution, L-lysine L-aspartate, L-lysine hydrochloride (also known as L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, L-valine, L-theanine, L-ornithine, and taurine. In an embodiment of the present invention, a plurality species of amino acids may be used in combination. In an embodiment of the present invention, the amino acid comprises an amino acid selected from glycine, alanine, valine, isoleucine, leucine, serine, threonine, glutamine, asparagine, arginine, lysine, histidine, and a combination thereof.

In an embodiment of the present invention, the amino acid or a derivative or a salt thereof may comprise an amino acid selected from DL-alanine, L-serine, glycine, L-arginine, L-glutamic acid, L-valine and L-glutamine. In another embodiment of the present invention, the amino acid or a derivative or a salt thereof may comprise one or more amino acids selected from arginine, lysine, histidine, phenylalanine, tyrosine, leucine, isoleucine, methionine, valine, alanine, glycine, proline, glutamic acid, serine, threonine, aspartic acid and tryptophan. In still another embodiment of the present invention, the amino acid or a derivative or a salt thereof may comprise one or more amino acids selected from arginine, valine, alanine, glycine, proline, glutamic acid, serine, threonine, aspartic acid and tryptophan.

As used herein, the threshold of amino acids means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, a detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., "WHOLE MOUTH GUSTATORY TEST (PART1)-BASIC CONSIDERATIONS AND PRINCIPAL COMPONENT ANALYSIS-", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold. In an embodiment of the present invention, the taste recognition threshold of an amino acid means a taste recognition threshold in pure water. The taste recognition threshold in pure water means a minimum concentration at which such a taste can be recognized when only an amino acid is added to water without addition of any sweetener or the like.

In an embodiment of the present invention, the fruit juice beverage contains glycine and a content of glycine may be more than 0 mM and 80 mM or less, 75 mM or less, less than 75 mM, 70 mM or less, 65 mM or less, 60 mM or less, 55 mM or less, 50 mM or less, less than 50 mM, 45 mM or less, 40 mM or less, 35 mM or less, 30 mM or less, 25 mM or less, 20 mM or less, 15 mM or less, or 10 mM or less. Alternatively, such a content may be 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM or 20 to 30 mM.

In an embodiment of the present invention, the fruit juice beverage contains alanine and a content of alanine may be more than 0 mM and 32.4 mM or less, 30 mM or less, less than 30 mM, 25 mM or less, 20 mM or less, less than 20 mM, 15 mM or less, or 10 mM or less. Alternatively, such a content may be 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 mM or more and less than 20 mM, 1 to 19 mM, 5 to 19 mM, 10 to 19 mM, 15 to 19 mM, 1 to 18 mM, 5 to 18 mM, 10 to 18 mM, 15 to 18 mM, 1 to 17 mM, 5 to 17 mM, 10 to 17 mM, 15 to 17 mM, 1 to 16 mM, 5 to 16 mM, 10 to 16 mM or 15 to 16 mM. Alanine may be either the L-configuration, the D-configuration or the racemic configuration (DL-configuration) but is preferably the L-configuration.

In an embodiment of the present invention, the fruit juice beverage contains valine and a content of valine may be more than 0 mM and 50 mM or less, less than 50 mM, 45 mM or less, 40 mM or less, less than 40 mM, 35 mM or less, 30 mM or less, less than 30 mM, 25 mM or less, 20 mM or less, 15 mM or less, or 10 mM or less. Alternatively, such a content may be 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 1 mM or more and less than 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 1 mM or more and less than 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 10 to 15 mM or 15 to 20 mM. Valine may be either the L-configuration, the D-configuration or the racemic configuration (DL-configuration) but is preferably the L-configuration.

In an embodiment of the present invention, the fruit juice beverage contains isoleucine and a content of isoleucine may be more than 0 mM and 25 mM or less, 20 mM or less, 15 mM or less, 10 mM or less, or 5 mM or less. Alternatively, such a content may be 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 to 15 mM, 5 to 15 mM, or 10 to 15 mM. Isoleucine may be either the L-configuration, the D-configuration or the racemic configuration (DL-configuration) but is preferably the L-configuration.

In an embodiment of the present invention, the fruit juice beverage contains leucine and a content of leucine may be more than 0 mM and 50 mM or less, 45 mM or less, 40 mM or less, 35 mM or less, 30 mM or less, less than 30 mM, 25 mM or less, 20 mM or less, less than 20 mM, 15 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 50 mM, 2 to 50 mM, 3 to 50 mM, 4 to 50 mM, 5 to 50 mM, 6 to 50 mM, 7 to 50 mM, 8 to 50 mM, 9 to 50 mM, 10 to 50 mM, 1 to 40 mM, 2 to 40 mM, 3 to 40 mM, 4 to 40 mM, 5 to 40 mM, 6 to 40 mM, 7 to 40 mM, 8 to 40 mM, 9 to 40 mM, 10 to 40 mM, 1 to 30 mM, 2 to 30 mM, 3 to 30 mM, 4 to 30 mM, 5 to 30 mM, 6 to 30 mM, 7 to 30 mM, 8 to 30 mM, 9 to 30 mM, 1 to 20 mM, 1 mM or more and less than 20 mM, 2 to 20 mM, 3 to 20 mM, 4 to 20 mM, 5 to 20 mM, 6 to 20 mM, 7 to 20 mM, 8 to 20 mM, 9 to 20 mM, 15 to 50 mM, 15 to 45 mM, 15 to 40 mM, 15 to 35 mM, 15 to 30 mM, 15 to 25 mM, 15 to 20 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, or 9 to 10 mM. Leucine may be either the L-configuration, the D-configuration or the racemic configuration (DL-configuration) but is preferably the L-configuration.

In an embodiment of the present invention, the fruit juice beverage contains serine and a content of serine may be more than 0 mM and 130 mM or less, 100 mM or less, 80 mM or less, 50 mM or less, less than 50 mM, 45 mM or less, 40 mM or less, less, than 40 mM, 35 mM or less, 30 mM or less, 25 mM or less, 20 mM or less, 15 mM or less, or 10 mM or less. Alternatively, such a content may be 10 to 130 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, 20 to 30 mM, 5 to 45 mM, 5 to 40 mM, 5 to 35 mM, 5 to 30 mM, 5 to 25 mM, 5 to 20 mM, 5 to 15 mM, 5 to 10 mM, 1 to 45 mM, 1 to 40 mM, 1 mM or more and less than 40 mM, 1 to 35 mM, 1 to 30 mM, 1 to 25 mM, 1 to 20 mM, 1 to 15 mM, or 1 to 10 mM. Serine may be either the L-configuration, the D-configuration or the racemic configuration (DL-configuration) but is preferably the L-configuration.

In an embodiment of the present invention, the fruit juice beverage contains threonine and a content of threonine may be more than 0 mM and 70 mM or less, 65 mM or less, 60 mM or less, 55 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 70 mM, 1 to 65 mM, 1 to 60 mM, 1 to 55 mM, 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 1 mM or more and less than 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, or 15 to 20 mM. Threonine may be either the L-configuration, the D-configuration or the racemic configuration (DL-configuration) but is preferably the L-configuration.

In an embodiment of the present invention, the fruit juice beverage contains phenylalanine and a content of phenylalanine may be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Phenylalanine may be either the L-configuration, the D-configuration or the racemic configuration (DL-configuration) but is preferably the L-configuration.

In an embodiment of the present invention, the fruit juice beverage contains tryptophan and a content of tryptophan may be more than 0 mM and 5 mM or less, 4 mM or less, 3 mM or less, 2 mM or less, or 1 mM or less. Alternatively, such a content may be 1 to 5 mM, 2 to 5 mM, 3 to 5 mM or 4 to 5 mM. Tryptophan may be either the L-configuration, the D-configuration or the racemic configuration (DL-configuration) but is preferably the L-configuration.

In an embodiment of the present invention, the fruit juice beverage contains methionine and a content of methionine may be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Methionine may be either the L-configuration, the D-configuration or the racemic configuration (DL-configuration) but is preferably the L-configuration.

In an embodiment of the present invention, the fruit juice beverage contains proline and a content of proline may be more than 0 mM and 120 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 120 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 1 mM or more and less than 40 mM, 10 to 40 mM, 20 to 40 mM, 30 to 40 mM, 1 to 30 mM, 5 to 30 mM, 10 to 30 mM, 15 to 30 mM, 20 to 30 mM, or 25 to 30 mM. Proline may be either the L-configuration, the D-configuration or the racemic configuration (DL-configuration) but is preferably the L-configuration.

In an embodiment of the present invention, the fruit juice beverage contains glutamine and a content of glutamine may be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, less than 5 mM, 4 mM or less, 3 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, 9 to 10 mM, 1 to 8 mM, 2 to 8 mM, 3 to 8 mM, 4 to 8 mM, 5 to 8 mM, 6 to 8 mM, 7 to 8 mM, 1 to 7 mM, 2 to 7 mM, 3 to 7 mM, 4 to 7 mM, 5 to 7 mM, 6 to 7 mM, 1 to 6 mM, 2 to 6 mM, 3 to 6 mM, 4 to 6 mM, 5 to 6 mM, 1 to 5 mM, 1 mM or more and less than 5 mM, 2 to 5 mM, 3 to 5 mM, 4 to 5 mM, 1 to 4 mM, 2 to 4 mM, 3 to 4 mM, 1 to 3 mM, or 2 to 3 mM. Glutamine may be either the L-configuration, the D-configuration or the racemic configuration (DL-configuration) but is preferably the L-configuration.

In an embodiment of the present invention, the fruit juice beverage contains asparagine and a content of asparagine may be more than 0 mM and 20 mM or less, less than 20 mM, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 5 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, 9 to 10 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM or 0.5 to 1.0 mM. Asparagine may be either the L-configuration, the D-configuration or the racemic configuration (DL-configuration) but is preferably the L-configuration.

In an embodiment of the present invention, the fruit juice beverage contains arginine and a content of arginine may be more than 0 mM and 4.0 mM or less, 3.5 mM or less, 3.0 mM or less, 2.5 mM or less, less than 2.5 mM, 2.0 mM or less, 1.5 mM or less, 1.0 mM or less, less than 1.0 mM, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 mM or more and less than 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Arginine may be either the L-configuration, the D-configuration or the racemic configuration (DL-configuration) but is preferably the L-configuration.

In an embodiment of the present invention, the fruit juice beverage contains lysine and a content of lysine may be more than 0 mM and 3.0 mM or less, 2.5 mM or less, 2.0 mM or less, 1.5 mM or less, 1.0 mM or less, or 0.5 mM or less. Alternatively, such a content may be 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Lysine may be either the L-configuration, the D-configuration or the racemic configuration (DL-configuration) but is preferably the L-configuration.

In an embodiment of the present invention, the fruit juice beverage contains lysine monohydrochloride and a content of lysine monohydrochloride may be more than 0 mM and 1.0 mM or less, 0.9 mM or less, 0.8 mM or less, 0.7 mM or less, 0.6 mM or less, 0.5 mM or less, less than 0.5 mM, 0.4 mM or less, less than 0.4 mM, 0.3 mM or less, or 0.2 mM or less. Alternatively, such a content may be 0.1 to 1.0 mM, 0.1 to 0.9 mM, 0.1 to 0.8 mM, 0.1 to 0.7 mM, 0.1 to 0.6 mM, 0.1 to 0.5 mM, 0.1 to 0.4 mM, 0.1 mM or more and less than 0.4 mM, 0.1 to 0.3 mM, 0.1 to 0.2 mM, 0.2 to 1.0 mM, 0.5 to 0.8 mM, 0.2 to 0.6 mM, 0.2 to 0.4 mM, or 0.3 to 0.5 mM. Lysine may be either the L-configuration, the D-configuration or the racemic configuration (DL-configuration) but is preferably the L-configuration.

In an embodiment of the present invention, the fruit juice beverage contains histidine and a content of histidine may be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Histidine may be either the L-configuration, the D-configuration or the racemic configuration (DL-configuration) but is preferably the L-configuration.

In an embodiment of the present invention, the fruit juice beverage contains glutamic acid and a content of glutamic acid may be more than 0 mM and 0.50 mM or less, less than 0.50 mM, 0.40 mM or less, less than 0.40 mM, 0.35 mM or less, 0.30 mM or less, 0.25 mM or less, less than 0.25 mM, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less, or 0.01 mM or less. Alternatively, such a content may be 0.01 to 0.15 mM, 0.02 to 0.15 mM, 0.03 to 0.15 mM, 0.04 to 0.15 mM, 0.05 to 0.15 mM, 0.06 to 0.15 mM, 0.07 to 0.15 mM, 0.08 to 0.15 mM, 0.09 to 0.15 mM, 0.10 to 0.15 mM, 0.01 to 0.12 mM, 0.02 to 0.12 mM, 0.03 to 0.12 mM, 0.04 to 0.12 mM, 0.05 to 0.12 mM, 0.06 to 0.12 mM, 0.07 to 0.12 mM, 0.08 to 0.12 mM, 0.09 to 0.12 mM, 0.10 to 0.12 mM, 0.01 to 0.10 mM, 0.02 to 0.10 mM, 0.03 to 0.10 mM, 0.04 to 0.10 mM, 0.05 to 0.10 mM, 0.06 to 0.10 mM, 0.07 to 0.10 mM, 0.08 to 0.10 mM, 0.09 to 0.10 mM, 0.10 to 0.40 mM, 0.10 to 0.35 mM, 0.10 to 0.30 mM, 0.10 to 0.25 mM, 0.10 mM or more and less than 0.25 mM, 0.10 to 0.20 mM, 0.10 to 0.15 mM, 0.20 to 0.40 mM, 0.20 to 0.35 mM, 0.20 to 0.30 mM, 0.20 to 0.25 mM, or 0.30 to 0.40 mM. Glutamic acid may be either the L-configuration, the D-configuration or the racemic configuration (DL-configuration) but is preferably the L-configuration.

In an embodiment of the present invention, the fruit juice beverage contains aspartic acid and a content of aspartic acid may be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content may be 0.1 to 1.5 mM, 0.2 to 1.5 mM, 0.3 to 1.5 mM, 0.4 to 1.5 mM, 0.5 to 1.5 mM, 0.6 to 1.5 mM, 0.7 to 1.5 mM, 0.8 to 1.5 mM, 0.9 to 1.5 mM, 1.0 to 1.5 mM, 0.1 to 1.2 mM, 0.2 to 1.2 mM, 0.3 to 1.2 mM, 0.4 to 1.2 mM, 0.5 to 1.2 mM, 0.6 to 1.2 mM, 0.7 to 1.2 mM, 0.8 to 1.2 mM, 0.9 to 1.2 mM, 1.0 to 1.2 mM, 0.1 to 1.0 mM, 0.2 to 1.0 mM, 0.3 to 1.0 mM, 0.4 to 1.0 mM, 0.5 to 1.0 mM, 0.6 to 1.0 mM, 0.7 to 1.0 mM, 0.8 to 1.0 mM, or 0.9 to 1.0 mM. Aspartic acid may be either the L-configuration, the D-configuration or the racemic configuration (DL-configuration) but is preferably the L-configuration.

The fruit juice beverage in an embodiment of the present invention does not contain monosodium aspartate as the amino acid salt.

A content of the amino acid can be measured by an amino acid automatic analysis method or high-performance liquid chromatography. When an amount of the amino acid contained in the beverage is known, a value calculated from the amount contained can be adopted.

When a fruit-derived amino acid contained in a fruit juice is contained, the amino acid is also encompassed in the amino acid in the fruit juice beverage of the present invention. Thus, an amount of the amino acid contained in the fruit juice beverage of the present invention is a total value of amounts of fruit juice-derived one and one added externally. In an embodiment of the present invention, when a plurality of amino acids are contained in the fruit juice beverage, a content of at least one of such amino acids may be less than the taste recognition threshold, or contents of some of such amino acids may be more than the taste recognition threshold. In other embodiments of the present invention, when a plurality of amino acids are contained in the fruit juice beverage, a content of each of such amino acids may be less than the taste recognition threshold. The fruit juice beverage in still another embodiment of the present invention may contain one or more amino acids selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine and less than 0.4 mM of L-lysine monohydrochloride. The fruit juice beverage in still another embodiment of the present invention may contain one or more amino acids selected from 1 mM or more and less than 20 mM of DL-alanine, 1 mM or more and less than 40 mM of L-serine, 1 mM or more and less than 50 mM of glycine, 0.1 mM or more and less than 1.0 mM of L-arginine, 0.10 mM or more and less than 0.25 mM of L-glutamic acid, 1 mM or more and less than 40 mM of L-valine, 1 mM or more and less than 5 mM of L-glutamine, 1 mM or more and less than 20 mM of L-leucine, 1 mM or more and less than 40 mM of L-threonine, 1 mM or more and less than 40 mM of L-proline, 1 mM or more and less than 10 mM of L-asparagine and 0.1 mM or more and less than 0.4 mM of L-lysine monohydrochloride.

[Sodium]

The fruit juice beverage of the present invention comprises (c) sodium in an amount of less than 50 mg/100 ml, and it is meant that a content of sodium atoms is less than 50 mg/100 ml. A content of sodium may be, depending on an embodiment, a content of 0.1 mg/100 ml or more and less than 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 mg/100 ml or more and less than 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 mg/100 ml or more and less than 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 mg/100 ml or more and less than 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 mg/100 ml or more and less than 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 mg/100 ml or more and less than 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 mg/100 ml or more and less than 50 mg/100 ml, 20 to 45 mg/100 ml, 20 to 40 mg/100 ml, 20 to 35 mg/100 ml, 20 to 30 mg/100 ml, 20 to 25 mg/100 ml, 25 mg/100 ml or more and less than 50 mg/100 ml, 25 to 45 mg/100 ml, 25 to 40 mg/100 ml, 25 to 35 mg/100 ml, or 25 to 30 mg/100 ml.

A content of sodium may be, depending on an embodiment, a content of 0.1 to 22 mg/100 ml, 0.1 to 21 mg/100 ml, 1 to 22 mg/100 ml, 1 to 21 mg/100 ml, 4 to 40 mg/100 ml, 4 to 35 mg/100 ml, 4 to 34 mg/100 ml, 4 to 33 mg/100 ml, 4 to 32 mg/100 ml, 4 to 31 mg/100 ml, 4 to 30 mg/100 ml, 4 to 29 mg/100 ml, 4 to 26 mg/100 ml, 4 to 25 mg/100 ml, 4 to 22 mg/100 ml, 4 to 21 mg/100 ml, 4 to 20 mg/100 ml, 4 to 19 mg/100 ml, 4 to 18 mg/100 ml, 4 to 17 mg/100 ml, 4 to 16 mg/100 ml, 4 to 15 mg/100 ml, 4 to 14 mg/100 ml, 4 to 13 mg/100 ml, 4 to 12 mg/100 ml, 4 to 11 mg/100 ml, 4 to 10 mg/100 ml, 5 to 34 mg/100 ml, 5 to 33 mg/100 ml, 5 to 32 mg/100 ml, 5 to 31 mg/100 ml, 5 to 29 mg/100 ml, 5 to 22 mg/100 ml, 5 to 21 mg/100 ml, 10 to 34 mg/100 ml, 10 to 33 mg/100 ml, 10 to 32 mg/100 ml, 10 to 31 mg/100 ml, 10 to 29 mg/100 ml, 10 to 22 mg/100 ml, 10 to 21 mg/100 ml, 11.5 to 34 mg/100 ml, 11.5 to 33 mg/100 ml, 11.5 to 32 mg/100 ml, 11.5 to 31 mg/100 ml, 11.5 to 30 mg/100 ml, 11.5 to 29 mg/100 ml, 11.5 to 22 mg/100 ml, 11.5 to 21 mg/100 ml, 11.5 to 20 mg/100 ml, 11.5 to 19 mg/100 ml, 11.5 to 18 mg/100 ml, 11.5 to 17 mg/100 ml, 11.5 to 16 mg/100 ml, 11.5 to 15 mg/100 ml, 11.5 to 14 mg/100 ml, 11.5 to 13 mg/100 ml, 11.5 to 12 mg/100 ml, 5.75 to 34.5 mg/100 ml, 5.75 to 28.75 mg/100 ml, 5.75 to 23 mg/100 ml, 5.75 to 17.25 mg/100 ml, 5.75 to 11.5 mg/100 ml, 11.5 to 34.5 mg/100 ml, 11.5 to 28.75 mg/100 ml, 11.5 to 23 mg/100 ml, 11.5 to 17.25 mg/100 ml, 17.25 to 34.5 mg/100 ml, 17.25 to 28.75 mg/100 ml, 17.25 to 23 mg/100 ml, 23 to 34.5 mg/100 ml, 23 to 28.75 mg/100 ml or 28.75 to 34.5 mg/100 ml.

An amount of sodium added to the fruit juice beverage may be an amount added of 0.1 to 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 to 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 to 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 to 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 to 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 to 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 to 50 mg/100 ml, 20 to 45 mg/100 ml, 20 to 40 mg/100 ml, 20 to 35 mg/100 ml, 20 to 30 mg/100 ml, 20 to 25 mg/100 ml, 25 to 50 mg/100 ml, 25 to 45 mg/100 ml, 25 to 40 mg/100 ml, 25 to 35 mg/100 ml or 25 to 30 mg/100 ml.

The sodium is not particularly limited in terms of the form thereof as long as it is contained in an ingestible form in the fruit juice beverage of the present invention, and may be, for example, in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, sodium glutamate, sodium tartrate, sodium aspartate, sodium lactate, casein sodium, sodium ascorbate and a mixture thereof.

When sodium is contained in a fruit juice, such fruit juice-derived sodium is also encompassed in the sodium contained in the fruit juice beverage of the present invention.

In an embodiment of the present invention, sodium components (for example, sodium benzoate, sodium sulfite, sodium hyposulfite, sodium dehydroacetate, sodium pyrosulfite, and sodium propionate) used as preservatives are not substantially included in the component (c).

A content of sodium in the beverage can be herein measured by an atomic absorption method. When the amount of sodium-containing compounds contained in the beverage is known, a value calculated from the amount contained can be adopted.

In an embodiment of the present invention, an amount of the sodium contained in the fruit juice beverage can be defined as an amount of a sodium source. The "sodium source" means a compound which can produce a sodium ion when the fruit juice beverage is placed in the mouth. An amount of the sodium source may be less than 20 mM. In other embodiments of the present invention, an amount of the sodium source is about 19 mM or less, about 18 mM or less, about 17 mM or less, about 16 mM or less, about 15 mM or less, about 14 mM or less, about 13 mM or less, about 12 mM or less, about 11 mM or less, about 10 mM or less, about 9.0 mM or less, about 8.5 mM or less, about 8.0 mM or less, about 8.5 mM or less, about 7.0 mM or less, about 7.5 mM or less, about 6.0 mM or less, about 5.5 mM or less, about 5.0 mM or less, about 4.5 mM or less, about 4.0 mM or less, about 3.5 mM or less, about 2.0 mM or less, about 1.5 mM or less, about 1.0 mM or less, or about 0.5 mM or less. In other embodiments, an amount of the sodium source may be in a range of about 0.1 to about 19 mM, about 0.5 to about 19 mM, about 1.0 to about 19 mM, about 1.5 to about 19 mM, about 2. 0 to about 19 mM, about 2.5 to about 19 mM, about 3.0 to about 19 mM, about 3.5 to about 19 mM, about 4.0 to about 19 mM, about 4.5 to about 19 mM, about 5.0 to about 19 mM, about 5.5 to about 19 mM, about 6.0 to about 19 mM, about 6.5 to about 19 mM, about 7.0 to about 19 mM, about 7.5 to about 19 mM, about 8.0 to about 19 mM, about 8.5 to about 19 mM, about 9.0 to about 19 mM, about 9.5 to about 19 mM, about 0.1 to about 15 mM, about 0.5 to about 15 mM, about 1.0 to about 15 mM, about 1.5 to about 15 mM, about 2.0 to about 15 mM, about 2.5 to about 15 mM, about 3.0 to about 15 mM, about 3.5 to about 15 mM, about 4.0 to about 15 mM, about 4.5 to about 15 mM, about 5.0 to about 15 mM, about 5.5 to about 15 mM, about 6.0 to about 15 mM, about 6.5 to about 15 mM, about 7.0 to about 15 mM, about 7.5 to about 15 mM, about 8.0 to about 15 mM, about 8.5 to about 15 mM, about 9.0 to about 15 mM, about 9.5 to about 15 mM, about 0.1 to about 9.9 mM, about 0.5 to about 9.9 mM, about 1.0 to about 9.9 mM, about 1.5 to about 9.9 mM, about 2.0 to about 9.9 mM, about 2.5 to about 9.9 mM, about 3.0 to about 9.9 mM, about 3.5 to about 9.9 mM, about 4.0 to about 9.9 mM, about 4.5 to about 9.9 mM, about 5.0 to about 9.9 mM, about 5.5 to about 9.9 mM, about 6.0 to about 9.9 mM, about 6.5 to about 9.9 mM, about 7.0 to about 9.9 mM, about 7.5 to about 9.9 mM, about 8.0 to about 9.9 mM, about 8.5 to about 9.9 mM, about 9.0 to about 9.9 mM, about 9.5 to about 9.9 mM, about 0.1 to about 9.5 mM, about 0.1 to about 9.0 mM, about 0.1 to about 8.5 mM, about 0.1 to about 8.0 mM, about 0.1 to about 7.5 mM, about 0.1 to about 7.0 mM, about 0.1 to about 6.5 mM, about 0.1 to about 6.0 mM, about 0.1 to about 5.5 mM, about 0.1 to about 5.0 mM, about 0.1 to about 4.5 mM, about 0.1 to about 4.0 mM, about 0.1 to about 3.5 mM, about 0.1 to about 3.0 mM, about 0.1 to about 2.5 mM, about 0.1 to about 2.0 mM, about 0.1 to about 1.5 mM, about 0.1 to about 1.0 mM, about 0.1 to about 0.5 mM, about 0.5 to about 9.5 mM, about 0.5 to about 9.5 mM, about 0.5 to about 9.0 mM, about 0.5 to about 8.5 mM, about 0.5 to about 8.0 mM, about 0.5 to about 7.5 mM, about 0.5 to about 7.0 mM, about 0.5 to about 6.5 mM, about 0.5 to about 6.0 mM, about 0.5 to about 5.5 mM, about 0.5 to about 5.0 mM, about 0.5 to about 4.5 mM, about 0.5 to about 4.0 mM, about 0.5 to about 3.5 mM, about 0.5 to about 3.0 mM, about 0.5 to about 2.5 mM, about 0.5 to about 2.0 mM, about 0.5 to about 1.5 mM, about 0.5 to about 1.0 mM, about 1.0 to about 9.5 mM, about 1.0 to about 9.0 mM, about 1.0 to about 8.5 mM, about 1.0 to about 8.0 mM, about 1.0 to about 7.5 mM, about 1.0 to about 7.0 mM, about 1.0 to about 6.5 mM, about 1.0 to about 6.0 mM, about 1.0 to about 5.5 mM, about 1.0 to about 5.0 mM, about 1.0 to about 4.5 mM, about 1.0 to about 4.0 mM, about 1.0 to about 3.5 mM, about 1.0 to about 3.0 mM, about 1.0 to about 2.5 mM, about 1.0 to about 2.0 mM, about 1.0 to about 1.5 mM, about 1.5 to about 9.5 mM, about 1.5 to about 9.0 mM, about 1.5 to about 8.5 mM, about 1.5 to about 8.0 mM, about 1.5 to about 7.5 mM, about 1.5 to about 7.0 mM, about 1.5 to about 6.5 mM, about 1.5 to about 6.0 mM, about 1.5 to about 5.5 mM, about 1.5 to about 5.0 mM, about 1.5 to about 4.5 mM, about 1.5 to about 4.0 mM, about 1.5 to about 3.5 mM, about 1.5 to about 3.0 mM, about 1.5 to about 2.5 mM, about 1.5 to about 2.0 mM, about 2.0 to about 9.5 mM, about 2.0 to about 9.0 mM, about 2.0 to about 8.5 mM, about 2.0 to about 8.0 mM, about 2.0 to about 7.5 mM, about 2.0 to about 7.0 mM, about 2.0 to about 6.5 mM, about 2.0 to about 6.0 mM, about 2.0 to about 5.5 mM, about 2.0 to about 5.0 mM, about 2.0 to about 4.5 mM, about 2.0 to about 4.0 mM, about 2.0 to about 3.5 mM, about 2.0 to about 3.0 mM, about 2.0 to about 2.5 mM, about 2.5 to about 9.5 mM, about 2.5 to about 9.0 mM, about 2.5 to about 8.5 mM, about 2.5 to about 8.0 mM, about 2.5 to about 7.5 mM, about 2.5 to about 7.0 mM, about 2.5 to about 6.5 mM, about 2.5 to about 6.0 mM, about 2.5 to about 5.5 mM, about 2.5 to about 5.0 mM, about 2.5 to about 4.5 mM, about 2.5 to about 4.0 mM, about 2.5 to about 3.5 mM, about 2.5 to about 3.0 mM, about 3.0 to about 9.5 mM, about 3.0 to about 9.0 mM, about 3.0 to about 8.5 mM, about 3.0 to about 8.0 mM, about 3.0 to about 7.5 mM, about 3.0 to about 7.0 mM, about 3.0 to about 6.5 mM, about 3.0 to about 6.0 mM, about 3.0 to about 5.5 mM, about 3.0 to about 5.0 mM, about 3.0 to about 4.5 mM, about 3.0 to about 4.0 mM, about 3.0 to about 3.5 mM, about 3.5 to about 9.5 mM, about 3.5 to about 9.0 mM, about 3.5 to about 8.5 mM, about 3.5 to about 8.0 mM, about 3.5 to about 7.5 mM, about 3.5 to about 7.0 mM, about 3.5 to about 6.5 mM, about 3.5 to about 6.0 mM, about 3.5 to about 5.5 mM, about 3.5 to about 5.0 mM, about 3.5 to about 4.5 mM, about 3.5 to about 4.0 mM, about 4.0 to about 9.5 mM, about 4.0 to about 9.0 mM, about 4.0 to about 8.5 mM, about 4.0 to about 8.0 mM, about 4.0 to about 7.5 mM, about 4.0 to about 7.0 mM, about 4.0 to about 6.5 mM, about 4.0 to about 6.0 mM, about 4.0 to about 5.5 mM, about 4.0 to about 5.0 mM, about 4.0 to about 4.5 mM, about 4.5 to about 9.5 mM, about 4.5 to about 9.0 mM, about 4.5 to about 8.5 mM, about 4.5 to about 8.0 mM, about 4.5 to about 7.5 mM, about 4.5 to about 7.0 mM, about 4.5 to about 6.5 mM, about 4.5 to about 6.0 mM, about 4.5 to about 5.5 mM, about 4.5 to about 5.0 mM, about 5.0 to about 9.5 mM, about 5.0 to about 9.0 mM, about 5.0 to about 8.5 mM, about 5.0 to about 8.0 mM, about 5.0 to about 7.5 mM, about 5.0 to about 7.0 mM, about 5.0 to about 6.5 mM, about 5.0 to about 6.0 mM, about 5.0 to about 5.5 mM, about 5.5 to about 9.5 mM, about 5.5 to about 9.0 mM, about 5.5 to about 8.5 mM, about 5.5 to about 8.0 mM, about 5.5 to about 7.5 mM, about 5.5 to about 7.0 mM, about 5.5 to about 6.5 mM, about 5.5 to about 6.0 mM, about 6.0 to about 9.5 mM, about 6.0 to about 9.0 mM, about 6.0 to about 8.5 mM, about 6.0 to about 8.0 mM, about 6.0 to about 7.5 mM, about 6.0 to about 7.0 mM, about 6.0 to about 6.5 mM, about 6.5 to about 9.5 mM, about 6.5 to about 9.0 mM, about 6.5 to about 8.5 mM, about 6.5 to about 8.0 mM, about 6.5 to about 7.5 mM, about 6.5 to about 7.0 mM, about 7.0 to about 9.5 mM, about 7.0 to about 9.0 mM, about 7.0 to about 8.5 mM, about 7.0 to about 8.0 mM, or about 7.0 to about 7.5 mM.

[Optional component]

(Sweetener)

The fruit juice beverage of the present invention can contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners. Note that, when fruit-derived sweeteners (fructose and the like) are contained in a fruit juice, such sweeteners are also included in the sweeteners here described.

The carbohydrate sweetener is not limited and include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharides, Coupling Sugar[R], galactooligosaccharides, lactosucrose, raffinose, soyoligosaccharide, and honey. Further, the carbohydrate-based sweetener includes rare sugars.

The rare sugar refers to a monosaccharide that occurs in very small quantities in nature and derivatives thereof.

For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, and fructose.

The non-caloric sweeteners typically refer to those having the nature of being difficult to be digested in the body and consequently having a reduced energy to be taken into and mean sweet substances having an energy of less than 2 kcal/g, preferably less than 1 kcal/g, and still more preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substances having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, or sweet substances having an energy of 0 kcal/g or more and less than 1 kcal/g. Examples of the sweet substances having an energy of 4 kcal/g or more include sucrose, lactose, glucose, maltose, starch syrup, a high-fructose corn syrup, and fructose, examples of the sweet substances having an energy of 2 kcal/g or more and less than 4 kcal/g include sorbitol, xylitol, D-xylose, D-ribose, D-tagatose, and arabinose, and examples of the sweet substances having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharides, maltooligosaccharides, isomaltooligosaccharides, galactooligosaccharides, Coupling Sugar(R), and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners and artificial sweeteners as long as the degree of sweetness is in the above range.

The fruit juice beverage in an embodiment of the present invention contains a low-intensity sweetener. In other embodiments of the present invention, the following fruit juice beverage (hereinafter, also referred to as the fruit juice beverage of Embodiment A) is provided.

A fruit juice beverage comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, and
(d) a low-intensity sweetener in an amount corresponding to a sweetness intensity X4 (hereinafter, sometimes abbreviated as the "component (d)".),
wherein the fruit juice beverage has a sweetness of a sweetness intensity X5 exhibited by the components (a) to (d) and 0.1 < X1 + X4 < X5 is satisfied. The fruit juice beverage in an embodiment of the present invention does not contain any component as a sweetener, other than (a) a high-intensity sweetener in an amount corresponding to a sweetness intensity X1 and (d) a low-intensity sweetener in an amount corresponding to a sweetness intensity X4. Note that fruit-derived sweeteners (fructose and the like) contained in the fruit juice beverage is included in the sweetener (d).

In an embodiment of the present invention, the low-intensity sweetener contains a sweetener selected from hexose, pentose, tetrose, a polysaccharide having a terminal sugar of aldose or ketose, sugar alcohols, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still another embodiment of the present invention, the low-intensity sweetener contains a sweetener selected from glucose, sucrose, fructose, and a combination thereof.

The X4 in the "sweetness intensity X4" can be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3. 5, 0.5 to 4.0, 0.5 to 4.5, 0.5 to 5.0, 0.5 to 5.5, 0.5 to 6.0, 0.5 to 6.5, 0.5 to 7.0, 0.5 to 7. 5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0, or 3.0 to 5.5.

The X4 can be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0.

The amount corresponding to a sweetness intensity X4 of a low-intensity sweetener refers to an amount (concentration) which provides a sweetness of a sweetness intensity X4 under the conditions when the low-intensity sweetener is dissolved in water having the same volume as the fruit juice beverage of the present invention at 20°C.

In an embodiment of the present invention, the X4 is preferably 0.05 to 6.0, more preferably 0.05 to 5.0, and still more preferably 0.1 to 4.0.

The X5 is not particularly limited as long as it is greater than X1 + X4 and may also be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8. 0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5. The X5 can also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5. 0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

(Other components)

The fruit juice beverage of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

[Exemplary embodiments of fruit juice beverage in B1-th embodiment of the invention]

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml, 0.1 to 40 mg/100 ml, 1 to 30 mg/100 ml or 5 to 25 mg/100 ml,

wherein the fruit juice beverage has a sweetness of a sweetness intensity X2 exhibited by the components (a) to (c) and 0.1 < X1 < X2 is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, more preferably 2.0 to 5.0, and
the amino acid or a derivative or a salt thereof comprises an amino acid selected from DL-alanine, L-serine, glycine, L-arginine, L-glutamic acid, L-valine and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml, 0.1 to 40 mg/100 ml, 1 to 30 mg/100 ml or 5 to 25 mg/100 ml,

wherein the fruit juice beverage has a sweetness of a sweetness intensity X2 exhibited by the components (a) to (c) and 0.1 < X1 < X2 is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 10.0, preferably 1.5 to 9.0, more preferably 2.0 to 8.0, and
the amino acid or a derivative or a salt thereof comprises an amino acid selected from DL-alanine, L-serine, glycine, L-arginine, L-glutamic acid, L-valine and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, 0.1 to 40 mg/100 ml, 1 to 30 mg/100 ml or 5 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and 0.1 < X1 + X4 < X5 is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, more preferably 2.0 to 5.0,
the amino acid or a derivative or a salt thereof comprises an amino acid selected from DL-alanine, L-serine, glycine, L-arginine, L-glutamic acid, L-valine and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, 0.1 to 40 mg/100 ml, 1 to 30 mg/100 ml or 5 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and $0.1 < X1 + X4 < X5$ is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, more preferably 2.0 to 5.0,
the amino acid or a derivative or a salt thereof comprises an amino acid selected from DL-alanine, L-serine, glycine, L-arginine, L-glutamic acid, L-valine and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof,
a fruit juice percentage is 1 to 100%, 4 to 95%, 5 to 80%, 5 to 50%, or 5 to 30%, and
X4 is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, 0.1 to 40 mg/100 ml, 1 to 30 mg/100 ml or 5 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and $0.1 < X1 + X4 < X5$ is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, more preferably 2.0 to 5.0,
the amino acid or a derivative or a salt thereof comprises an amino acid selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine and less than 0.4 mM of L-lysine monohydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, 0.1 to 40 mg/100 ml, 1 to 30 mg/100 ml or 5 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and $0.1 < X1 + X4 < X5$ is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, more preferably 2.0 to 5.0,
the amino acid or a derivative or a salt thereof comprises an amino acid selected from arginine, lysine, histidine, phenylalanine, tyrosine, leucine, isoleucine, methionine, valine, alanine, glycine, proline, glutamic acid, serine, threonine, aspartic acid and tryptophan,

the low-intensity sweetener comprises a sweetener selected from glucose, sucrose, fructose, and a combination thereof,

a fruit juice is from one or more selected from orange, tangerine, lemon, grapefruit, lime, and a combination thereof,

a fruit juice percentage is 1 to 100%, 4 to 95%, 5 to 80%, 5 to 50%, or 5 to 30%, and

X4 is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, 0.1 to 40 mg/100 ml, 1 to 30 mg/100 ml or 5 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and 0.1 < X1 + X4 < X5 is satisfied,

the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,

X1 is 0.5 to 5.5, preferably 1.0 to 5.5, more preferably 2.0 to 5.0,

the amino acid or a derivative or a salt thereof comprises an amino acid selected from arginine, valine, alanine, glycine, proline, glutamic acid, serine, threonine, aspartic acid and tryptophan,

the low-intensity sweetener comprises a sweetener selected from glucose, sucrose, fructose, and a combination thereof,

a fruit juice is from one or more selected from blueberry, blackcurrant, cranberry, strawberry, raspberry, and a combination thereof,

a fruit juice percentage is 1 to 100%, 4 to 95%, 5 to 80%, 5 to 50%, or 5 to 30%, and

X4 is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) one or more amino acids selected from alanine, serine and glycine,
(c) sodium in an amount of 1 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and 0.1 < X1 + X4 < X5 is satisfied, and

wherein the fruit juice beverage has an energy of 50 Kcal/100 ml or less, and X1 + X4 is 6 or more. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a fruit juice beverage is provided comprising:

(a) a high-intensity sweetener in an amount corresponding to a sweetness intensity X1,
(b) an amino acid or a derivative or a salt thereof in an amount less than a taste recognition threshold,
(c) sodium in an amount of less than 50 mg/100 ml, 0.1 to 40 mg/100 ml, 1 to 30 mg/100 ml or 5 to 25 mg/100 ml, and
(d) a low-intensity sweetener in an amount corresponding to a sweetness intensity X4,

wherein the fruit juice beverage has a sweetness of a sweetness intensity X5 exhibited by the components (a) to (d) and 0.1 < X1 + X4 < X5 is satisfied,

the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,

X1 is 1.0 to 11.0, preferably 1.5 to 10.0, or 1.5 to 6.0 or 4.0 to 10.0,

the amino acid or a derivative or a salt thereof comprises an amino acid selected from arginine, valine, alanine, glycine, proline, glutamic acid, serine, threonine, aspartic acid and tryptophan,

the low-intensity sweetener comprises a sweetener selected from glucose, sucrose, fructose, and a combination thereof, and

X4 is 0.5 to 9.0, preferably 1.0 to 8.0, or 1.0 to 5.0 or 2.5 to 9.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 200 to about 450 ppm.

### 2. Method for producing fruit juice beverage

<<Second and A2-th embodiments>>

The present invention provides, as the second embodiment, the following method for producing the fruit juice beverage with an enhanced sweetness (hereinafter, referred to as "the production method of the present invention") .

A method for producing a fruit juice beverage of the present invention comprising, to a raw material,

(a) adding a high-intensity sweetener in an amount corresponding to a sweetness intensity X1, and

(b) adding an amino acid or a derivative or a salt thereof in an amount less than a taste recognition threshold. In the present embodiment, X1 and X3 respectively correspond to Xa and Xb in the A2-th embodiment (corresponding to Japanese Patent Applications Nos. 2020-147848/2020-185335).

The present invention provides, as the A2-th embodiment, the following method for producing the fruit juice beverage with an enhanced sweetness (hereinafter, also referred to as "production method A of the present invention") .

A method for producing a fruit juice beverage of the present invention, comprising to a raw material,

(a) adding a high-intensity sweetener in an amount corresponding to a sweetness intensity Xa, and

(b) adding an amino acid or a derivative or a salt thereof in an amount less than a taste recognition threshold.

The fruit juice beverage produced by the method of the present invention is the fruit juice beverage A of the present invention described in the above section "1. Fruit juice beverage with an enhanced sweetness by high-intensity sweetener". Additionally, the "raw material" in the production method A of the present invention may be each material or a mixture thereof required for the production of the fruit juice beverage, and may further include optional components such as a preservative, a flavor, and a carrier. The "raw material" may be made up of several materials.

In the production method of the present invention, any of the following (a) and (b) may be carried out first.

(a) adding a high-intensity sweetener in an amount corresponding to a sweetness intensity Xa

(b) adding an amino acid or a derivative or a salt thereof in an amount less than a taste recognition threshold

Two steps may be carried out simultaneously. For example, (a) and (b) may be carried out simultaneously.

In Step (a), a high-intensity sweetener in an amount corresponding to a sweetness intensity Xa is added to the raw material but a high-intensity sweetener in an amount corresponding to a sweetness intensity Xa does not need to be added at once but may be added in several divided batches.

In Step (b), similarly, when an amino acid in an amount less than a taste recognition threshold is added, the amino acid in an amount less than a taste recognition threshold does not need to be added at once but may be added in several divided batches. The amino acid or a derivative thereof, or a salt thereof, added to the raw material in Step (b) can be selected from the amino acids or derivatives thereof, or salts thereof described with respect to the first or A1-th embodiment in the above section "1. Fruit juice beverage with an enhanced sweetness".

The "addition" herein means not only the actual operation of adding either of the components (a) and (b) to the raw materials but also the operation of adjusting amounts of the components (a) and (b) to predetermined amounts respectively in the fruit juice beverage finally produced through the production process of the fruit juice beverage A of the present invention.

For example, a case in which when the first raw material contains a fruit juice, a grain, a bean, and extracts thereof and accordingly the raw material contains one or more of any of the components (a) and (b) in advance, and the second raw material to be mixed with the first raw material also contains the components (a) and (b) whereby the fruit juice beverage A of the present invention can be produced by mixing the first and the second raw materials, the operation of individually adding the components (a) and (b) to the raw materials is not carried out but in the method of the present invention Steps (a) and (b) are considered to have been carried out as long as the fruit juice beverage of the present invention to be finally produced comprises (a) a high-intensity sweetener in an amount corresponding to a sweetness intensity Xa, and (b) an amino acid or a derivative or a salt thereof in an amount less than a taste recognition threshold.

The production method of an embodiment of the present invention (hereinafter, also referred to as the production method A of Embodiment A) further comprises adding (c) a low-intensity sweetener in an amount corresponding to a sweetness intensity Xc. The production method of Embodiment A enables the production of the fruit juice beverage of Embodiment A. Steps (a) to (c) can be carried out separately, or 2 or more steps may be carried out simultaneously. For example, (a) and (b), (a) and (c), (b) and (c), or (a) and (b) and (c) may be carried out simultaneously.

In a case where the fruit juice beverage of the present invention is a beverage packed in a container, the production method of the beverage of the present invention comprises a step of filling the fruit juice beverage in a container. In a case where the fruit juice beverage is a beverage packed in a container, the fruit juice beverage is preferably sterilized before or after filling of the fruit juice beverage in a container because it can be preserved for a long period. For example, the fruit juice beverage, which is in a can, can be obtained by filling a predetermined amount of the fruit juice beverage in a can and heating and sterilizing it by, for example, retort sterilization at 120 to 125°C for 5 to 20 minutes. Further, the fruit juice beverage, which is a beverage in a PET bottle, a carton, or a bottle, can be obtained as a beverage packed in a container by performing, for example, UHT sterilization for retention at 130 to 145°C for about 2 to 120 seconds and filling in a predetermined amount by hot-pack filling or aseptic filling at a low temperature.

In the method of the present invention, the "fruit juice beverage", "sweetness intensity Xa", "high-intensity sweetener", "sweetness intensity Xb", "amino acid or a derivative or a salt thereof", "optional component", "low-intensity sweetener", "sweetness intensity Xc", "sweetness intensity Xd", "other components" and energy are defined as described above in the above section for the first and A1-th embodiments of the fruit juice beverage and the numerical values described in the above section of the first and A1-th embodiments of the fruit juice beverage are applicable to the numerical values as they are.

<<B2-th embodiment>>

The present invention provides, as the B2-th embodiment, the following method for producing the fruit juice beverage with an enhanced sweetness (hereinafter, also referred to as "production method B of the present invention").

A method for producing a fruit juice beverage of the present invention comprising, to a raw material,

(a) adding a high-intensity sweetener in an amount corresponding to a sweetness intensity X1,
(b) adding an amino acid or a derivative or a salt thereof in an amount less than a taste recognition threshold, and
(c) adding sodium so that a sodium content in the beverage is less than 50 mg/100 ml.

The fruit juice beverage produced by the method of the present invention is the fruit juice beverage B of the present invention described in the above section "1. Fruit juice beverage with an enhanced sweetness by high-intensity sweetener". Additionally, the "raw material" in the method of the present invention may be each material or a mixture thereof required for the production of the fruit juice beverage, and may further include optional components such as a preservative, a flavor, and a carrier. The "raw material" may be made up of several materials.

In the production method of the present invention, any of the following (a) and (b) may be carried out first.

(a) adding a high-intensity sweetener in an amount corresponding to a sweetness intensity X1
(b) adding an amino acid or a derivative or a salt thereof in an amount less than a taste recognition threshold
(c) adding sodium so that a sodium content in the beverage is less than 50 mg/100 ml,

Two or more steps may be carried out simultaneously. For example, (a) and (b), (a) and (c), (b) and (c), or (a) and (b) and (c) may be carried out simultaneously.

In Step (a), a high-intensity sweetener in an amount corresponding to a sweetness intensity X1 is added to the raw material but a high-intensity sweetener in an amount corresponding to a sweetness intensity X1 does not need to be added at once but may be added in several divided batches.

In Step (b), similarly, when an amino acid in an amount less than a taste recognition threshold is added, the amino acid in an amount less than a taste recognition threshold does not need to be added at once but may be added in several divided batches. The amino acid or a derivative thereof, or a salt thereof, added to the raw material in Step (b) can be selected from the amino acids or derivatives thereof, or salts thereof described with respect to the B1-th embodiment in the above section "1. Fruit juice beverage with an enhanced sweetness".

In Step (c), similarly, when sodium is added so that a sodium content in the beverage is less than 50 mg/100 ml, sodium does not need to be added at once but may be added in several divided batches. The sodium (or a sodium source) added to the raw material in Step (c) can be selected from the sodium (or a sodium source) described with respect to the B1-th embodiment in the above section "1. Fruit juice beverage with an enhanced sweetness".

The "addition" herein means not only the actual operation of adding either of the components (a), (b) and (c) to the raw materials but also the operation of adjusting amounts of the components (a), (b) and (c) to predetermined amounts respectively in the fruit juice beverage finally produced through the production process of the fruit juice beverage of the present invention.

For example, a case in which when the first raw material contains a fruit juice, a grain, a bean, and extracts thereof and accordingly the raw material contains one or more of any of the components (a), (b) and (c) in advance, and the second raw material to be mixed with the first raw material also contains the components (a), (b) and (c) whereby the fruit juice beverage of the present invention can be produced by mixing the first and the second raw materials, the operation of individually adding the components (a), (b) and (c) to the raw materials is not carried out but in the method of the present invention Steps (a) to (c) are considered to have been carried out as long as the fruit juice beverage of the present invention to be finally produced comprises (a) a high-intensity sweetener in an amount corresponding to a sweetness intensity X1, (b) an amino acid or a derivative or a salt thereof in an amount less than a taste recognition threshold and (c) sodium in an amount of less than 50 mg/100 ml.

The production method of an embodiment of the present invention (hereinafter, also referred to as the production method B of Embodiment A) further comprises adding (d) a low-intensity sweetener in an amount corresponding to a sweetness intensity X4. The production method of Embodiment A enables the production of the fruit juice beverage of Embodiment A. Steps (a) to (d) may be carried out separately, or 2 or more steps may be carried out simultaneously. For example, (a) and (b), (a) and (c), (a) and (d), (b) and (c), (b) and (d), (c) and (d), (a) and (b) and (c), (a) and (b) and (d), (a) and (c) and (d), (b) and (c) and (d), or (a) and (b) and (c) and (d) may be carried out simultaneously.

In a case where the fruit juice beverage of the present invention is a beverage packed in a container, the production method of the beverage of the present invention comprises a step of filling the fruit juice beverage in a container. In a case where the fruit juice beverage is a beverage packed in a container, the fruit juice beverage is preferably sterilized before or after filling of the fruit juice beverage in a container because it can be preserved for a long period. For example, the fruit juice beverage, which is in a can, can be obtained by filling a predetermined amount of the fruit juice beverage in a can and heating and sterilizing it by, for example, retort sterilization at 120 to 125°C for 5 to 20 minutes. Further, the fruit juice beverage, which is a beverage in a PET bottle, a carton, or a bottle, can be obtained as a beverage packed in a container by performing, for example, UHT sterilization for retention at 130 to 145°C for about 2 to 120 seconds and filling in a predetermined amount by hot-pack filling or aseptic filling at a low temperature.

In the method of the present invention, the "fruit juice beverage", "sweetness intensity X1", "high-intensity sweetener", "sweetness intensity X2", amount of sodium, form of sodium in the fruit juice beverage, "amino acid or a derivative or a salt thereof", "sweetness intensity X3", "optional component", "low-intensity sweetener", "sweetness intensity X4", "sweetness intensity X5", "other components" and energy are defined as described above in the above section for the B1-th embodiment of the fruit juice beverage and the numerical values described in the above section of the B1-th embodiment of the fruit juice beverage are applicable to the numerical values as they are.

3. Method for enhancing a sweetness intensity of a fruit juice beverage

<<Third and A3-th embodiments>>

The present invention provides, as the third embodiment, a method for enhancing a sweetness intensity of the fruit juice beverage (hereinafter, referred to as "the enhancement method of the present invention").

In an embodiment of the enhancement method of the present invention, a method for enhancing a sweetness intensity of a fruit juice beverage is provided,
wherein the fruit juice beverage contains

(a) a high-intensity sweetener in an amount corresponding to a sweetness intensity X1, and
(b) an amino acid or a derivative or a salt thereof in an amount less than a taste recognition threshold. In the present embodiment, the X1 corresponds to the Xa in the A3-th embodiment (corresponding to Japanese Patent Applications No. 2020-147848/2020-185335).

The present invention provides, as the A3-th embodiment, a method for enhancing a sweetness intensity of the fruit juice beverage (hereinafter, referred to as "enhancement method A of the present invention").

In an embodiment of the enhancement method of the present invention, a method for enhancing a sweetness intensity of a fruit juice beverage is provided,
wherein the fruit juice beverage contains

(a) a high-intensity sweetener in an amount corresponding to a sweetness intensity Xa, and

(b) an amino acid or a derivative or a salt thereof in an amount less than a taste recognition threshold.

According to an embodiment of the enhancement method of the present invention, a sweetness of the fruit juice beverage is enhanced and a fruit juice beverage having a sweetness more than a sweetness intensity obtained when the component (a) is simply added to the fruit juice beverage can be provided. Specifically, an amino acid is added simultaneously or separately to the fruit juice beverage comprising a predetermined amount of a high-intensity sweetener, and after addition, an amino acid of less than a taste recognition threshold is contained in the fruit juice beverage thereby to provide the fruit juice beverage with a sweetness more than a sweetness intensity obtained when the high-intensity sweetener alone is added. A type and an amount of the amino acid or a derivative or a salt thereof added can be selected so as to be a type and a content of the amino acid or a derivative or a salt thereof in the fruit juice beverage described with respect to the first or A1-th embodiment of the above section "1. Fruit juice beverage with an enhanced sweetness". For example, an amino acid selected from glycine, alanine, valine, isoleucine, leucine, serine, threonine, glutamine, asparagine, arginine, lysine, histidine, and a combination thereof may be added to the fruit juice beverage in an amount described with respect to the first or A1-th embodiment of the above section "1. Fruit juice beverage with an enhanced sweetness".

In still another embodiment of the enhancement method of the present invention, (c) a low-intensity sweetener in an amount corresponding to a sweetness intensity Xc may be further contained.

According to the enhancement method of the present embodiment, a sweetness of the fruit juice beverage is enhanced and a fruit juice beverage having a sweetness more than a sweetness intensity obtained when the component (a) and the component (d) are simply added to the fruit juice beverage can be provided. Specifically, an amino acid is added to the fruit juice beverage comprising predetermined amounts of a high-intensity sweetener and a low-intensity sweetener, and after addition, an amino acid of less than a taste recognition threshold is contained in the fruit juice beverage thereby to provide the fruit juice beverage with a sweetness more than a sweetness intensity obtained when only the high-intensity sweetener and the low-intensity sweetener are added.

In still another embodiment of the enhancement method of the present invention, a method for enhancing a sweetness intensity of a fruit juice beverage is provided,

wherein the fruit juice beverage contains

(b) an amino acid or a derivative or a salt thereof in an amount less than a taste recognition threshold, and

(c) a low-intensity sweetener in an amount corresponding to a sweetness intensity Xc.

According to the enhancement method of the present embodiment, a sweetness of the fruit juice beverage is enhanced and a fruit juice beverage having a sweetness more than a sweetness intensity obtained when the component (c) is simply added to the fruit juice beverage can be provided. Specifically, an amino acid is added to the fruit juice beverage comprising a predetermined amount of a low-intensity sweetener, and after addition, an amino acid of less than a taste recognition threshold is contained in the fruit juice beverage thereby to provide the fruit juice beverage with a sweetness more than a sweetness intensity obtained when the low-intensity sweetener alone is added. Also in this embodiment, a type and an amount of the amino acid or a derivative or a salt thereof added can be selected so as to be a type and a content of the amino acid or a derivative or a salt thereof in fruit juice beverage described with respect to the first or A1-th embodiment of the above section "1. Fruit juice beverage with an enhanced sweetness". For example, an amino acid selected from glycine, alanine, valine, isoleucine, leucine, serine, threonine, glutamine, asparagine, arginine, lysine, histidine, and a combination thereof may be added to the fruit juice beverage in an amount described with respect to the first or A1-th embodiment of the above section "1. Fruit juice beverage with an enhanced sweetness".

In an embodiment of the present invention, an amino acid in an amount less than a taste recognition threshold is added to a fruit juice beverage comprising a high-intensity sweetener in an amount corresponding to a sweetness intensity Xa and/or a low-intensity sweetener in an amount corresponding to a sweetness intensity Xc.

Further, in an embodiment of the present invention, an amount of an amino acid added may be an amount so that an amount of the amino acid in the fruit juice beverage is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM, 15 to 20 mM.

In the sweetness enhancement method of the present invention, the "fruit juice beverage", "sweetness intensity Xa", "high-intensity sweetener", "sweetness intensity Xb", "amino acid or a derivative or a salt thereof", "optional component", "low-intensity sweetener", "sweetness intensity Xc", "sweetness intensity Xd", "other components" and energy are defined as described above in the above section for the first and A1-th embodiments of the fruit juice beverage and the numerical values described in the above section of the first and A1-th embodiments of the fruit juice beverage are applicable to the numerical values as they are.

<<B3-th embodiment>>

The present invention provides, as the B3-th embodiment, a method for enhancing a sweetness intensity of the fruit juice beverage (hereinafter, also referred to as "the enhancement method B of the present invention").

In an embodiment of the enhancement method of the present invention, a method for enhancing a sweetness intensity of a fruit juice beverage is provided,
wherein the fruit juice beverage contains

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml.

According to an embodiment of the enhancement method of the present invention, a sweetness of the fruit juice beverage is enhanced and a fruit juice beverage having a sweetness more than a sweetness intensity obtained when the component (a) is simply added to the fruit juice beverage can be provided. Specifically, sodium (or a sodium source) and an amino acid are added simultaneously or separately to the fruit juice beverage comprising a predetermined amount of a high-intensity sweetener, and after addition, sodium in an amount of less than 50 mg/100 ml and an amino acid of less than a taste recognition threshold are contained in the fruit juice beverage thereby to provide the fruit juice beverage with a sweetness more than a sweetness intensity obtained when the high-intensity sweetener alone is added. The amount of sodium (or a sodium source) to be added can be selected from amounts described with respect to the B1-th embodiment of the above section "1. Fruit juice beverage with an enhanced sweetness". Further, a type and an amount of the amino acid or a derivative or a salt thereof added can be selected so as to be a type and a content of the amino acid or a derivative or a salt thereof in the fruit juice beverage described with respect to the B1-th embodiment of the above section "1. Fruit juice beverage with an enhanced sweetness". For example, an amino acid selected from glycine, alanine, valine, isoleucine, leucine, serine, threonine, glutamine, asparagine, arginine, lysine, histidine, and a combination thereof can be added to the fruit juice beverage in an amount described with respect to the B1-th embodiment of the above section "1. Fruit juice beverage with an enhanced sweetness".

In other embodiments of the enhancement method of the present invention, (d) a low-intensity sweetener in an amount corresponding to a sweetness intensity X4 may be further contained.

According to the enhancement method of the present embodiment, a sweetness of the fruit juice beverage is enhanced and a fruit juice beverage having a sweetness more than a sweetness intensity obtained when the component (a) and the component (d) are simply added to the fruit juice beverage can be provided. Specifically, sodium (or a sodium source) and an amino acid are added simultaneously or separately to the fruit juice beverage comprising predetermined amounts of a high-intensity sweetener and a low-intensity sweetener, and after addition, sodium in an amount of less than 50 mg/100 ml, 0.1 to 40 mg/100 ml, 1 to 30 mg/100 ml or 5 to 25 mg/100 ml and an amino acid of less than a taste recognition threshold are contained in the fruit juice beverage thereby to provide the fruit juice beverage with a sweetness more than a sweetness intensity obtained when only the high-intensity sweetener and the low-intensity sweetener are added.

In still another embodiment of the enhancement method of the present invention, a method for enhancing a sweetness intensity of a fruit juice beverage is provided,
wherein the fruit juice beverage contains

> (b) an amino acid or a derivative or a salt thereof in an amount less than a taste recognition threshold,
> (c) sodium in an amount of less than 50 mg/100 ml, and
> (d) a low-intensity sweetener in an amount corresponding to a sweetness intensity X4.

According to the enhancement method of the present embodiment, a sweetness of the fruit juice beverage is enhanced and a fruit juice beverage having a sweetness more than a sweetness intensity obtained when the component (d) is simply added to the fruit juice beverage can be provided. Specifically, sodium (or a sodium source) and an amino acid are added simultaneously or separately to the fruit juice beverage comprising a predetermined amount of a low-intensity sweetener, and after addition, sodium in an amount of less than 50 mg/100 ml, 0.1 to 40 mg/100 ml, 1 to 30 mg/100 ml or 5 to 25 mg/100 ml and an amino acid of less than a taste recognition threshold are contained in the fruit juice beverage thereby to provide the fruit juice beverage with a sweetness more than a sweetness intensity obtained when the low-intensity sweetener alone is added. Also in this embodiment, an amount of sodium (or a sodium source) to be added can be selected from amounts described with respect to the B1-th embodiment of the above section "1. Fruit juice beverage with an enhanced sweetness". Further, a type and an amount of the amino acid or a derivative or a salt thereof added can be selected so as to be a type and a content of the amino acid or a derivative or a salt thereof in the fruit juice beverage described with respect to the B1-th embodiment of the above section "1. Fruit juice beverage with an enhanced sweetness". For example, an amino acid selected from glycine, alanine, valine, isoleucine, leucine, serine, threonine, glutamine, asparagine, arginine, lysine, histidine, and a combination thereof can be added to the fruit juice beverage in an amount described with respect to the B1-th embodiment of the above section "1. Fruit juice beverage with an enhanced sweetness".

In an embodiment of the present invention, sodium in an amount of less than 50 mg/100 ml and an amino acid in an amount less than a taste recognition threshold are added to a fruit juice beverage comprising a high-intensity sweetener in an amount corresponding to a sweetness intensity X1 and/or a low-intensity sweetener in an amount corresponding to a sweetness intensity X4. In other embodiments of the present invention, an amount of the sodium source added is an amount so that an amount of sodium in the fruit juice beverage is 0.1 to 40 mg/100 ml, 1 to 30 mg/100 ml, or 5 to 25 mg/100 ml. In other embodiments, an amount of sodium may be in a range so that an amount of sodium in the fruit juice beverage is 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 mg/100 ml or more and less than 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 mg/100 ml or more and less than 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 mg/100 ml or more and less than 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 mg/100 ml or more and less than 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 mg/100 ml or more and less than 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 mg/100 ml or more and less than 50 mg/100 ml, 20 to 45 mg/100 ml, 20 to 40 mg/100 ml, 20 to 35 mg/100 ml, 20 to 30 mg/100 ml, 20 to 25 mg/100 ml, 25 mg/100 ml or more and less than 50 mg/100 ml, 25 to 45 mg/100 ml, 25 to 40 mg/100 ml, 25 to 35 mg/100 ml, or 25 to 30 mg/100 ml.

Further, in an embodiment of the present invention, an amount of an amino acid added may be an amount so that an amount of the amino acid in the fruit juice beverage is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM or 15 to 20 mM.

In the sweetness enhancement method of the present invention, "fruit juice beverage", "sweetness intensity X1", "high-intensity sweetener", "sweetness intensity X2", amount of sodium, form of sodium in the fruit juice beverage, "amino acid or a derivative or a salt thereof", "sweetness intensity X3", "optional component", "low-intensity sweetener", "sweetness intensity X4", "sweetness intensity X5", "other components" and energy are defined as described above in the above section for the B1-th embodiment of the fruit juice beverage and the numerical values described in the above section of the B1-th embodiment of the fruit juice beverage are applicable to the numerical values as they are.

4. Concentrate for providing fruit juice beverage

<<Fourth and A4-th embodiments>>

The present invention provides, as the fourth embodiment, a concentrate for providing the following fruit juice beverage (hereinafter, referred to as "the concentrate of the present invention").

A fruit juice beverage comprising:

(a) a high-intensity sweetener in an amount corresponding to a sweetness intensity X1, and

(b) an amino acid or a derivative or a salt thereof in an amount less than a taste recognition threshold,
wherein the fruit juice beverage has a sweetness of a sweetness intensity X3 exhibited by the components (a) and
(b) and 0.1 < X1 < X3 is satisfied. In the present embodiment, X1 and X3 respectively correspond to Xa and Xb in
the A4-th embodiment (corresponding to Japanese Patent Applications Nos. 2020-147848/2020-185335) described
later.

The present invention provides, as the A4-th embodiment, a concentrate for providing the following fruit juice
beverage (hereinafter, also referred to as "concentrate A of the present invention").
A fruit juice beverage comprising:

(a) a high-intensity sweetener in an amount corresponding to a sweetness intensity Xa, and
(b) an amino acid or a derivative or a salt thereof in an amount less than a taste recognition threshold,
wherein the fruit juice beverage has a sweetness of a sweetness intensity Xb exhibited by the components (a) and
(b) and 0.1 < Xa < Xb is satisfied.

In a preferable embodiment of the present invention, a concentrate for providing the fruit juice beverage is
provided comprising:

(a) a high-intensity sweetener in an amount corresponding to a sweetness intensity Xaa, and
(b) an amino acid or a derivative or a salt thereof in an amount less than 10 fold of a taste recognition threshold.

The concentrate of the present invention is diluted in any ratio and used for providing the fruit juice beverage.
The "fruit juice beverage" is the same as described with respect to the first or A1-th embodiment in "1. Fruit juice beverage
with an enhanced sweetness". For example, the concentrate of the present invention can be used as a syrup or an
undiluted solution in a beverage. In this instance, the concentrate can be diluted 2-fold, 3-fold, 4-fold, 5-fold, 6-fold, 7-
fold, 8-fold, 9-fold, or 10-fold and used. Further, the concentrate of the present invention is preferable in the aspects of
preservability and transportability because it is concentrated. The concentrate of the present invention may be solid or
liquid.
The concentrate of the present invention is 2 to 10-fold concentrate, preferably 3 to 9-fold concentrate, more
preferably 4 to 8-fold concentrate, and further preferably 5 to 7-fold concentrate, of the fruit juice beverage of the present
invention.
The concentrate in an embodiment of the present invention is 5-fold concentrate of the fruit juice beverage of
the present invention and comprises:

(a) a high-intensity sweetener in an amount corresponding to a sweetness intensity Xaa, and
(b) an amino acid or a derivative or a salt thereof in an amount less than 5 fold of a taste recognition threshold,
wherein the concentrate has a sweetness of a sweetness intensity Xba exhibited by the components (a) and (b)
and 0.5 < Xaa < Xba, preferably 1.0 < Xaa < Xba, and more preferably 2.0 < Xaa < Xba is satisfied.

The concentrate in another embodiment of the present invention is a 10-fold concentrate of the fruit juice
beverage of the present invention and comprises:

(a) a high-intensity sweetener in an amount corresponding to a sweetness intensity Xab, and
(b) an amino acid or a derivative or a salt thereof in an amount less than 10 fold of a taste recognition threshold,
wherein the concentrate has a sweetness of a sweetness intensity Xbb exhibited by the components (a) and (b)
and 1.0 < Xab < Xbb, preferably 2.0 < Xab < Xbb, and more preferably 4.0 < Xab < Xbb is satisfied.

The concentrate in an embodiment of the present invention is a 5-fold concentrate of the fruit juice beverage
of the present invention and comprises:

(a) a high-intensity sweetener in an amount corresponding to a sweetness intensity Xaa,
(b) an amino acid or a derivative or a salt thereof in an amount less than 5 fold of a taste recognition threshold, and
(c) a low-intensity sweetener in an amount corresponding to a sweetness intensity Xca,
wherein the concentrate has a sweetness of a sweetness intensity Xda exhibited by the components (a) to (c) and
0.5 < Xaa + Xca < Xda, preferably 1.0 < Xaa + Xca < Xda, and more preferably 2.0 < Xaa + Xca < Xda is satisfied.

The concentrate in an embodiment of the present invention is a 10-fold concentrate of the fruit juice beverage
of the present invention and comprises:

(a) a high-intensity sweetener in an amount corresponding to a sweetness intensity Xaa,
(b) an amino acid or a derivative or a salt thereof in an amount less than 10 fold of a taste recognition threshold, and
(c) a low-intensity sweetener in an amount corresponding to a sweetness intensity Xca,
wherein the concentrate has a sweetness of a sweetness intensity Xda exhibited by the components (a) to (c) and
$1.0 < Xaa + Xca < Xda$, preferably $2.0 < Xaa + Xca < Xda$, and more preferably $4.0 < Xaa + Xca < Xda$ is satisfied.

<<B4-th embodiment>>

The present invention provides, as the B4-th embodiment, a concentrate for providing the following fruit juice beverage (hereinafter, also referred to as "concentrate B of the present invention").

A fruit juice beverage comprising:

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml,
wherein the fruit juice beverage has a sweetness of a sweetness intensity X2 exhibited by the components (a) to (c) and $0.1 < X1 < X2$ is satisfied.

In a preferable embodiment of the present invention, a concentrate for providing the fruit juice beverage is provided comprising:

(a) a high-intensity sweetener in an amount corresponding to a sweetness intensity X1a,
(b) an amino acid or a derivative or a salt thereof in an amount less than 10 fold of a taste recognition threshold, and
(c) sodium in an amount of less than 500 mg/100 ml.

The concentrate of the present invention is diluted in any ratio and used for providing the fruit juice beverage. The "fruit juice beverage" is the same as described with respect to the B1-th embodiment in "1. Fruit juice beverage with an enhanced sweetness". For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. Further, the concentrate of the present invention is preferable in the aspects of preservability and transportability because it is concentrated. The concentrate of the present invention may be solid or liquid.

The concentrate of the present invention is a 2 to 10-fold concentrate, preferably 3 to 9-fold concentrate, more preferably 4 to 8-fold concentrate, and still more preferably 5 to 7-fold concentrate, of the fruit juice beverage of the present invention.

The concentrate in an embodiment of the present invention is a 5-fold concentrate of the fruit juice beverage of the present invention and comprises:

(a) a high-intensity sweetener in an amount corresponding to a sweetness intensity X1a,
(b) an amino acid or a derivative or a salt thereof in an amount less than 5 fold of a taste recognition threshold, and
(c) sodium in an amount of less than 250 mg/100 ml,
wherein the concentrate has a sweetness of a sweetness intensity X2a exhibited by the components (a) to (c) and $0.5 < X1a < X2a$, preferably $1.0 < X1a < X2a$, and more preferably $2.0 < X1a < X2a$ is satisfied.

The concentrate in another embodiment of the present invention is a 10-fold concentrate of the fruit juice beverage of the present invention and comprises:

(a) a high-intensity sweetener in an amount corresponding to a sweetness intensity X1b,
(b) an amino acid or a derivative or a salt thereof in an amount less than 10 fold of a taste recognition threshold, and
(c) sodium in an amount of less than 500 mg/100 ml,
wherein the concentrate has a sweetness of a sweetness intensity X2b exhibited by the components (a) to (c) and $1.0 < X1b < X2b$, preferably $2.0 < X1b < X2b$, and more preferably $4.0 < X1b < X2b$ is satisfied.

The concentrate in an embodiment of the present invention is a 5-fold concentrate of the fruit juice beverage of the present invention and comprises:

(a) a high-intensity sweetener in an amount corresponding to a sweetness intensity X1a,
(b) an amino acid or a derivative or a salt thereof in an amount less than 5 fold of a taste recognition threshold,
(c) sodium in an amount of less than 250 mg/100 ml, and

(d) a low-intensity sweetener in an amount corresponding to a sweetness intensity X4a,

wherein the concentrate has a sweetness of a sweetness intensity X5a exhibited by the components (a) to (d) and 0.5 < X1a + X4a < X5a, preferably 1.0 < X1a + X4a < X5a, and more preferably 2.0 < X1a + X4a < X5a is satisfied.

The concentrate in an embodiment of the present invention is a 10-fold concentrate of the fruit juice beverage of the present invention and comprises:

(a) a high-intensity sweetener in an amount corresponding to a sweetness intensity X1a,

(b) an amino acid or a derivative or a salt thereof in an amount less than 10 fold of a taste recognition threshold,

(c) sodium in an amount of less than 500 mg/100 ml, and

(d) a low-intensity sweetener in an amount corresponding to a sweetness intensity X4a,

wherein the concentrate has a sweetness of a sweetness intensity X5a exhibited by the components (a) to (d) and 1.0 < X1a + X4a < X5a, preferably 2.0 < X1a + X4a < X5a, and more preferably 4.0 < X1a + X4a < X5a is satisfied.

In the present description, the term "about" means that a subject matter is in ranges of $\pm25\%$, $\pm10\%$, $\pm5\%$, $\pm3\%$, $\pm2\%$, or $\pm1\%$, of the numerical value following the "about". For example, "about 10" means a range from 7.5 to 12.5. In the present description, the "mM" means a molar concentration and means $1 \times 10^{-3}$ mol/L.

Example

Hereinafter, the present invention will be specifically described in reference with examples but the present invention is not limited to the following examples.

[Reference Example 1] Actual measurement of taste recognition thresholds of several amino acids

Aqueous solutions of DL-alanine (purity 98% or more), L-serine (purity 98.5% or more), glycine (purity 98.5% or more), L-arginine (purity 98.5% or more), L-glutamic acid (purity 99% or more), L-valine (purity 98% or more) and L-glutamine (purity 98% or more) at the concentrations shown in Table 2 below were prepared. Each of the samples contained only water and the amino acid. These samples were evaluated by those (5 to 6 persons) who received sensory trainings as panelists using the criteria below.

Evaluation criteria

A: No taste is sensed other than water
B: Taste different from water but cannot specify
C: Taste is sensed
D: Extremely intense taste is sensed

The evaluation results are shown in Table 2 below.

Table 2: Evaluation on taste recognition threshold

| | (mM) | A | B | C | D | | | (mM) | A | B | C | D |
|---|---|---|---|---|---|---|---|---|---|---|---|---|
| DL-Alanine | 5 | 4 | 2 | 0 | 0 | | L-Serine | 20 | 3 | 2 | 0 | 0 |
| | 10 | 3 | 2 | 1 | 0 | | | 30 | 1 | 4 | 0 | 0 |
| | 20 | 2 | 3 | 1 | 0 | | | 40 | 0 | 4 | 1 | 0 |
| | 30 | 1 | 0 | 4 | 0 | | | 50 | 0 | 1 | 3 | 1 |
| | 40 | 1 | 0 | 5 | 0 | | | 60 | 0 | 0 | 3 | 2 |

| | (mM) | A | B | C | D | | | (mM) | A | B | C | 0 |
|---|---|---|---|---|---|---|---|---|---|---|---|---|
| Glycine | 40 | 3 | 1 | 1 | 0 | | L-Arginine | 1 | 4 | 1 | 0 | 0 |
| | 50 | 0 | 4 | 1 | 0 | | | 2.5 | 0 | 2 | 3 | 0 |

(continued)

|  | (mM) | A | B | C | D |  |  | (mM) | A | B | C | 0 |
|---|---|---|---|---|---|---|---|---|---|---|---|---|
|  | 75 | 0 | 2 | 2 | 1 |  |  | 5 | 0 | 0 | 3 | 2 |
|  | 100 | 0 | 0 | 3 | 2 |  |  | 10 | 0 | 0 | 3 | 2 |
|  | 125 | 0 | 0 | 2 | 3 |  |  | 30 | 0 | 0 | 0 | 5 |
|  | (mM) | A | B | C | 0 |  |  | (mM) | A | B | C | 0 |
| L-Glutamic acid | 0.1 | 5 | 0 | 0 | 0 | L-Valine |  | 20 | 2 | 3 | 1 | 0 |
|  | 0.25 | 2 | 2 | 1 | 0 |  |  | 30 | 1 | 4 | 1 | 0 |
|  | 0.5 | 0 | 1 | 1 | 3 |  |  | 40 | 0 | 3 | 1 | 2 |
|  | 1 | 0 | 0 | 1 | 4 |  |  | 50 | 0 | 0 | 3 | 3 |
|  | 2.5 | 0 | 0 | 0 | 5 |  |  | 60 | 0 | 0 | 3 | 3 |

|  | (mM) | A | B | C | 0 |
|---|---|---|---|---|---|
| L-Glutamine | 5 | 4 | 0 | 2 | 0 |
|  | 10 | 2 | 1 | 3 | 0 |
|  | 20 | 1 | 0 | 4 | 1 |
|  | 30 | 0 | 0 | 2 | 4 |
|  | 40 | 0 | 0 | 0 | 6 |

Based on the results in the above table, a taste recognition threshold of each of the amino acids was calculated based on the concentration at which a half or more of the sensory testers sensed as "Taste is sensed" and shown in Table 3 below.

Table 3

| Amino acid | Taste recognition threshold (mM) |
|---|---|
| DL-Alanine | 20 to 30 |
| L-Serine | 40 to 50 |
| Glycine | 50 to 75 |
| L-Arginine | 1 to 2.5 |
| L-Glutamic acid | 0.25 to 0.5 |
| L-Valine | 40 to 50 |
| L-Glutamine | 5 to 10 |

[Reference Example 2] Actual measurement of taste recognition thresholds

Several amino acids or salts thereof were actually measured for the taste recognition threshold by the same method as in Reference Example 1. Aqueous solutions of L-leucine (purity 98.0% or more), L-threonine (purity 98.0% or more), L-proline (purity 98.0% or more), L-asparagine (purity 99.0% or more) and L-lysine monohydrochloride (purity 98.0% or more) at the concentrations shown in Table 4 below were prepared with pure water. Each of the samples contained only water and the amino acid or salts thereof. These samples were evaluated by those (6 to 7 persons) who received sensory trainings as panelists using the criteria below.

Evaluation criteria

A: No taste is sensed other than water

B: Taste different from water but cannot specify

C: Taste is sensed

D: Extremely intense taste is sensed

The evaluation results are shown in Table 4 below.

Table 4

| L-Leucine (mM) | A | B | C | 0 | | L-Asparagine (mM) | A | B | C | 0 |
|---|---|---|---|---|---|---|---|---|---|---|
| 2.5 M | 4 | 1 | 1 | 0 | | 1mM | 5 | 2 | 0 | 0 |
| 5 mM | 4 | 1 | 0 | 1 | | 2.5 mM | 5 | 2 | 0 | 0 |
| 10 mM | 3 | 2 | 0 | 1 | | 5 mM | 1 | 5 | 1 | 0 |
| 20 mM | 0 | 3 | 2 | 1 | | 10 mM | 0 | 5 | 2 | 0 |
| 30 mM | 0 | 0 | 5 | 1 | | 20 mM | 0 | 2 | 5 | 0 |
| | | | | | | | | | | |
| L-Threonine (mM) | A | B | C | 0 | | L-Lysine monohydrochloride (mM) | A | B | C | 0 |
| 20 mM | 5 | 1 | 1 | 0 | | 0.2 mM | 6 | 0 | 1 | 0 |
| 30 mM | 4 | 1 | 2 | 0 | | 0.3 mM | 4 | 1 | 2 | 0 |
| 40 mM | 2 | 3 | 2 | 0 | | 0.4 mM | 3 | 2 | 2 | 0 |
| 50 mM | 0 | 3 | 4 | 0 | | 0.5 mM | 0 | 3 | 4 | 0 |
| 60 mM | 0 | 2 | 2 | 3 | | 1 mM | 0 | 2 | 3 | 2 |
| | | | | | | | | | | |
| L-Proline (mM) | A | B | C | 0 | | | | | | |
| 20 mM | 4 | 2 | 0 | 0 | | | | | | |
| 30 mM | 3 | 2 | 1 | 0 | | | | | | |
| 40 mM | 0 | 4 | 2 | 0 | | | | | | |
| 50 mM | 0 | 1 | 4 | 1 | | | | | | |
| 60 mM | 0 | 0 | 5 | 1 | | | | | | |

Based on the results in the above table, a taste recognition threshold of each of the amino acids was calculated based on the concentration at which a half or more of the sensory testers sensed as "Taste is sensed" and shown in Table 5 below.

Table 5

| Amino acid or salt thereof | Taste recognition threshold (mM) |
|---|---|
| L-Leucine | 20 to 30 mM |
| L-Threonine | 40 to 50 mM |
| L-Proline | 40 to 50 mM |
| L-Asparagine | 10 to 20 mM |

(continued)

| Amino acid or salt thereof | Taste recognition threshold (mM) |
|---|---|
| L-Lysine monohydrochloride | 0.4 to 0.5 mM |

Hereinafter, examples for evaluation on a taste quality improvement effect by an amino acid or an amino acid and sodium will be shown.

First, a measurement method of an amino acid is shown.

(Measurement method of amino acid)

Seventeen amino acids, arginine, lysine, histidine, phenylalanine, tyrosine, leucine, isoleucine, valine, alanine, glycine, proline, glutamic acid, serine, threonine, aspartic acid, cystine and methionine, were extracted by addition of a 10% sulfosalicylic acid solution to a sample, then a 3 mol/l sodium hydroxide solution was added to adjust a pH to 2.2, then a sodium citrate buffer (pH 2.2) was added for volume fixation, the resultant was subjected to filtration and appropriate dilution, and thus a test solution was prepared. The test solution can be measured under the following two conditions, depending on a dilution factor and a type of an amino acid to be measured.

Condition 1

Type of equipment: Model L-8900 High-Speed Amino Acid Analyzer (manufactured by Hitachi High-Technologies Corporation)
Column: Hitachi Custom Ion-Exchange Resin, $\Phi$4.6 mm × 60 mm (manufactured by Hitachi High-Technologies Corporation)
Mobile phase: buffer for biological fluid analysis, PF KANTO (PF-1 to PF-4) (Kanto Chemical Co., Inc.)
Reaction liquid: Ninhydrin Coloring Solution Kit for HITACHI (FUJIFILM Wako Pure Chemical Corporation)
Flow rate: mobile phase 0.35 ml/min, reaction liquid 0.30 ml/min
Measurement wavelength: 570 nm (16 types except for proline), 440 nm (proline)

Condition 2

Type of equipment: JLC-500/V2 (manufactured by JEOL Ltd.)
Column: LCR-6, $\Phi$4 mm × 120 mm (manufactured by JEOL Ltd.)
Mobile phase: sodium citrate buffer (H-01 to H-04) (manufactured by JEOL Ltd.)
Reaction liquid: Ninhydrin Coloring Solution Kit-II for JEOL (FUJIFILM Wako Pure Chemical Corporation)
Flow rate: mobile phase 0.42 ml/min, reaction liquid 0.22 ml/min
Measurement wavelength: 570 nm (16 types except for proline), 440 nm (proline)

A test solution for tryptophan was prepared in the same manner as in the above seventeen types, adjusted by an aqueous 3 mol/l sodium hydroxide solution so as to be slightly alkaline, subjected to volume fixation, and thereafter measured with a high-performance liquid chromatography (LC-20AD, manufactured by Shimadzu Corporation). Measurement conditions were as follows.

Detector: fluorescence spectrophotometer RF-20Axs (manufactured by Shimadzu Corporation)
Column: CAPCELL PAK C18 AQ, $\Phi$4.6 mm × 250 mm (manufactured by Osaka Soda Co., Ltd.)
Mobile phase: mixed liquid of 20 mmol/l per chloric acid and methanol (80: 20)
Flow rate: 0.7 ml/min
Fluorescence excitation wavelength: 285 nm
Fluorescence measurement wavelength: 348 nm
Column temperature: 40°C

[Example 1] Evaluation on taste quality improvement effect by alanine or alanine and sodium

Experiment method

Natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more) and DL-alanine (purity 98% or more) were dissolved in a blackcurrant diluted fruit juice (fruit juice percentage: 6%, sodium content: 0 (mg/100 ml), energy: 2.0 (kcal/100 ml)) or an orange diluted fruit juice (fruit juice percentage: 12%, sodium content: 0 (mg/100 ml), energy: 5.28 (kcal/100 ml)) in the ratios shown in Tables 6 and 7 below to prepare beverage samples. An acidulant, vitamin C and a dye were also added to the blackcurrant diluted fruit juice. Further, Examples A1 and B1 were control samples to which neither alanine, nor sodium was added. In the present example and subsequent examples, a sodium content contained in a beverage serving as a base was measured by an atomic absorption method with SpectrAA240FS (manufactured by Agilent Technologies Japan, Ltd.). The above "0 mg/100 ml" means to be less than 1.0 mg/100 g as a lower limit of quantitation.

Contents of amino acids (eighteen amino acids, arginine, lysine, histidine, phenylalanine, tyrosine, leucine, isoleucine, valine, alanine, glycine, proline, glutamic acid, serine, threonine, aspartic acid, cystine, methionine and tryptophan) contained in a blackcurrant diluted fruit juice (fruit juice percentage: 6%) and an orange diluted fruit juice (fruit juice percentage: 12%) each used in a beverage base were calculated based on measurement values determined by measuring amino acids contained in a concentrated fruit juice before dilution, in an analytical institution by use of an amino acid automatic analysis method (in the case of tryptophan, high-performance liquid chromatography) by a known method. Contents of the above eighteen amino acids contained in the blackcurrant diluted fruit juice (fruit juice percentage: 6%) were each less than 1.0 mg/100 g. Contents of the above eighteen amino acids contained in the orange diluted fruit juice (fruit juice percentage: 12%) were each less than 1.0 mg/100 g except that a content of arginine was about 9.0 mg/100 g, a content of alanine was about 1.7 mg/100 g, a content of proline was about 15.7 mg/100 g, a content of glutamic acid was about 2.4 mg/100 g, a content of serine was about 2.9 mg/100 g, and a content of aspartic acid was about 6.0 mg/100 g.

In each beverage in Tables 6 and 7, a sodium content was measured by an atomic absorption method with SpectrAA240FS (manufactured by Agilent Technologies Japan, Ltd.), a content of alanine was measured in an analytical institution by use of an amino acid automatic analysis method under the above conditions, and an energy (kcal/100 ml) was calculated under the premise that an energy of each component derived from an acidulant, vitamin C, a dye, RebD and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

Table 6: Blackcurrant fruit juice 6%

| Raw material added (amount added) | Example A1 | Example A2 | Example A3 | Example A4 | Example A5 | Example A6 | Example A7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Alanine (g/L) | 0 | 0.89 | 1.34 | 0.89 | 1.34 | 0.89 | 1.34 |
| Content | | | | | | | |
| Brix (Amount of soluble solid) | 5.00 | 5.14 | 5.17 | 5.21 | 5.28 | 5.32 | 5.39 |
| Sodium (mg/100 g) | ND [1] | ND [1] | ND [1] | 11.1 | 10.9 | 20.6 | 20.9 |
| Free alanine (mg/100 g) | ND [2] | 90 | 136 | 89 | 135 | 90 | 136 |
| Free alanine (mM) | - | 10 | 15 | 10 | 15 | 10 | 15 |

(continued)

| Content | | | | | | | |
|---|---|---|---|---|---|---|---|
| Energy (Kcal/ 100 ml) | 20.0 | 21.0 | 21.2 | 21.2 | 21.6 | 21.7 | 22.1 |
| *1: ND means "Not Detected", and means that a content of sodium and an amount of free alanine are respectively 1) a lower limit of quantitation of less than 1.0 mg/100 g and 2) a lower limit of quantitation of less than 1.0 mg/100 g. *2: A value of "mM" of free alanine is calculated from a value of "mg/100 g" under the premise that a specific gravity is 1. "-" means that calculation cannot be made. | | | | | | | |

Table 7: Orange fruit juice 12%

| Raw material added (amount added) | Example B1 | Example B2 | Example B3 | Example B4 | Example B5 | Example B6 | Example B7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Alanine (g/L) | 0 | 0.89 | 1.34 | 0.89 | 1.34 | 0.89 | 1.34 |
| Content | | | | | | | |
| Brix (Amount of soluble solid) | 5.85 | 6.02 | 6.07 | 6.11 | 6.17 | 6.24 | 6.26 |
| Sodium (mg/100 g) | ND [1] | ND [1] | ND [1] | 11.2 | 11 | 20.9 | 21.1 |
| Free alanine (mg/100 g) | 1.7 | 92 | 138 | 92 | 138 | 91 | 137 |
| Free alanine (mM) | 0.2 | 10 | 16 | 10 | 16 | 10 | 15 |
| Energy (Kcal/ 100 ml) | 23.4 | 24.5 | 24.9 | 24.8 | 25.3 | 25.4 | 25.5 |
| *1: ND means "Not Detected", and means that a content of sodium is a lower limit of quantitation of less than 1.0 mg/ 100 g. *2: A value of "mM" of free alanine is calculated from a value of "mg/100 g" under the premise that a specific gravity is 1. | | | | | | | |

Sweetness intensities of the orange diluted fruit juices and the blackcurrant diluted fruit juices used in examples were rated by the VAS scale thereby to calculate each sweetness intensity. In this instance, the blackcurrant diluted fruit juices were compared with sucrose solutions of Brix 0.5, 1.0, and 1.5 (respectively, 0.5, 1.0, and 1.5 w/v%) and the orange diluted fruit juices were compared with sucrose solutions of Brix 1.5, 2.0, and 2.5 (respectively, 1.5, 2.0, and 2.5 w/v%). Evaluation was performed by those (4 persons) who received sensory trainings as panelists. The results are shown in Table 8.

Table 8

| | Fruit juice percentage (%) | Brix (Amount of soluble solid) | Sweetness intensity by sensory evaluation |
|---|---|---|---|
| Orange diluted fruit juice | 12 | 1.74 | 1.63 |
| Blackcurrant diluted fruit juice | 6 | 0.66 | 0.76 |

A sweetness intensity of a low-intensity sweetener satisfies 1 (sucrose content (Brix)) + 3.5 (glucose content (Brix)) × 0.65 (coefficient of degree of sweetness of glucose to sucrose) = 3.275, and a sweetness intensity of RebD satisfies 0.0208 × 225 = 4.68. Thus, sweetness intensities of an orange diluted fruit juice and a blackcurrant diluted fruit juice, to which Na and an amino acid were not added, were respectively 9.585 and 8.715.

The taste quality improvement effect by alanine or alanine and sodium was verified by the sensory comparison of taste qualities of these beverage samples. The taste qualities as sensory evaluation items were "total sweetness", "reduced lingering sweetness", "body, thickness", "flavor intensity", "reduced unpleasant tastes (bitterness, astringency, and the like)" and "saltiness", and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

The "sensory evaluation score" is obtained by numerical conversion of the difference in taste quality from a control sample in a range from -3.0 to +3.0 under the premise that the degrees of taste qualities in Example A1 and Example B1 (control sample for each fruit juice beverage sample) are each "0" (standard). The criteria of "sensory evaluation score" with respect to each item are as follows.

(Sensory evaluation score)

- "+3.0": a taste quality of interest is sensed to be very strong as compared with that of a control sample.
- "+2.0": a taste quality of interest is sensed to be strong as compared with that of a control sample.
- "+1.0": a taste quality of interest is sensed to be slightly strong as compared with that of a control sample.
- "0": a taste quality of interest is the same as that of a control sample.
- "-1.0": a taste quality of interest is sensed to be slightly weak as compared with that of a control sample.
- "-2.0": a taste quality of interest is sensed to be weak as compared with that of a control sample.
- "-3.0": a taste quality of interest is sensed to be very weak as compared with that of a control sample.

In view of the above criteria, for example, when a taste quality was determined to be rated between "+1.0" and "+2.0", scoring was made by 0.5, for example, "+1.5". For example, a higher score of "total sweetness" means a stronger sweetness, a higher score of "reduced lingering sweetness" means a more suppressed lingering sweetness, a higher score of "body, thickness" means increased body and thickness, a higher score of "flavor intensity" means a stronger flavor, a higher score of "reduced unpleasant tastes (bitterness, astringency, and the like)" means a more suppressed unpleasant taste, and a lower score of "saltiness" means a more suppressed saltiness.

Results

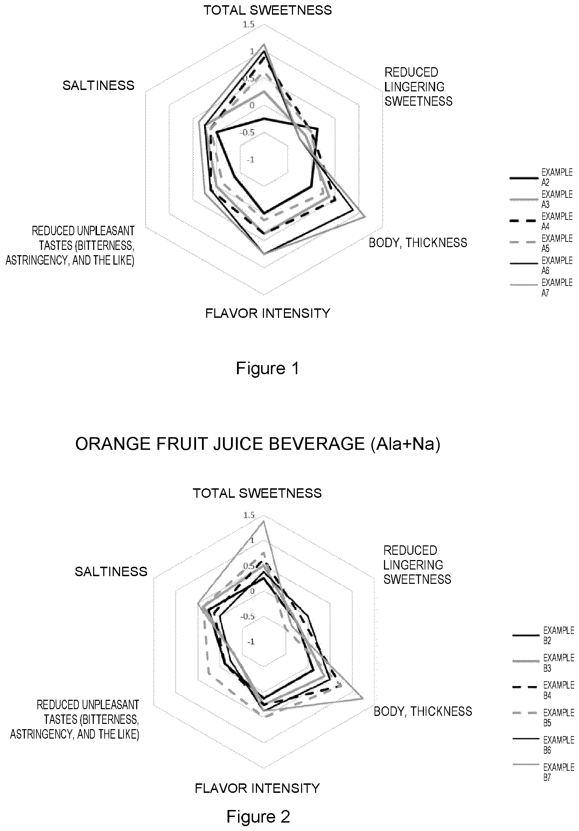

An average score of sensory evaluation on each taste quality is shown in Tables 9 and 10 and Figures 1 and 2.

| Table 9 | Example A2 | Example A3 | Example A4 | Example A5 | Example A6 | Example A7 |
|---|---|---|---|---|---|---|
| Total sweetness | -0.25 | 0.25 | 0.875 | 0.625 | 1 | 1.125 |
| Reduced lingering sweetness | 0.125 | -0.125 | 0 | 0 | -0.25 | -0.25 |
| Body, Thickness | 0 | 0.375 | 0.5 | 0.25 | 0.875 | 1.125 |
| Flavor intensity | 0 | 0.375 | 0.375 | 0.125 | 0.75 | 0.75 |
| Reduced unpleasant tastes (bitterness, astringency, and the like) | -0.375 | 0 | 0.125 | -0.125 | 0.125 | 0.25 |
| Saltiness | 0 | 0.25 | 0.125 | 0.125 | 0.25 | 0.375 |

| Table 10 | Example B2 | Example B3 | Example B4 | Example B5 | Example B6 | Example B7 |
|---|---|---|---|---|---|---|
| Total sweetness | 0.25 | 0.5 | 0.625 | 0.75 | 0.375 | 1.375 |
| Reduced lingering sweetness | -0.25 | -0.25 | -0.125 | -0.5 | 0 | -0.375 |
| Body, Thickness | 0.125 | 0.375 | 0.75 | 0.75 | 0.5 | 1.25 |
| Flavor intensity | 0.125 | 0.25 | 0.25 | 0.5 | 0.375 | 0.375 |
| Reduced unpleasant tastes (bitterness, astringency, and the like) | -0.125 | -0.375 | -0.125 | 0.25 | -0.25 | -0.375 |
| Saltiness | 0.25 | 0.375 | 0.125 | 0.375 | 0 | 0.5 |

[Example 2] Evaluation on taste quality improvement effect by different amino acid or different amino acid and sodium
Experiment method

Natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more), L-serine (purity 98.5% or more) and glycine (purity 98.5% or more) were dissolved in a blackcurrant diluted fruit juice (fruit juice percentage: 6%, sodium content: 0 (mg/100 ml), energy: 2.0 (kcal/100 ml)) or an orange diluted fruit juice (fruit juice percentage: 12%, sodium content: 0 (mg/100 ml), energy: 5.28 (kcal/100 ml)) in the ratios shown in Tables 11 and 12 below to prepare beverage samples, as in Example 1. An acidulant, vitamin C and a dye were also added to the blackcurrant diluted fruit juice. Further, Examples C1 and D1 were control samples to which neither amino acid, nor sodium was added. The above "0 mg/100 ml" means to be less than 1.0 mg/100 g as a lower limit of quantitation.
In each beverage in Tables 11 and 12, a sodium content was measured by an atomic absorption method with SpectrAA240FS (manufactured by Agilent Technologies Japan, Ltd.), contents of serine and glycine were measured in an analytical institution by use of an amino acid automatic analysis method under the above conditions, and an energy (kcal/100 ml) was calculated under the premise that an energy of each component derived from an acidulant, vitamin C, a dye, RebD and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

Table 11: Blackcurrant fruit juice 6%

| Raw material added (amount added) | Example C1 | Example C2 | Example C3 | Example C4 | Example C5 | Example C6 | Example C7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Serine (g/L) | 0 | 2.1 | 0 | 2.1 | 0 | 2.1 | 0 |
| Glycine (g/L) | 0 | 0 | 3 | 0 | 3 | 0 | 3 |
| Content | | | | | | | |
| Brix (Amount of soluble solid) | 5.00 | 5.25 | 5.37 | 5.35 | 5.47 | 5.48 | 5.60 |
| Sodium (mg/100 g) | ND [1] | ND [1] | ND [1] | 10.3 | 11 | 20.9 | 20.6 |
| Free serine (mg/100 g) | ND [2] | 208 | ND [2] | 210 | ND [2] | 207 | ND [2] |

(continued)

| Content | | | | | | | |
|---|---|---|---|---|---|---|---|
| Free serine (mM) | - | 20 | - | 20 | - | 20 | - |
| Free glycine (mg/100 g) | ND [2] | ND [2] | 298 | ND [2] | 301 | ND [2] | 300 |
| Free glycine (mM) | - | - | 40 | - | 40 | - | 40 |
| Energy (Kcal/ 100 ml) | 20.0 | 21.8 | 22.7 | 22.2 | 23.1 | 22.7 | 23.6 |

*1: ND means "Not Detected", and means that a content of sodium and an amount of free serine or free glycine are respectively 1) a lower limit of quantitation of less than 1.0 mg/100 g and 2) a lower limit of quantitation of less than 1.0 mg/100 g.
*2: A value of "mM" of free serine and free glycine is calculated from a value of "mg/100 g" under the premise that a specific gravity is 1.

Table 12: Orange fruit juice 12%

| Raw material added (amount added) | Example D1 | Example D2 | Example D3 | Example D4 | Example D5 | Example D6 | Example D7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Serine (g/L) | 0 | 2.1 | 0 | 2.1 | 0 | 2.1 | 0 |
| Glycine (g/L) | 0 | 0 | 3 | 0 | 3 | 0 | 3 |
| Content | | | | | | | |
| Brix (Amount of soluble solid) | 5.82 | 6.13 | 6.31 | 6.21 | 6.34 | 6.33 | 6.45 |
| Sodium (mg/100 g) | ND [1] | ND [1] | ND [1] | 10.7 | 10.7 | 20.8 | 20.6 |
| Free serine (mg/ 100 g) | 3 | 206 | 3 | 206 | 3 | 205 | 3 |
| Free serine (mM) | 0.3 | 20 | 0.3 | 20 | 0.3 | 20 | 0.3 |
| Free glycine (mg/100 g) | ND [2] | ND [2] | 293 | ND [2] | 290 | ND [2] | 290 |
| Free glycine (mM) | - | - | 39 | - | 39 | - | 39 |

(continued)

| Content | | | | | | | |
|---|---|---|---|---|---|---|---|
| Energy (Kcal/ 100 ml) | 23.3 | 25.3 | 26.4 | 25.6 | 26.6 | 26.1 | 27.0 |

*1: ND means "Not Detected", and means that a content of sodium and an amount of free serine or free glycine are respectively 1) a lower limit of quantitation of less than 1.0 mg/100 g and 2) a lower limit of quantitation of less than 1.0 mg/100 g.

*2: A value of "mM" of free serine and free glycine is calculated from a value of "mg/100 g" under the premise that a specific gravity is 1.

The taste quality improvement effect by serine or glycine, or serine or glycine and sodium was verified by the sensory comparison of taste qualities of these beverage samples. The taste qualities as sensory evaluation items were "total sweetness", "reduced lingering sweetness", "body, thickness", "flavor intensity", "reduced unpleasant tastes (bitterness, astringency, and the like)" and "saltiness" as in Example 1, and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

Results

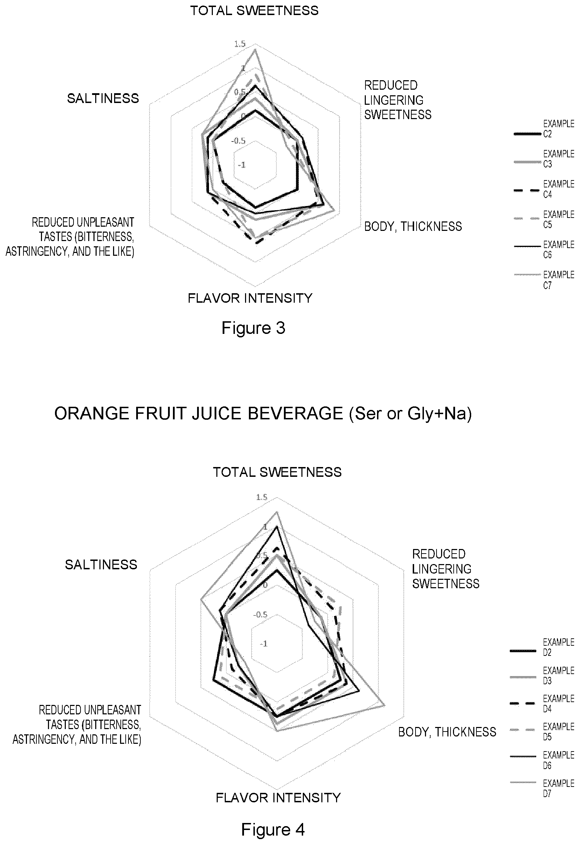

An average value of a sensory evaluation score of each taste quality is shown in Tables 13 and 14 and Figures 3 and 4.

| Table 13 | Example C2 | Example C3 | Example C4 | Example C5 | Example C6 | Example C7 |
|---|---|---|---|---|---|---|
| Total sweetness | 0.125 | 0.375 | 0.625 | 0.875 | 0.625 | 1.375 |
| Reduced lingering sweetness | 0 | 0 | 0.125 | -0.125 | 0.125 | -0.25 |
| Body, Thickness | 0 | 0.625 | 0.5 | 0.625 | 0.625 | 0.875 |
| Flavor intensity | -0.125 | 0.125 | 0.625 | 0.5 | 0 | 0.5 |
| Reduced unpleasant tastes (bitterness, astringency, and the like) | -0.25 | 0.125 | 0.125 | -0.25 | 0.125 | 0 |
| Saltiness | 0 | 0.25 | 0.125 | 0 | 0.125 | 0.25 |

| Table 14 | Example D2 | Example D3 | Example D4 | Example D5 | Example D6 | Example D7 |
|---|---|---|---|---|---|---|
| Total sweetness | 0.25 | 0.5 | 0.625 | 0.5 | 1 | 1.25 |
| Reduced lingering sweetness | -0.125 | -0.125 | 0.125 | 0.25 | -0.375 | -0.25 |
| Body, Thickness | 0.25 | 0.375 | 0.375 | 0.125 | 0.625 | 1.125 |
| Flavor intensity | 0.25 | 0.375 | 0.25 | 0.125 | 0.25 | 0.5 |
| Reduced unpleasant tastes (bitterness, astringency, and the like) | 0.25 | -0.25 | -0.125 | 0.125 | -0.25 | -0.375 |
| Saltiness | 0 | 0 | 0.125 | 0 | 0.125 | 0.5 |

[Example 3] Evaluation on taste quality improvement effects at different fruit juice percentages

Experiment method

Natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more) and DL-alanine (purity 98% or more) were dissolved in a blackcurrant diluted fruit juice or an orange diluted fruit juice in the ratios shown in Tables 15 and 16 below to prepare beverage samples, as in Example 1. In the present example, a blackcurrant diluted fruit juice (fruit juice percentage: 30%, sodium content: 2.5 (mg/100 ml), energy: 13.5 (kcal/100 ml), and fruit juice percentage: 50%, sodium content: 3.9 (mg/100 ml), energy: 22.6 (kcal/100 ml)) was used, or an orange diluted fruit juice (fruit juice percentage: 30%, sodium content: 0 (mg/100 ml), energy: 16.0 (kcal/100 ml), and fruit juice percentage: 50%, sodium content: 1.11 (mg/100 ml), energy: 26.1 (kcal/100 ml)) was used. An acidulant, vitamin C and a dye were also added to the blackcurrant diluted fruit juice. Further, Examples E1 and E4, and F1 and F4 were control samples to which neither alanine, nor sodium was added. A sodium content contained in a beverage serving as a base was measured by an atomic absorption method with SpectrAA240FS (manufactured by Agilent Technologies Japan, Ltd.). The above "0 mg/100 ml" means to be less than 1.0 mg/100 g as a lower limit of quantitation.

Contents of amino acids (eighteen amino acids, arginine, lysine, histidine, phenylalanine, tyrosine, leucine, isoleucine, valine, alanine, glycine, proline, glutamic acid, serine, threonine, aspartic acid, cystine, methionine and tryptophan) contained in blackcurrant diluted fruit juices (fruit juice percentages: 30% and 50%) and orange diluted fruit juices (fruit juice percentages: 30% and 50%) each used in a beverage base were calculated based on measurement values determined by measuring amino acids contained in a concentrated fruit juice before dilution, in an analytical institution by use of an amino acid automatic analysis method (in the case of tryptophan, high-performance liquid chromatography) by a known method. Contents of the above eighteen amino acids contained in the blackcurrant diluted fruit juice (fruit juice percentage: 30%) were each less than 1.0 mg/100 g. Contents of the above eighteen amino acids contained in the blackcurrant diluted fruit juice (fruit juice percentage: 50%) were each less than 1.0 mg/100 g except that a content of alanine was about 1.3 mg/100 g, a content of proline was about 1.2 mg/100 g, and a content of glutamic acid was about 1.3 mg/100 g. Contents of the above eighteen amino acids contained in the orange diluted fruit juice (fruit juice percentage: 30%) were each less than 1.0 mg/100 g except that a content of arginine was about 22.7 mg/100 g, a content of lysine was about 1.0 mg/100 g, a content of phenylalanine was about 1.0 mg/100 g, a content of alanine was about 4.4 mg/100 g, a content of proline was about 39.8 mg/100 g, a content of glutamic acid was about 6.2 mg/100 g, a content of serine was about 7.2 mg/100 g, and a content of aspartic acid was about 15.2 mg/100 g. Contents of the above eighteen amino acids contained in the orange diluted fruit juice (fruit juice percentage: 50%) were each less than 1.0 mg/100 g except that a content of arginine was about 37.5 mg/100 g, a content of lysine was about 1.7 mg/100 g, a content of phenylalanine was about 1.6 mg/100 g, a content of valine was about 1.2 mg/100 g, a content of alanine was about 7.3 mg/100 g, a content of glycine was about 1.1 mg/100 g, a content of proline was about 65.6 mg/100 g, a content of glutamic acid was about 10.2 mg/100 g, a content of serine was about 11.9 mg/100 g, a content of threonine was about 1.2 mg/100 g, and a content of aspartic acid was about 25.1 mg/100 g.

In each beverage in Tables 15 and 16, a sodium content was measured by an atomic absorption method with SpectrAA240FS (manufactured by Agilent Technologies Japan, Ltd.), a content of alanine was measured in an analytical institution by use of an amino acid automatic analysis method under the above conditions, and an energy (kcal/100 ml) was calculated under the premise that an energy of each component derived from an acidulant, vitamin C, a dye, RebD and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

Table 15: Blackcurrant fruit juice

| Raw material added (amount added) | Example E1 | Example E2 | Example E3 | Example E4 | Example E5 | Example E6 |
|---|---|---|---|---|---|---|
| Fruit juice percentage (%) | 30 | 30 | 30 | 50 | 50 | 50 |
| Sucrose (g/L) | 10 | 10 | 10 | 10 | 10 | 10 |
| Glucose (g/L) | 35 | 35 | 35 | 35 | 35 | 35 |
| RebD (g/L) | 0.208 | 0.208 | 0.208 | 0.208 | 0.208 | 0.208 |
| Sodium gluconate (g/L) | 0 | 0 | 1.89 | 0 | 0 | 1.89 |

(continued)

| Raw material added (amount added) | Example E1 | Example E2 | Example E3 | Example E4 | Example E5 | Example E6 |
|---|---|---|---|---|---|---|
| Alanine (g/L) | 0 | 1.34 | 1.34 | 0 | 1.34 | 1.34 |
| Content | | | | | | |
| Brix (Amount of soluble solid) | 7.88 | 8.03 | 8.21 | 10.16 | 10.37 | 10.56 |
| Sodium (mg/100 g) | 2.5 | 2.5 | 22.8 | 3.9 | 4.0 | 24.2 |
| Free alanine (mg/100 g) | ND [2] | 132 | 133 | 1 | 137 | 130 |
| Free alanine (mM) | - | 15 | 15 | 0.1 | 15 | 15 |
| Energy (Kcal/100 ml) | 31.5 | 32.6 | 33.3 | 40.6 | 42.0 | 42.7 |
| *1: ND means "Not Detected", and means that a content of sodium and an amount of free alanine are respectively 1) a lower limit of quantitation of less than 1.0 mg/100 g and 2) a lower limit of quantitation of less than 1.0 mg/100 g. *2: A value of "mM" of free alanine is calculated from a value of "mg/100 g" under the premise that a specific gravity is 1. "-" means that calculation cannot be made. | | | | | | |

Table 16: Orange fruit juice

| Raw material added (amount added) | Example F1 | Example F2 | Example F3 | Example F4 | Example F5 | Example F6 |
|---|---|---|---|---|---|---|
| Fruit juice percentage (%) | 30 | 30 | 30 | 50 | 50 | 50 |
| Sucrose (g/L) | 10 | 10 | 10 | 10 | 10 | 10 |
| Glucose (g/L) | 35 | 35 | 35 | 35 | 35 | 35 |
| RebD (g/L) | 0.208 | 0.208 | 0.208 | 0.208 | 0.208 | 0.208 |
| Sodium gluconate (g/L) | 0 | 0 | 1.89 | 0 | 0 | 1.89 |
| Alanine (g/L) | 0 | 1.34 | 1.34 | 0 | 1.34 | 1.34 |
| Content | | | | | | |
| Brix (Amount of soluble solid) | 8.51 | 8.6 | 8.88 | 11.03 | 11.21 | 11.41 |
| Sodium (mg/100 g) | ND [1] | ND [1] | 21.3 | 1.11 | 1.11 | 21.8 |
| Free alanine (mg/100 g) | 4 | 135 | 134 | 6 | 133 | 138 |
| Free alanine (mM) | 0.5 | 15 | 15 | 0.7 | 15 | 16 |
| Energy (Kcal/100 ml) | 34.0 | 34.9 | 36.0 | 44.1 | 45.3 | 46.1 |
| *1: ND means "Not Detected", and means that a content of sodium is a lower limit of quantitation of less than 1.0 mg/100 g. *2: A value of "mM" of free alanine is calculated from a value of "mg/100 g" under the premise that a specific gravity is 1. | | | | | | |

The taste quality improvement effects in different fruit juice percentages were verified by the sensory comparison of taste qualities of these beverage samples. The taste qualities as sensory evaluation items were "total sweetness", "reduced lingering sweetness", "body, thickness", "flavor intensity", "reduced unpleasant tastes (bitterness, astringency, and the like)" and "saltiness" as in Example 1, and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

Results

An average value of a sensory evaluation score of each taste quality is shown in Tables 17 and 18.

| Table 17 | Example E2 | Example E3 | Example E5 | Example E6 |
|---|---|---|---|---|
| Total sweetness | 0.25 | 0.75 | 0.375 | 0.625 |
| Reduced lingering sweetness | -0.125 | -0.125 | 0 | 0 |
| Body, Thickness | 0.5 | 0.75 | 0.375 | 0.5 |
| Flavor intensity | 0.375 | 0.5 | 0.125 | 0.375 |
| Reduced unpleasant tastes (bitterness, astringency, and the like) | 0.125 | 0.125 | 0.125 | 0.125 |
| Saltiness | 0 | 0 | 0 | 0 |

| Table 18 | Example F2 | Example F3 | Example F5 | Example F6 |
|---|---|---|---|---|
| Total sweetness | 0.5 | 0.875 | 0.625 | 1.125 |
| Reduced lingering sweetness | -0.25 | -0.25 | 0 | -0.25 |
| Body, Thickness | 0.875 | 0.875 | 0.625 | 1 |
| Flavor intensity | 0.25 | 0.25 | 0.25 | 0.375 |
| Reduced unpleasant tastes (bitterness, astringency, and the like) | 0.25 | 0.25 | -0.25 | 0.125 |
| Saltiness | 0 | 0 | 0 | 0 |

[Example 4] Evaluation on taste quality improvement effects by various sweeteners

Experiment method

Natural sugar {sucrose (manufactured by Pacific Sugar Mfg. Co., Ltd.), glucose (Showa Sangyo Co., Ltd.)}, rebaudioside D (RebD) (purity 95% or more), rebaudioside A (RebA) (purity 99% or more), rebaudioside M (RebM) (purity 98%), mogroside V (Mog V) (purity 97.7%), a luo han guo extract (water-extract of luo han guo fruit, containing 40 wt% of mogroside V), sodium gluconate (purity 98% or more), and DL-alanine (purity 98% or more) were dissolved in the same orange diluted fruit juice (fruit juice percentage: 12%, sodium content: 0 (mg/100 ml), energy: 5.28 (kcal/100 ml)) as in Example 1, in the ratios shown in Tables 19 and 21 below to prepare beverage samples, as in Example 1. Examples G1, H1, I1, J1, K1 and L1 were control samples to which neither amino acid, nor sodium was added.
A sodium content in each beverage in Tables 19 to 21 was calculated from an amount of sodium gluconate added. Further, a free alanine content was calculated from an amount of alanine added. Herein, a free alanine content in a fruit juice beverage as a base was approximately a measurement lower limit value (1.0 mg/100 g) and thus an amount of free alanine contained in the fruit juice beverage as a base in the present example was calculated to be zero in the present example. An energy (kcal/100 ml) was calculated under the premise that an energy of each component derived from a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

Table 19: Samples containing RebD in different amounts

| Raw material added (amount added) | Example G1 | Example G2 | Example G3 | Example H1 | Example H2 | Example H3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebD (g/L) | 0.1 | 0.1 | 0.1 | 0.3 | 0.3 | 0.3 |

(continued)

| Raw material added (amount added) | Example G1 | Example G2 | Example G3 | Example H1 | Example H2 | Example H3 |
|---|---|---|---|---|---|---|
| Sodium gluconate (g/L) | 0 | 0 | 1.897 | 0 | 0 | 1.897 |
| Alanine (g/L) | 0 | 1.34 | 1.34 | 0 | 1.34 | 1.34 |
| Content | | | | | | |
| Brix (Amount of soluble solid) | 5.84 | 6.07 | 6.27 | 6.03 | 6.13 | 6.30 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 23.4 | 24.8 | 25.6 | 24.1 | 25.0 | 25.7 |
| *1: A value of "mM" of free alanine is calculated from a value of "mg/100 g" under the premise that a specific gravity is 1. | | | | | | |

Table 20: Sample containing RebA or RebM

| Raw material added (amount added) | Example I1 | Example I2 | Example I3 | Example J1 | Example J2 | Example J3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebA (g/L) | 0.208 | 0.208 | 0.208 | 0 | 0 | 0 |
| RebM (g/L) | 0 | 0 | 0 | 0.208 | 0.208 | 0.208 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |
| Content | | | | | | |
| Brix (Amount of soluble solid) | 5.95 | 6.07 | 6.28 | 5.93 | 6.10 | 6.27 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 23.8 | 24.8 | 25.6 | 23.7 | 24.9 | 25.6 |
| *1: A value of "mM" of free alanine is calculated from a value of "mg/100 g" under the premise that a specific gravity is 1. | | | | | | |

Table 21: Sample containing MogV or luo han guo extract

| Raw material added (amount added) | Example K1 | Example K2 | Example K3 | Example L1 | Example L2 | Example L3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| MogV (g/L) | 0.208 | 0.208 | 0.208 | 0 | 0 | 0 |

(continued)

| Raw material added (amount added) | Example K1 | Example K2 | Example K3 | Example L1 | Example L2 | Example L3 |
|---|---|---|---|---|---|---|
| Luo han guo extract (g/L) | 0 | 0 | 0 | 0.208 | 0.208 | 0.208 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |
| Content | | | | | | |
| Brix (Amount of soluble solid) | 5.97 | 6.10 | 6.29 | 5.95 | 6.09 | 6.27 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 23.9 | 24.9 | 25.7 | 23.8 | 24.9 | 25.6 |

*1: A value of "mM" of free alanine is calculated from a value of "mg/100 g" under the premise that a specific gravity is 1.

The taste quality improvement effect by alanine or alanine and sodium was verified by the sensory comparison of taste qualities of these beverage samples. The taste qualities as sensory evaluation items were "total sweetness", "reduced lingering sweetness", "body, thickness", "flavor intensity", "reduced unpleasant tastes (bitterness, astringency, and the like)" and "saltiness" as in Example 1, and were verified by those (4 persons) who received sensory trainings as panelists.

First, the "sensory evaluation score" with respect to each taste quality of each beverage sample was calculated based on the common taste quality determination criteria possessed by panelists due to routine trainings.

Results

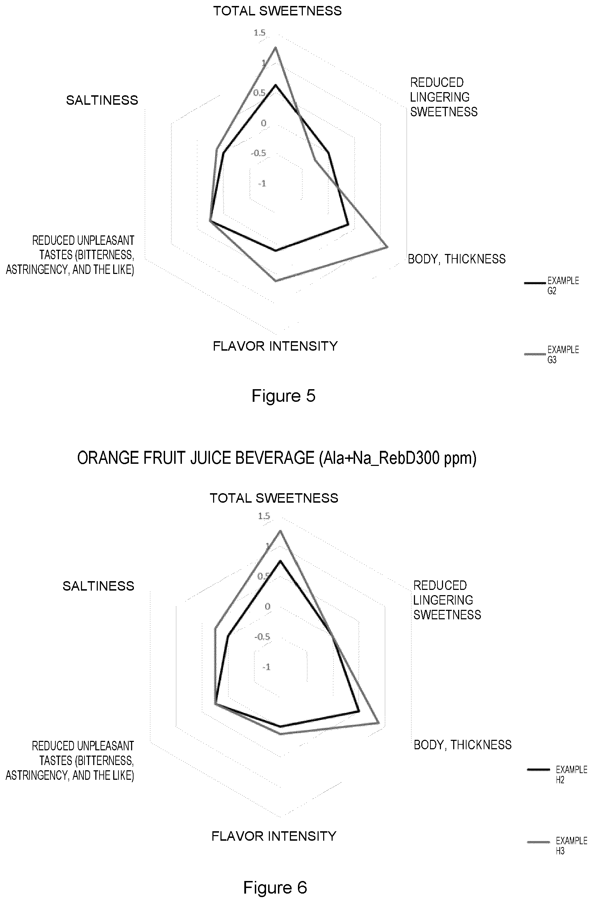

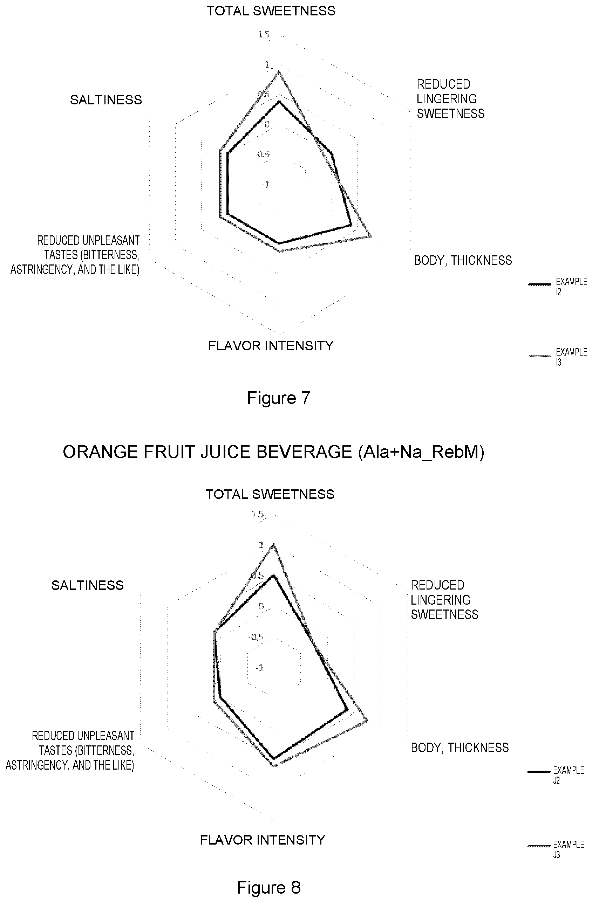

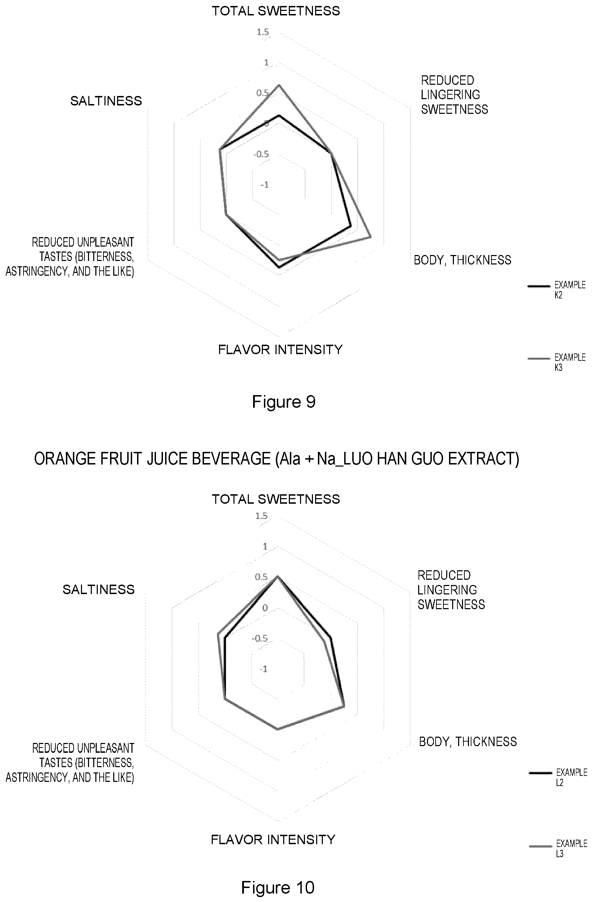

An average value of a sensory evaluation score of each taste quality is shown in Tables 22 to 24 and Figures 5 to 10.

Table 22: Evaluation of samples containing RebD in different amounts

| | Example G2 | Example G3 | Example H2 | Example H3 |
|---|---|---|---|---|
| Total sweetness | 0.625 | 1.25 | 0.75 | 1.25 |
| Reduced lingering sweetness | 0 | -0.25 | 0 | 0 |
| Body, Thickness | 0.375 | 1.125 | 0.5 | 0.875 |
| Flavor intensity | 0.125 | 0.625 | 0 | 0.125 |
| Reduced unpleasant tastes (bitterness, astringency, and the like) | 0.25 | 0.25 | 0.25 | 0.25 |
| Saltiness | 0 | 0.125 | 0 | 0.25 |

Table 23: Evaluation of samples containing RebA or RebM

| | Example I2 | Example I3 | Example J3 | Example J4 |
|---|---|---|---|---|
| Total sweetness | 0.375 | 0.875 | 0.5 | 1 |
| Reduced lingering sweetness | 0 | -0.125 | -0.25 | -0.25 |
| Body, Thickness | 0.375 | 0.75 | 0.375 | 0.75 |
| Flavor intensity | 0 | 0.125 | 0.5 | 0.625 |

(continued)

|  | Example I2 | Example I3 | Example J3 | Example J4 |
|---|---|---|---|---|
| Reduced unpleasant tastes (bitterness, astringency, and the like) | 0 | 0.125 | 0 | 0.125 |
| Saltiness | 0 | 0.125 | 0.125 | 0.125 |

Table 24: Evaluation of samples containing MogV or luo han guo extract

|  | Example K2 | Example K3 | Example L2 | Example L3 |
|---|---|---|---|---|
| Total sweetness | 0.125 | 0.625 | 0.5 | 0.5 |
| Reduced lingering sweetness | 0 | 0 | 0 | -0.125 |
| Body, Thickness | 0.375 | 0.75 | 0.25 | 0.25 |
| Flavor intensity | 0.375 | 0.25 | 0 | 0 |
| Reduced unpleasant tastes (bitterness, astringency, and the like) | 0 | 0 | 0 | 0 |
| Saltiness | 0.125 | 0.125 | 0 | 0.125 |

[Example 5] Effect in beverage containing high-intensity sweetener alone

Experiment method

Rebaudioside D (RebD) (purity 95% or more), sodium gluconate (purity 98% or more), and DL-alanine (purity 98% or more) were dissolved in the same orange diluted fruit juice (fruit juice percentage: 12%, sodium content: 0 (mg/100 ml), energy: 5.28 (kcal/100 ml)) as in Example 1, in the ratios shown in Table 25 below to prepare beverage samples, as in Example 1. Example M1 was a control sample to which neither amino acid, nor sodium was added.
A sodium content in each beverage in Table 25 was calculated from an amount of sodium gluconate added. Further, a free alanine content was calculated from an amount of alanine added. Herein, a free alanine content in a fruit juice beverage as a base was approximately a measurement lower limit value (1.0 mg/100 g) and thus an amount of free alanine contained in the fruit juice beverage as a base in the present example was calculated to be zero in the present example. An energy (kcal/100 ml) was calculated under the premise that an energy of each component derived from a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

Table 25: Sample containing high-intensity sweetener alone

| Raw material added (amount added) | Example M1 | Example M2 | Example M3 |
|---|---|---|---|
| RebD (g/L) | 0.208 | 0.208 | 0.208 |
| Sodium gluconate (g/L) | 0 | 0 | 1.897 |
| Alanine (g/L) | 0 | 1.34 | 1.34 |
| Content | | | |
| Brix (Amount of soluble solid) | 1.77 | 1.92 | 2.06 |
| Sodium (mg/100 g) | 0 | 0 | 20 |
| Free alanine (mg/100 g) | 0 | 134 | 134 |
| Free alanine (mM) | 0 | 15 | 15 |
| Energy (Kcal/100 ml) | 7.1 | 8.2 | 8.7 |
| *1: A value of "mM" of free alanine is calculated from a value of "mg/100 g" under the premise that a specific gravity is 1. | | | |

The taste quality improvement effect by alanine or alanine and sodium was verified by the sensory comparison of taste qualities of these beverage samples. The taste qualities as sensory evaluation items were "total sweetness", "reduced lingering sweetness", "body, thickness", "flavor intensity", "reduced unpleasant tastes (bitterness, astringency, and the like)" and "saltiness" as in Example 1, and were verified by those (4 persons) who received sensory trainings as panelists.

First, the "sensory evaluation score" with respect to each taste quality of each beverage sample was calculated based on the common taste quality determination criteria possessed by panelists due to routine trainings.

Results

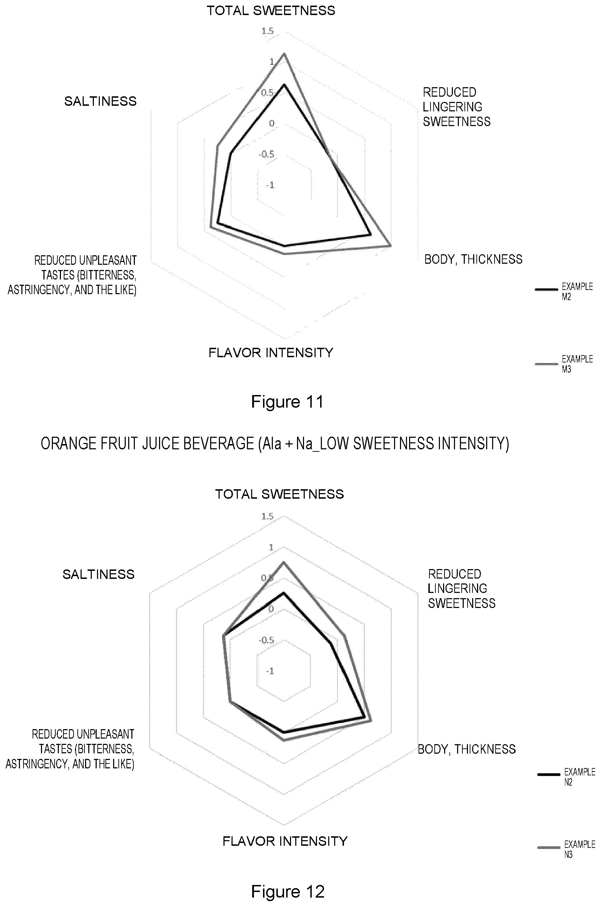

An average value of a sensory evaluation score of each taste quality is shown in Table 26 and Figure 11.

Table 26: Evaluation of samples containing high-intensity sweetener alone

|  | Example M2 | Example M3 |
|---|---|---|
| Total sweetness | 0.625 | 1.125 |
| Reduced lingering sweetness | -0.125 | -0.125 |
| Body, Thickness | 0.625 | 1 |
| Flavor intensity | 0 | 0.125 |
| Reduced unpleasant tastes (bitterness, astringency, and the like) | 0.25 | 0.375 |
| Saltiness | 0 | 0.25 |

[Example 6] Effect in beverages having different sweetness intensities

Experiment method

Natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more), and DL-alanine (purity 98% or more) were dissolved in the same orange diluted fruit juice (fruit juice percentage: 12%, sodium content: 0 (mg/100 ml), energy: 5.28 (kcal/100 ml)) as in Example 1, in the ratios shown in Table 27 below to prepare beverage samples, as in Example 1. Examples N1 and O1 were control samples to which neither amino acid, nor sodium was added.

A sodium content in each beverage in Table 27 was calculated from an amount of sodium gluconate added. Further, a free alanine content was calculated from an amount of alanine added. Herein, a free alanine content in a fruit juice beverage as a base was approximately a measurement lower limit value (1.0 mg/100 g) and thus an amount of free alanine contained in the fruit juice beverage as a base in the present example was calculated to be zero in the present example. An energy (kcal/100 ml) was calculated under the premise that an energy of each component derived from a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value. A total (X1 + X4) of sweetness intensities of a high-intensity sweetener and a low-intensity sweetener contained in each sample of Examples N1 to 3 (low sweetness intensity) was 5.608, and a total (X1 + X4) of sweetness intensities of a high-intensity sweetener and a low-intensity sweetener contained in each sample of Examples O1 to 3 (high sweetness intensity) was 17.540.

Table 27: Samples having different sweetness intensities

| Raw material added (amount added) | Example N1 | Example N2 | Example N3 | Example O1 | Example O2 | Example O3 |
|---|---|---|---|---|---|---|
| Sucrose (g/L) | 5 | 5 | 5 | 20 | 20 | 20 |
| Glucose (g/L) | 17.5 | 17.5 | 17.5 | 70 | 70 | 70 |
| RebD (g/L) | 0.104 | 0.104 | 0.104 | 0.416 | 0.416 | 0.416 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

(continued)

| Content | | | | | | |
|---|---|---|---|---|---|---|
| Brix (Amount of soluble solid) | 3.82 | 4.02 | 4.16 | 10.11 | 10.26 | 10.45 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 15.3 | 16.6 | 17.1 | 40.4 | 41.5 | 42.3 |
| *1: A value of "mM" of free alanine is calculated from a value of "mg/100 g" under the premise that a specific gravity is 1. | | | | | | |

The taste quality improvement effect by alanine or alanine and sodium was verified by the sensory comparison of taste qualities of these beverage samples. The taste qualities as sensory evaluation items were "total sweetness", "reduced lingering sweetness", "body, thickness", "flavor intensity", "reduced unpleasant tastes (bitterness, astringency, and the like)" and "saltiness" as in Example 1, and were verified by those (4 persons) who received sensory trainings as panelists.

First, the "sensory evaluation score" with respect to each taste quality of each beverage sample was calculated based on the common taste quality determination criteria possessed by panelists due to routine trainings.

Results

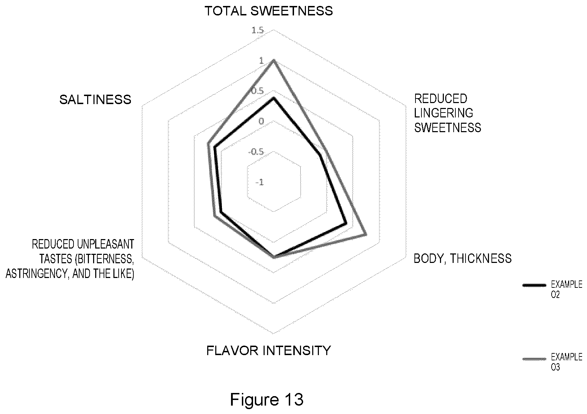

An average value of a sensory evaluation score of each taste quality is shown in Table 28 and Figures 12 and 13.

Table 28: Evaluation of samples having different sweetness intensities

| | Example N2 | Example N3 | Example O2 | Example O3 |
|---|---|---|---|---|
| Total sweetness | 0.25 | 0.75 | 0.375 | 1 |
| Reduced lingering sweetness | -0.125 | 0.125 | -0.125 | 0 |
| Body, Thickness | 0.5 | 0.625 | 0.375 | 0.75 |
| Flavor intensity | 0 | 0.125 | 0.25 | 0.25 |
| Reduced unpleasant tastes (bitterness, astringency, and the like) | 0 | 0 | 0 | 0.125 |
| Saltiness | 0.125 | 0.125 | 0.125 | 0.25 |

**Claims**

1.   A fruit juice beverage comprising:

(a) a high-intensity sweetener in an amount corresponding to a sweetness intensity X1, and
(b) an amino acid or a derivative or a salt thereof in an amount less than a taste recognition threshold,
wherein the fruit juice beverage has a sweetness of a sweetness intensity X3 exhibited by the components (a) and (b) and 0.1 < X1 < X3 is satisfied.

2.   A fruit juice beverage comprising:

(a) a high-intensity sweetener in an amount corresponding to a sweetness intensity X1,
(b) an amino acid or a derivative or a salt thereof in an amount less than a taste recognition threshold, and
(c) sodium in an amount of less than 50 mg/100 ml,
wherein the fruit juice beverage has a sweetness of a sweetness intensity X2 exhibited by the components (a)

EP 4 209 131 A1

to (c) and 0.1 < X1 < X2 is satisfied.

3. The fruit juice beverage according to claim 1 or 2, further comprising a low-intensity sweetener.

4. The fruit juice beverage according to any one of claims 1 to 3, wherein the amino acid comprises an amino acid selected from a basic amino acid, a neutral amino acid having an alkyl group, an OH group or an amide group on a side chain, and a combination thereof.

5. The fruit juice beverage according to any one of claims 1 to 4, wherein the amino acid is one or more selected from an amino acid having a molecular weight of 70 to 260.

6. The fruit juice beverage according to any one of claims 1 to 5, wherein the amino acid comprises an amino acid selected from glycine, alanine, valine, isoleucine, leucine, serine, threonine, glutamine, asparagine, arginine, lysine, histidine, and a combination thereof.

7. The fruit juice beverage according to any one of claims 1 to 6, wherein the fruit juice beverage has an energy of 50 Kcal/100 ml or less.

8. The fruit juice beverage according to any one of claims 3 to 7, wherein a sweetness intensity of the low-intensity sweetener is 0.1 to 5.9.

9. The fruit juice beverage according to any one of claims 1 to 8, wherein a fruit juice percentage of the fruit juice beverage is 1 to 100%, 4 to 95%, 5 to 80%, 5 to 50% or 5 to 30%.

10. The fruit juice beverage according to any one of claims 1 to 9, wherein a fruit juice contained in the fruit juice beverage is from one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof.

11. The fruit juice beverage according to any one of claims 1 to 10, wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

12. The fruit juice beverage according to any one of claims 1 to 11, wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.

13. The fruit juice beverage according to any one of claims 1 to 12, wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

14. The fruit juice beverage according to any one of claims 3 to 13, wherein the fruit juice beverage comprises one or more amino acids selected from alanine, serine and glycine, and has an energy of 50 Kcal/100 ml or less, and a total sweetness intensity of the high-intensity sweetener and the low-intensity sweetener is 6 or more.

15. The fruit juice beverage according to any one of claims 1 to 14, wherein the fruit juice beverage is packed in a container.

16. A method for producing the fruit juice beverage according to any one of claims 1 and 3 to 15, comprising, to a raw material,

(a) adding a high-intensity sweetener in an amount corresponding to a sweetness intensity X1, and
(b) adding an amino acid or a derivative or a salt thereof in an amount less than a taste recognition threshold.

17. A method for producing the fruit juice beverage according to any one of claims 2 to 16, comprising, to a raw material,

(a) adding a high-intensity sweetener in an amount corresponding to a sweetness intensity X1,
(b) adding an amino acid or a derivative or a salt thereof in an amount less than a taste recognition threshold, and
(c) adding sodium so that a sodium content in the beverage is less than 50 mg/100 ml.

18. A concentrate for providing the fruit juice beverage according to any one of claims 1 and 3 to 15, comprising:

(a) a high-intensity sweetener in an amount corresponding to a sweetness intensity X1a, and
(b) an amino acid or a derivative or a salt thereof in an amount less than 10 fold of a taste recognition threshold.

19. A concentrate for providing the fruit juice beverage according to any one of claims 2 to 18, comprising:

(a) a high-intensity sweetener in an amount corresponding to a sweetness intensity X1a,
(b) an amino acid or a derivative or a salt thereof in an amount less than 10 fold of a taste recognition threshold, and
(c) sodium in an amount of less than 500 mg/100 ml.

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE
A2

EXAMPLE
A3

EXAMPLE
A4

EXAMPLE
A5

EXAMPLE
A6

EXAMPLE
A7

Figure 1

## ORANGE FRUIT JUICE BEVERAGE (Ala+Na)

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE
B2

EXAMPLE
B3

EXAMPLE
B4

EXAMPLE
B5

EXAMPLE
B6

EXAMPLE
B7

Figure 2

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE C2
EXAMPLE C3
EXAMPLE C4
EXAMPLE C5
EXAMPLE C6
EXAMPLE C7

Figure 3

ORANGE FRUIT JUICE BEVERAGE (Ser or Gly+Na)

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE D2
EXAMPLE D3
EXAMPLE D4
EXAMPLE D5
EXAMPLE D6
EXAMPLE D7

Figure 4

TOTAL SWEETNESS

Figure 5

ORANGE FRUIT JUICE BEVERAGE (Ala+Na_RebD300 ppm)

TOTAL SWEETNESS

Figure 6

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE
I2

EXAMPLE
I3

Figure 7

## ORANGE FRUIT JUICE BEVERAGE (Ala+Na_RebM)

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE
J2

EXAMPLE
J3

Figure 8

Figure 9

ORANGE FRUIT JUICE BEVERAGE (Ala + Na_LUO HAN GUO EXTRACT)

Figure 10

TOTAL SWEETNESS

SALTINESS

REDUCED
LINGERING
SWEETNESS

BODY, THICKNESS

REDUCED UNPLEASANT
TASTES (BITTERNESS,
ASTRINGENCY, AND THE LIKE)

FLAVOR INTENSITY

EXAMPLE
M2

EXAMPLE
M3

Figure 11

ORANGE FRUIT JUICE BEVERAGE (Ala + Na_LOW SWEETNESS INTENSITY)

TOTAL SWEETNESS

SALTINESS

REDUCED
LINGERING
SWEETNESS

BODY, THICKNESS

REDUCED UNPLEASANT
TASTES (BITTERNESS,
ASTRINGENCY, AND THE LIKE)

FLAVOR INTENSITY

EXAMPLE
N2

EXAMPLE
N3

Figure 12

TOTAL SWEETNESS

SALTINESS

REDUCED
LINGERING
SWEETNESS

REDUCED UNPLEASANT
TASTES (BITTERNESS,
ASTRINGENCY, AND THE LIKE)

BODY, THICKNESS

FLAVOR INTENSITY

EXAMPLE
02

EXAMPLE
03

Figure 13

## INTERNATIONAL SEARCH REPORT

| International application No. |
|---|
| **PCT/JP2021/032208** |

### A. CLASSIFICATION OF SUBJECT MATTER

*A23L 2/60*(2006.01)i; *A23L 2/00*(2006.01)i; *A23L 2/02*(2006.01)i; *A23L 2/385*(2006.01)i; *A23L 2/42*(2006.01)i;
*A23L 2/52*(2006.01)i; *A23L 2/54*(2006.01)i; *A23L 27/00*(2016.01)i; *A23L 27/21*(2016.01)i; *A23L 27/30*(2016.01)i
FI:   A23L2/60; A23L2/00 C; A23L2/00 G; A23L2/02 B; A23L2/02 C; A23L2/02 D; A23L2/54 101; A23L2/42 101;
A23L2/52 101; A23L27/00 E; A23L27/00 101Z; A23L27/00 101A; A23L2/385; A23L2/52; A23L27/30 C; A23L27/30
Z; A23L27/30 A; A23L27/21; A23L2/02 A

According to International Patent Classification (IPC) or to both national classification and IPC

### B. FIELDS SEARCHED

Minimum documentation searched (classification system followed by classification symbols)

A23L2/60; A23L2/00; A23L2/02; A23L2/385; A23L2/42; A23L2/52; A23L2/54; A23L27/00; A23L27/21; A23L27/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/225817 A1 (SUNTORY HOLDINGS LIMITED) 13 December 2018 (2018-12-13) claims, paragraph [0110] | 1-3, 5, 7-13, 15-19 |
| Y | claims, paragraph [0110] | 1-19 |
| X | WO 2020/116626 A1 (SUNTORY HOLDINGS LIMITED) 11 June 2020 (2020-06-11) claims, examples | 1-3, 5, 7-13, 15-19 |
| Y | claims, examples | 1-19 |
| X | WO 2020/116633 A1 (SUNTORY HOLDINGS LIMITED) 11 June 2020 (2020-06-11) claims, examples | 1-3, 5, 7-13, 15-19 |
| Y | claims, examples | 1-19 |
| Y | JP 53-148573 A (SAN-EI CHEMICAL INDUSTRIES, LTD.) 25 December 1978 (1978-12-25) claims, p. 1, right column | 1-19 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2021/032208** |

| C. | DOCUMENTS CONSIDERED TO BE RELEVANT | |
|---|---|---|
| Category* | Citation of document, with indication, where appropriate, of the relevant passages | Relevant to claim No. |
| Y | JP 2013-515492 A (THE COCA-COLA COMPANY) 09 May 2013 (2013-05-09) claims | 1-19 |
| Y | JP 2009-517030 A (THE COCA-COLA COMPANY) 30 April 2009 (2009-04-30) claims, paragraphs [0098], [0103] | 1-19 |
| P, X | WO 2021/132468 A1 (SUNTORY HOLDINGS LIMITED) 01 July 2021 (2021-07-01) claims, examples | 1-19 |

Form PCT/ISA/210 (second sheet) (January 2015)

**INTERNATIONAL SEARCH REPORT**
Information on patent family members

International application No.

**PCT/JP2021/032208**

| Patent document cited in search report | | | Publication date (day/month/year) | Patent family member(s) | | | Publication date (day/month/year) |
|---|---|---|---|---|---|---|---|
| WO | 2018/225817 | A1 | 13 December 2018 | US | 2020/0205451 | A1 | |
| | | | | claims, paragraph [0344] | | | |
| | | | | EP | 3636080 | A1 | |
| | | | | CN | 110730616 | A | |
| WO | 2020/116626 | A1 | 11 June 2020 | (Family: none) | | | |
| WO | 2020/116633 | A1 | 11 June 2020 | (Family: none) | | | |
| JP | 53-148573 | A | 25 December 1978 | (Family: none) | | | |
| JP | 2013-515492 | A | 09 May 2013 | US | 2011/0160311 | A1 | |
| | | | | claims | | | |
| | | | | WO | 2011/090709 | A1 | |
| | | | | EP | 2519118 | A1 | |
| | | | | CN | 102762111 | A | |
| JP | 2009-517030 | A | 30 April 2009 | US | 2007/0116832 | A1 | |
| | | | | claims, paragraphs [0764], [0769] | | | |
| | | | | WO | 2007/061858 | A1 | |
| | | | | EP | 1959744 | A1 | |
| WO | 2021/132468 | A1 | 01 July 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018225817 A
- JP 20201478482020185335 B
- JP 20201478332020185333 B
- JP 2020147833 A
- JP 2020147848 A
- JP 2020185333 A
- JP 2020185335 A

### Non-patent literature cited in the description

- **ZHAO G. Q. ; ZHANG Y. ; HOON M. A. ; CHAN-DRASHEKAR J. ; ERLENBACH I. ; RYBA N. J. P. ; ZUKER1 C. S.** *Cell,* 2003, vol. 115, 255-266
- **LI X ; STASZEWSKI L ; XU H ; DURICK K ; ZOLLER M ; ADLER E.** *Proc Natl Acad Sci U S A,* 2002, vol. 99 (7), 4692-4696
- **FERNSTROM J. D. ; MUNGER S. D. ; SCLAFANI A. ; DE ARAUJO I. E. ; ROBERTS A. ; MOLINARY S.** *J. Nutr.,* 2012, vol. 142, 1134S-1141S
- **AYUMI UCHIDA ; NAO TAKAGI ; RIEKO HORIKIRI ; MIHO MATSUE ; YUMIKO UCHIYAMA ; MASASHI OMORI.** *Research Bulletin of Otsuma Women's University for Home Economics,* 2013, vol. 3 (49
- **TOYOTA.** Construction of a Screening Test for Gustatory Function in Four Basic Tastes. *The journal of Japanese Society of Stomatognathic Function,* 2014, vol. 20, 115-129
- *Eur J Clin Nutr,* 2004, vol. 58, 629-636
- **SUSAN S. SCHIFFMAN et al.** Comparison of Taste Qualities and Thresholds of D- and L-Amino Acids. *Physiology & Behavior,* 1981, vol. 27, 51-59
- **YUKI YAMAUCHI et al.** WHOLE MOUTH GUSTATORY TEST (PART1) - BASIC CONSIDERATIONS AND PRINCIPAL COMPONENT ANALYSIS. *Journal of The Oto-Rhino-Laryngological Society of Japan,* 1995, vol. 98 (1), 119-129
- Comparisons of the taste sensitivity between three generations. **REIKO OHMORI.** The bulletin of the Faculty of Education. Utsunomiya University, 2013, vol. 63, 201-210
- **TOYOTA.** Construction of a Screening Test for Gustatory Function in Four Basic Tastes. *The Journal of Japanese Society of Stomatognathic Function,* 2014, vol. 20, 115-129
- Beverage term dictionary. Beverage Japan, Inc, 11
- **YUKI YAMAUCHI et al.** WHOLE MOUTH GUSTATORY TEST (PART1)-BASIC CONSIDERATIONS AND PRINCIPAL COMPONENT ANALYSIS. *Journal of The Oto-Rhino-Laryngological Society of Japan,* 1995, vol. 98 (1), 119-129